# EUROPEAN PATENT APPLICATION

(11) **EP 4 654 585 A1**
(43) Date of publication of application: **26.11.2025**
(21) Application number: 24744886.3
(22) Date of filing: 17.01.2024
(51) Int. Cl.: H04N 19/593, H04N 19/157, H04N 19/176, H04N 19/132, H04N 19/91, H04N 19/70, H04N 19/60, H04N 19/124, H04N 19/29, H04N 19/105

(54) **VIDEO SIGNAL PROCESSING METHOD AND DEVICE THEREFOR**

(30) Priority: 17.01.2023 KR 20230006752; 31.03.2023 KR 20230043128; 13.04.2023 KR 20230049056
(71) Applicant: Wilus Institute of Standards and Technology Inc., Gyeonggi-do 13595 (KR)
(72) Inventor: KIM, Kyungyong, Seongnam-si Gyeonggi-do 13595 (KR); KIM, Dongcheol, Seongnam-si Gyeonggi-do 13595 (KR); SON, Juhyung, Seongnam-si Gyeonggi-do 13595 (KR); KWAK, Jinsam, Seongnam-si Gyeonggi-do 13595 (KR)
(74) Representative: Schmitt-Nilson Schraud Waibel Wohlfrom Patentanwälte Partnerschaft mbB
(86) International application number: PCT/KR2024/000867
(87) International publication number: WO 2024/155106

(57) **Abstract**

This video signal decoding device comprises a processor, wherein the processor forms a block vector candidate list for a current block, and restores the current block on the basis of at least one block vector candidate included in the block vector candidate list, and the block vector candidate included in the block vector candidate list can be a block vector candidate of which the vertical or horizontal direction component is 0.

## Description

### Technical Field

The present disclosure relates to a video signal processing method and device and, more specifically, to a video signal processing method and device by which a video signal is encoded or decoded.

### Background Art

Compression coding refers to a series of signal processing techniques for transmitting digitized information through a communication line or storing information in a form suitable for a storage medium. An object of compression encoding includes objects such as voice, video, and text, and in particular, a technique for performing compression encoding on an image is referred to as video compression. Compression coding for a video signal is performed by removing excess information in consideration of spatial correlation, temporal correlation, and stochastic correlation. However, with the recent development of various media and data transmission media, a more efficient video signal processing method and apparatus are required.

### Disclosure of Invention

### Technical Problem

The purpose of the present disclosure is to provide a video signal processing method and a device therefor, so as to increase the coding efficiency of a video signal.

### Solution to Problem

The disclosure provides a video signal processing method and a device therefor.

In the disclosure, a video signal decoding device may include a processor, the processor may configure a block vector candidate list for a current block, and restore the current block based on at least one block vector candidate included in the block vector candidate list, and the block vector candidate included in the block vector candidate list may be a block vector candidate of which the vertical or horizontal direction component is 0.

The processor may configure the vertical direction component of the block vector candidate based on the result of comparing the maximum value of the coding unit tree size for the current block with a first value when the horizontal direction component of the block vector candidate included in the block vector list is 0.

In addition, in the disclosure, a video signal decoding device may include a processor, and the processor may obtain a bitstream decoded by a decoding method.

The decoding method may include configuring a block vector candidate list for a current block and restoring the current block based on at least one block vector candidate included in the block vector candidate list, and the block vector candidate included in the block vector candidate list may be a block vector candidate of which the vertical or horizontal direction component is 0.

The decoding method may further include configuring the vertical direction component of the block vector candidate based on the result of comparing the maximum value of the coding unit tree size for the current block with a first value when the horizontal direction component of the block vector candidate included in the block vector list is 0.

In addition, in the disclosure, in a computer-readable non-transitory storage medium storing a bitstream, the bitstream may be decoded by a decoding method, the decoding method may include configuring a block vector candidate list for a current block and restoring the current block based on at least one block vector candidate included in the block vector candidate list, and the block vector candidate included in the block vector candidate list may be a block vector candidate of which the vertical or horizontal direction component is 0.

The decoding method may further include configuring the vertical direction component of the block vector candidate based on the result of comparing the maximum value of the coding unit tree size for the current block with a first value when the horizontal direction component of the block vector candidate included in the block vector list is 0.

In addition, in the disclosure, the vertical component of the block vector candidate may be configured to a second value when the maximum value of the coding unit tree size for the current block is equal to the first value, the vertical component of the block vector candidate may be configured to a third value when the maximum value of the coding unit tree size for the current block is not equal to the first value, and the second value and the third value may be different values.

In addition, in the disclosure, the second value may be -(256 * (L-1) + (PosY & 255)), the PosY may be the vertical direction component value of the block vector candidate, and the L may be 2.

In addition, in the disclosure, the third value may be -(128 * (K-1) + (PosY & 127)), the PosY may be the vertical direction component value of the block vector candidate, and the K may be 3.

In addition, in the disclosure, the encoding mode applied to the current block may be reconstruction-reordered IBC (RRIBC) mode.

In addition, in the disclosure, the number of block vector candidates included in the block vector candidate list may be 2.

In addition, in the disclosure, the first value may be the size of a pre-specified maximum coding unit tree.

In addition, in the disclosure, the first value may be 256.

### Advantageous Effects of Invention

The present disclosure provides a method for efficiently processing a video signal.

The effects obtainable from the present specification are not limited to the effects mentioned above, and other effects not mentioned may be clearly understood by to those skilled in the art, to which the present disclosure belongs, from the description below.

### Brief Description of Drawings

FIG. 1 is a schematic block diagram of a video signal encoding apparatus according to an embodiment of the present invention.
FIG. 2 is a schematic block diagram of a video signal decoding apparatus according to an embodiment of the present invention.
FIG. 3 shows an embodiment in which a coding tree unit is divided into coding units in a picture.
FIG. 4 shows an embodiment of a method for signaling a division of a quad tree and a multi-type tree.
FIGS. 5 and 6 illustrate an intra-prediction method in more detail according to an embodiment of the present disclosure.
FIG. 7 illustrates the position of neighboring blocks used to construct a motion candidate list in inter prediction.
FIG. 8 illustrates a process of performing OBMC according to an embodiment of the present disclosure.
FIG. 9 illustrates a method of performing OMBC in the unit of a CU according to an embodiment of the present disclosure.
FIG. 10 illustrates a method of performing OBMC in the unit of a sub-block according to an embodiment of the present disclosure.
FIG. 11 illustrates a table in which a weight is defined according to an embodiment of the present disclosure.
FIGS. 12 to 14 illustrate a method of selectively using a neighboring block when performing OBMC, according to an embodiment of the present disclosure.
FIG. 15 illustrates a method of determining a strength of deblocking filtering when performing OBMC, according to an embodiment of the present disclosure.
FIG. 16 illustrates a method of configuring a template for performing OBMC, according to an embodiment of the present disclosure.
FIG. 17 illustrates a method of generating a prediction block according to each OBMC mode according to an embodiment of the present disclosure.
FIGS. 18 to 20 illustrate a process of performing OBMC according to an embodiment of the present disclosure.
FIG. 21 illustrates a GPM mode according to an embodiment of the present disclosure.
FIG. 22 illustrates a method of dividing a GPM mode according to an embodiment of the present disclosure.
FIG. 23 illustrates a method of signaling information indicating whether OBMC in the unit of a sub-block is activated, according to an embodiment of the present disclosure.
FIG. 24 illustrates a method of signaling information indicating the maximum block size for activation of OBMC according to an embodiment of the present disclosure.
FIG. 25 illustrates a method of signaling information for activating blending in a GPM mode according to an embodiment of the present disclosure.
FIG. 26 is a diagram illustrating a method for a video signal processing device to determine whether to perform OBMC according to an embodiment of the disclosure.
FIG. 27 illustrates a method for correcting motion information according to an embodiment of the present disclosure
FIG. 28 illustrates a method for correcting motion information of a current block by recursively performing a motion correction method according to an embodiment of the present disclosure.
FIG. 29 illustrates the order in which a TM method according to an embodiment of the present disclosure is performed.
FIG. 30 illustrates a method for configuring a search range for a TM method, based on initial motion information according to an embodiment of the present disclosure.
FIG. 31 illustrates the location of a motion candidate which is searched for within a search range according to an embodiment of the present disclosure.
FIG. 32 illustrates a process of searching for the location of a motion candidate according to an embodiment of the present disclosure.
FIG. 33 illustrates a process of evaluating a search candidate according to an embodiment of the present disclosure.
FIGS. 34 and 35 illustrate a method for correcting motion information by using DMVR according to an embodiment of the present disclosure.
FIG. 36 illustrates a process of performing multi-DMVR according to an embodiment of the present disclosure.
FIG. 37 illustrates a search method for obtaining a cost value related to corrected motion information of a coding block according to an embodiment of the present disclosure.
FIG. 38 illustrates a method for performing motion information correction based on BDOF according to an embodiment of the present disclosure.
FIG. 39 illustrates a method for signaling a motion information difference value according to an embodiment of the present disclosure.
FIG. 40 illustrates a method for performing TM based on a motion information candidate according to an embodiment of the present disclosure.
FIG. 41 illustrates a method for performing TM based on a motion information candidate according to an embodiment of the present disclosure.
FIG. 42 illustrates a method for generating an additional motion information candidate according to an embodiment of the present disclosure.
FIGS. 43 and 44 illustrate a method for generating additional motion information candidates according to an embodiment of the present disclosure.
FIGS. 45 to 48 illustrate TM that is recursively performed according to an embodiment of the present disclosure.
FIGS. 49 to 51 illustrate a chroma block and a luma block corresponding to the chroma block according to an embodiment of the present disclosure.
FIG. 52 illustrates a method for predicting a current block by using RRIBC in the horizontal direction.
FIG. 53 illustrates a method for predicting a current block by using RRIBC in the vertical direction.
FIG. 54 illustrates a case in which a current block and a reference block are positioned on different vertical lines according to an embodiment of the present disclosure.
FIG. 55 illustrates a method for constructing a cluster-based block vector candidate list according to an embodiment of the present specification.
FIG. 56 illustrates a reference area memory of a video signal processing device according to an embodiment of the present disclosure.
FIGS. 57 to 59 are diagrams illustrating block vector candidates according to an embodiment of the disclosure.
FIGS. 60 and 61 are diagrams illustrating a method for deriving a block vector according to an embodiment of the disclosure.
FIG. 62 is a diagram illustrating a method for deriving a motion candidate from a neighboring block of a current block when the current block is encoded in a merge mode according to an embodiment of the disclosure.
FIG. 63 is a flowchart illustrating a method for configuring a block vector candidate list for a current block according to an embodiment of the disclosure.

### Mode for Carrying out the Invention

Terms used in this specification may be currently widely used general terms in consideration of functions in the present invention but may vary according to the intents of those skilled in the art, customs, or the advent of new technology. Additionally, in certain cases, there may be terms the applicant selects arbitrarily and in this case, their meanings are described in a corresponding description part of the present invention. Accordingly, terms used in this specification should be interpreted based on the substantial meanings of the terms and contents over the whole specification.

In this specification, 'A and/or B' may be interpreted as meaning 'including at least one of A or B.'

In this specification, some terms may be interpreted as follows. Coding may be interpreted as encoding or decoding in some cases. In the present specification, an apparatus for generating a video signal bitstream by performing encoding (coding) of a video signal is referred to as an encoding apparatus or an encoder, and an apparatus that performs decoding (decoding) of a video signal bitstream to reconstruct a video signal is referred to as a decoding apparatus or decoder. In addition, in this specification, the video signal processing apparatus is used as a term of a concept including both an encoder and a decoder. Information is a term including all values, parameters, coefficients, elements, etc. In some cases, the meaning is interpreted differently, so the present invention is not limited thereto. 'Unit' is used as a meaning to refer to a basic unit of image processing or a specific position of a picture, and refers to an image region including both a luma component and a chroma component. Furthermore, a "block" refers to a region of an image that includes a particular component of a luma component and chroma components (i.e., Cb and Cr). However, depending on the embodiment, the terms "unit", "block", "partition", "signal", and "region" may be used interchangeably. Also, in the present specification, the term "current block" refers to a block that is currently scheduled to be encoded, and the term "reference block" refers to a block that has already been encoded or decoded and is used as a reference in a current block. In addition, the terms "luma", "luminance", "Y", and the like may be used interchangeably in this specification. Additionally, in the present specification, the terms "chroma", "chrominance", "Cb or Cr", and the like may be used interchangeably, and chroma components are classified into two components, Cb and Cr, and thus each chroma component may be distinguished and used. Additionally, in the present specification, the term "unit" may be used as a concept that includes a coding unit, a prediction unit, and a transform unit. A "picture" refers to a field or a frame, and depending on embodiments, the terms may be used interchangeably. Specifically, when a captured video is an interlaced video, a single frame may be separated into an odd (or cardinal or top) field and an even (or even-numbered or bottom) field, and each field may be configured in one picture unit and encoded or decoded. If the captured video is a progressive video, a single frame may be configured as a picture and encoded or decoded. In addition, in the present specification, the terms "error signal", "residual signal", "residue signal", "remaining signal", and "difference signal" may be used interchangeably. Also, in the present specification, the terms "intra-prediction mode", "intra-prediction directional mode", "intra-picture prediction mode", and "intra-picture prediction directional mode" may be used interchangeably. In addition, in the present specification, the terms "motion", "movement", and the like may be used interchangeably. Also, in the present specification, the terms "left", "left above", "above", "right above", "right", "right below", "below", and "left below" may be used interchangeably with "leftmost", "top left", "top", "top right", "right", "bottom right", "bottom", and "bottom left". Also, the terms "element" and "member" may be used interchangeably. Picture order count (POC) represents temporal position information of pictures (or frames), and may be the playback order in which displaying is performed on a screen, and each picture may have unique POC.

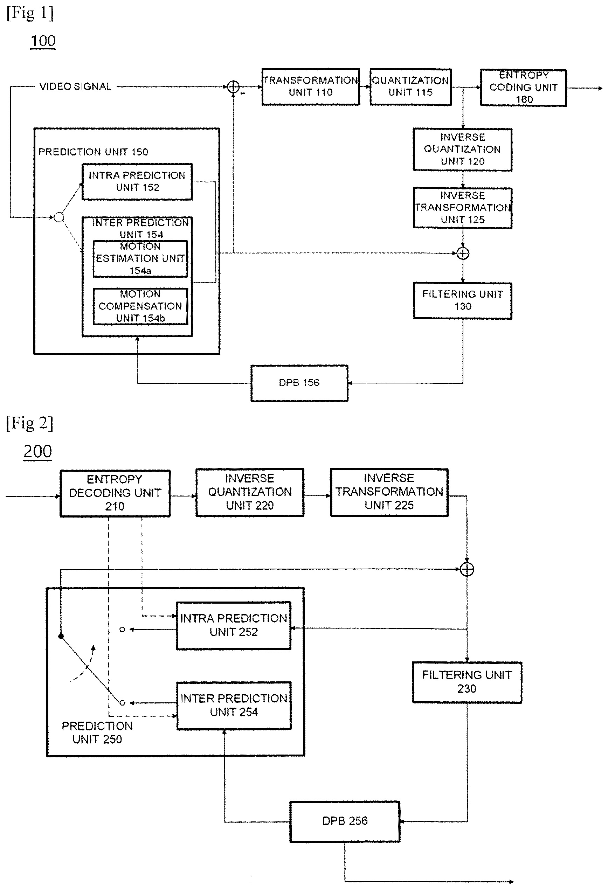

FIG. 1 is a schematic block diagram of a video signal encoding apparatus according to an embodiment of the present invention. Referring to FIG. 1, the encoding apparatus 100 of the present invention includes a transformation unit 110, a quantization unit 115, an inverse quantization unit 120, an inverse transformation unit 125, a filtering unit 130, a prediction unit 150, and an entropy coding unit 160.

The transformation unit 110 obtains a value of a transform coefficient by transforming a residual signal, which is a difference between the inputted video signal and the predicted signal generated by the prediction unit 150. For example, a Discrete Cosine Transform (DCT), a Discrete Sine Transform (DST), or a Wavelet Transform can be used. The DCT and DST perform transformation by splitting the input picture signal into blocks. In the transformation, coding efficiency may vary according to the distribution and characteristics of values in the transformation region. A transform kernel used for the transform of a residual block may has characteristics that allow a vertical transform and a horizontal transform to be separable. In this case, the transform of the residual block may be performed separately as a vertical transform and a horizontal transform. For example, an encoder may perform a vertical transform by applying a transform kernel in the vertical direction of a residual block. In addition, the encoder may perform a horizontal transform by applying the transform kernel in the horizontal direction of the residual block. In the present disclosure, the transform kernel may be used to refer to a set of parameters used for the transform of a residual signal, such as a transform matrix, a transform array, a transform function, or transform. For example, a transform kernel may be any one of multiple available kernels. Also, transform kernels based on different transform types may be used for the vertical transform and the horizontal transform, respectively.

The transform coefficients are distributed with higher coefficients toward the top left of a block and coefficients closer to "0" toward the bottom right of the block. As the size of a current block increases, there are likely to be many coefficients of "0" in the bottom-right region of the block. To reduce the transform complexity of a large-sized block, only a random top-left region may be kept and the remaining region may be reset to "0".

In addition, error signals may be present in only some regions of a coding block. In this case, the transform process may be performed on only some random regions. In an embodiment, in a block having a size of 2Nx2N, an error signal may be present only in the first 2NxN block, and the transform process may be performed on the first 2NxN block. However, the second 2NxN block may not be transformed and may not be encoded or decoded. Here, N may be any positive integer.

The encoder may perform an additional transform before transform coefficients are quantized. The above-described transform method may be referred to as a primary transform, and the additional transform may be referred to as a secondary transform. The secondary transform may be selective for each residual block. According to an embodiment, the encoder may improve coding efficiency by performing a secondary transform for regions where it is difficult to focus energy in a low-frequency region by using a primary transform alone. For example, a secondary transform may be additionally performed for blocks where residual values appear large in directions other than the horizontal or vertical direction of a residual block. Unlike a primary transform, a secondary transform may not be performed separately as a vertical transform and a horizontal transform. Such a secondary transform may be referred to as a low frequency non-separable transform (LFNST).

The quantization unit 115 quantizes the value of the transform coefficient value outputted from the transformation unit 110.

In order to improve coding efficiency, instead of coding the picture signal as it is, a method of predicting a picture using a region already coded through the prediction unit 150 and obtaining a reconstructed picture by adding a residual value between the original picture and the predicted picture to the predicted picture is used. In order to prevent mismatches in the encoder and decoder, information that can be used in the decoder should be used when performing prediction in the encoder. For this, the encoder performs a process of reconstructing the encoded current block again. The inverse quantization unit 120 inverse-quantizes the value of the transform coefficient, and the inverse transformation unit 125 reconstructs the residual value using the inverse quantized transform coefficient value. Meanwhile, the filtering unit 130 performs filtering operations to improve the quality of the reconstructed picture and to improve the coding efficiency. For example, a deblocking filter, a sample adaptive offset (SAO), and an adaptive loop filter may be included. The filtered picture is outputted or stored in a decoded picture buffer (DPB) 156 for use as a reference picture.

The deblocking filter is a filter for removing intra-block distortions generated at the boundaries between blocks in a reconstructed picture. Through the distribution of pixels included in several columns or rows based on random edges in a block, the encoder may determine whether to apply a deblocking filter to the edges. When applying a deblocking filter to the block, the encoder may apply a long filter, a strong filter, or a weak filter depending on the strength of deblocking filtering. Additionally, horizontal filtering and vertical filtering may be processed in parallel. The sample adaptive offset (SAO) may be used to correct offsets from an original video on a pixel-by-pixel basis with respect to a residual block to which a deblocking filter has been applied. To correct offset for a particular picture, the encoder may use a technique that divides pixels included in the picture into a predetermined number of regions, determines a region in which the offset correction is to be performed, and applies the offset to the region (Band Offset). Alternatively, the encoder may use a method for applying an offset in consideration of edge information of each pixel (Edge Offset). The adaptive loop filter (ALF) is a technique of dividing pixels included in a video into predetermined groups and then determining one filter to be applied to each group, thereby performing filtering differently for each group. Information about whether to apply ALF may be signaled on a per-coding unit basis, and the shape and filter coefficients of an ALF to be applied may vary for each block. In addition, an ALF filter having the same shape (a fixed shape) may be applied regardless of the characteristics of a target block to which the ALF filter is to be applied.

The prediction unit 150 includes an intra-prediction unit 152 and an inter-prediction unit 154. The intra-prediction unit 152 performs intra prediction within a current picture, and the inter-prediction unit 154 performs inter prediction to predict the current picture by using a reference picture stored in the decoded picture buffer 156. The intra-prediction unit 152 performs intra prediction from reconstructed regions in the current picture and transmits intra encoding information to the entropy coding unit 160. The intra encoding information may include at least one of an intra-prediction mode, a most probable mode (MPM) flag, an MPM index, and information regarding a reference sample. The inter-prediction unit 154 may again include a motion estimation unit 154a and a motion compensation unit 154b. The motion estimation unit 154a finds a part most similar to a current region with reference to a specific region of a reconstructed reference picture, and obtains a motion vector value which is the distance between the regions. Reference region-related motion information (reference direction indication information (L0 prediction, L1 prediction, or bidirectional prediction), a reference picture index, motion vector information, etc.) and the like, obtained by the motion estimation unit 154a, are transmitted to the entropy coding unit 160 so as to be included in a bitstream. The motion compensation unit 154B performs inter-motion compensation by using the motion information transmitted by the motion estimation unit 154a, to generate a prediction block for the current block. The inter-prediction unit 154 transmits the inter encoding information, which includes motion information related to the reference region, to the entropy coding unit 160.

According to an additional embodiment, the prediction unit 150 may include an intra block copy (IBC) prediction unit (not shown). The IBC prediction unit performs IBC prediction from reconstructed samples in a current picture and transmits IBC encoding information to the entropy coding unit 160. The IBC prediction unit references a specific region within a current picture to obtain a block vector value that indicates a reference region used to predict a current region. The IBC prediction unit may perform IBC prediction by using the obtained block vector value. The IBC prediction unit transmits the IBC encoding information to the entropy coding unit 160. The IBC encoding information may include at least one of reference region size information and block vector information (index information for predicting the block vector of a current block in a motion candidate list, and block vector difference information).

When the above picture prediction is performed, the transform unit 110 transforms a residual value between an original picture and a predictive picture to obtain a transform coefficient value. At this time, the transform may be performed on a specific block basis in the picture, and the size of the specific block may vary within a predetermined range. The quantization unit 115 quantizes the transform coefficient value generated by the transform unit 110 and transmits the quantized transform coefficient to the entropy coding unit 160.

The quantized transform coefficients in the form of a two-dimensional array may be rearranged into a one-dimensional array for entropy coding. In relation to methods for scanning a quantized transform coefficient, the size of a transform block and an intra-picture prediction mode may determine which scanning method is used. In an embodiment, diagonal, vertical, and horizontal scans may be applied. This scan information may be signaled on a block-by-block basis, and may be derived based on predetermined rules.

The entropy coding unit 160 generates a video signal bitstream by entropy coding information indicating a quantized transform coefficient, intra encoding information, and inter encoding information. The entropy coding unit 160 may use variable length coding (VLC) and arithmetic coding. The variable length coding (VLC) is a technique of transforming input symbols into consecutive codewords, wherein the length of the codewords is variable. For example, frequently occurring symbols are represented by shorter codewords, while less frequently occurring symbols are represented by longer codewords. As the variable length coding, context-based adaptive variable length coding (CAVLC) may be used. The arithmetic coding uses the probability distribution of each data symbol to transform consecutive data symbols into a single decimal number. The arithmetic coding allows acquisition of the optimal decimal bits needed to represent each symbol. As the arithmetic coding, context-based adaptive binary arithmetic coding (CABAC) may be used.

CABAC is a binary arithmetic coding technique using multiple context models generated based on probabilities obtained from experiments. First, when symbols are not in binary form, the encoder binarizes each symbol by using exp-Golomb, etc. The binarized value, 0 or 1, may be described as a bin. A CABAC initialization process is divided into context initialization and arithmetic coding initialization. The context initialization is the process of initializing the probability of occurrence of each symbol, and is determined by the type of symbol, a quantization parameter (QP), and slice type (I, P, or B). A context model having the initialization information may use a probability-based value obtained through an experiment. The context model provides information about the probability of occurrence of Least Probable Symbol (LPS) or Most Probable Symbol (MPS) for a symbol to be currently coded and about which of bin values 0 and 1 corresponds to the MPS (valMPS). One of multiple context models is selected via a context index (ctxIdx), and the context index may be derived from information in a current block to be encoded or from information about neighboring blocks. Initialization for binary arithmetic coding is performed based on a probability model selected from the context models. In the binary arithmetic coding, encoding is performed through the process in which division into probability intervals is made through the probability of occurrence of 0 and 1, and then a probability interval corresponding to a bin to be processed becomes the entire probability interval for the next bin to be processed. Information about a position within the last bin in which the last bin has been processed is output. However, the probability interval cannot be divided indefinitely, and thus, when the probability interval is reduced to a certain size, a renormalization process is performed to widen the probability interval and the corresponding position information is output. In addition, after each bin is processed, a probability update process may be performed, wherein information about a processed bin is used to set a new probability for the next to be processed.

The generated bitstream is encapsulated in network abstraction layer (NAL) unit as basic units. The NAL units are classified into video a coding layer (VCL) NAL unit, which includes video data, and a non-VCL NAL unit, which includes parameter information for decoding video data. There are various types of VCL or non-VCL NAL units. A NAL unit includes NAL header information and raw byte sequence payload (RBSP) which is data. The NAL header information includes summary information about the RBSP. The RBSP of a VCL NAL unit includes an integer number of encoded coding tree units. In order to decode a bitstream in a video decoder, it is necessary to separate the bitstream into NAL units and then decode each of the separate NAL units. Meanwhile, information required for decoding a video signal bitstream may be transmitted by being included in a video parameter set (VPS), a sequence parameter set (SPS), a picture parameter set (PPS), an adaptation parameter set (APS), and the like. The RBSP of the VCL NAL unit may include an integer number of coding tree units. The VPS is a parameter set composed of a common syntax by extracting duplicate parameters from an SPS parameter set signaled for each layer from a bitstream supporting image quality, resolution, frame rate scalability, or a bitstream supporting multi-view. The SPS is a parameter set that includes at least one of a profile including information on acceptable coding tools (or algorithms) and image formats, a level including information on the decoder's processing capability such as the resolution and frame rate of images that may be processed and the allowable memory size, tier including information on the maximum bit rate that may be processed, image resolution, bit depth, and information on whether functions are activated. The PPS is a parameter set including at least one of image resolution, tile partition information, information on whether to activate weight prediction, quantization parameters, and filtering-related information. The APS is a parameter set including one of ALF filter coefficient information, LMCS-related parameters, and quantization scale parameters depending on the APS type. The APS is divided into a prefix APS signaled before the VCL NAL unit and a suffix APS signaled after the VCL NAL unit, and it is efficient to apply the ALF filter coefficient derived from the previous picture to the next picture, so the ALF APS may be signaled as a suffix APS.

The block diagram of FIG. 1 illustrates the encoding device 100 according to an embodiment of the present disclosure, wherein the separately shown blocks logically distinguish the elements of the encoding device 100. Accordingly, the above-described elements of the encoding device 100 may be mounted as a single chip or multiple chips, depending on the design of the device. According to an embodiment, the above-described operation of each element of the encoding device 100 may be performed by a processor (not shown).

FIG. 2 is a schematic block diagram of a video signal decoding apparatus 200 according to an embodiment of the present invention. Referring to FIG. 2, the decoding apparatus 200 of the present invention includes an entropy decoding unit 210, an inverse quantization unit 220, an inverse transformation unit 225, a filtering unit 230, and a prediction unit 250.

The entropy decoding unit 210 entropy-decodes a video signal bitstream to extract transform coefficient information, intra encoding information, inter encoding information, and the like for each region. For example, the entropy decoding unit 210 may obtain a binarization code for transform coefficient information of a specific region from the video signal bitstream. The entropy decoding unit 210 obtains a quantized transform coefficient by inverse-binarizing a binary code. The inverse quantization unit 220 inverse-quantizes the quantized transform coefficient, and the inverse transformation unit 225 restores a residual value by using the inverse-quantized transform coefficient. The video signal processing device 200 restores an original pixel value by summing the residual value obtained by the inverse transformation unit 225 with a prediction value obtained by the prediction unit 250.

Meanwhile, the filtering unit 230 performs filtering on a picture to improve image quality. This may include a deblocking filter for reducing block distortion and/or an adaptive loop filter for removing distortion of the entire picture. The filtered picture is outputted or stored in the DPB 256 for use as a reference picture for the next picture.

The prediction unit 250 includes an intra prediction unit 252 and an inter prediction unit 254. The prediction unit 250 generates a prediction picture by using the encoding type decoded through the entropy decoding unit 210 described above, transform coefficients for each region, and intra/inter encoding information. In order to reconstruct a current block in which decoding is performed, a decoded region of the current picture or other pictures including the current block may be used. In a reconstruction, only a current picture, that is, a picture (or, tile/slice) that performs intra prediction or intra BC prediction, is called an intra picture or an I picture (or, tile/slice), and a picture (or, tile/slice) that can perform all of intra prediction, inter prediction, and intra BC prediction is called an inter picture (or, tile/slice). In order to predict sample values of each block among inter pictures (or, tiles/slices), a picture (or, tile/slice) using up to one motion vector and a reference picture index is called a predictive picture or P picture (or, tile/slice), and a picture (or tile/slice) using up to two motion vectors and a reference picture index is called a bi-predictive picture or a B picture (or tile / slice). In other words, the P picture (or, tile/slice) uses up to one motion information set to predict each block, and the B picture (or, tile/slice) uses up to two motion information sets to predict each block. Here, the motion information set includes one or more motion vectors and one reference picture index.

The intra prediction unit 252 generates a prediction block using the intra encoding information and reconstructed samples in the current picture. As described above, the intra encoding information may include at least one of an intra prediction mode, a Most Probable Mode (MPM) flag, and an MPM index. The intra prediction unit 252 predicts the sample values of the current block by using the reconstructed samples located on the left and/or upper side of the current block as reference samples. In this disclosure, reconstructed samples, reference samples, and samples of the current block may represent pixels. Also, sample values may represent pixel values.

According to an embodiment, the reference samples may be samples included in a neighboring block of the current block. For example, the reference samples may be samples adjacent to a left boundary of the current block and/or samples may be samples adjacent to an upper boundary. Also, the reference samples may be samples located on a line within a predetermined distance from the left boundary of the current block and/or samples located on a line within a predetermined distance from the upper boundary of the current block among the samples of neighboring blocks of the current block. In this case, the neighboring block of the current block may include the left (L) block, the upper (A) block, the below left (BL) block, the above right (AR) block, or the above left (AL) block.

The inter prediction unit 254 generates a prediction block using reference pictures and inter encoding information stored in the DPB 256. The inter coding information may include motion information set (reference picture index, motion vector information, etc.) of the current block for the reference block. Inter prediction may include L0 prediction, L1 prediction, and bi-prediction. L0 prediction means prediction using one reference picture included in the L0 picture list, and L1 prediction means prediction using one reference picture included in the L1 picture list. For this, one set of motion information (e.g., motion vector and reference picture index) may be required. In the bi-prediction method, up to two reference regions may be used, and the two reference regions may exist in the same reference picture or may exist in different pictures. That is, in the bi-prediction method, up to two sets of motion information (e.g., a motion vector and a reference picture index) may be used and two motion vectors may correspond to the same reference picture index or different reference picture indexes. In this case, the reference pictures are pictures located temporally before or after the current picture, and may be pictures for which reconstruction has already been completed. According to an embodiment, two reference regions used in the bi-prediction scheme may be regions selected from picture list L0 and picture list L1, respectively. In addition, a prediction method that, based on picture order count (POC) indicating the display order of the current picture, uses only a reference picture with a POC smaller than the current picture's POC and/or uses only a reference picture with a POC larger than the current picture's POC, may be referred to as unidirectional prediction. In addition, a prediction method that, based on the picture order count (POC) indicating the display order of the current picture, uses both a reference picture with a POC smaller than the current picture's POC and a reference picture with a POC larger than the current picture's POC may be referred to as bidirectional prediction. A prediction method that uses only one reference picture in unidirectional prediction may be referred to as uni-prediction, and a prediction method that uses two reference pictures in unidirectional prediction may be referred to as bi-prediction.

The inter prediction unit 254 may obtain a reference block of the current block using a motion vector and a reference picture index. The reference block is in a reference picture corresponding to a reference picture index. Also, a sample value of a block specified by a motion vector or an interpolated value thereof can be used as a predictor of the current block. For motion prediction with sub-pel unit pixel accuracy, for example, an 8-tap interpolation filter for a luma signal and a 4-tap interpolation filter for a chroma signal can be used. However, the interpolation filter for motion prediction in sub-pel units is not limited thereto. In this way, the inter prediction unit 254 performs motion compensation to predict the texture of the current unit from motion pictures reconstructed previously. In this case, the inter prediction unit may use a motion information set.

According to an additional embodiment, the prediction unit 250 may include an IBC prediction unit (not shown). The IBC prediction unit may reconstruct the current region by referring to a specific region including reconstructed samples in the current picture. The IBC prediction unit obtains IBC encoding information for the current region from the entropy decoding unit 210. The IBC prediction unit obtains a block vector value of the current region indicating the specific region in the current picture. The IBC prediction unit may perform IBC prediction by using the obtained block vector value. The IBC encoding information may include block vector information.

The reconstructed video picture is generated by adding the predict value outputted from the intra prediction unit 252 or the inter prediction unit 254 and the residual value outputted from the inverse transformation unit 225. That is, the video signal decoding apparatus 200 reconstructs the current block using the prediction block generated by the prediction unit 250 and the residual obtained from the inverse transformation unit 225.

Meanwhile, the block diagram of FIG. 2 shows a decoding apparatus 200 according to an embodiment of the present invention, and separately displayed blocks logically distinguish and show the elements of the decoding apparatus 200. Accordingly, the elements of the above-described decoding apparatus 200 may be mounted as one chip or as a plurality of chips depending on the design of the device. According to an embodiment, the operation of each element of the above-described decoding apparatus 200 may be performed by a processor (not shown).

The technology proposed in the present specification may be applied to a method and a device for both an encoder and a decoder, and the wording signaling and parsing may be for convenience of description. In general, signaling may be described as encoding each type of syntax from the perspective of the encoder, and parsing may be described as interpreting each type of syntax from the perspective of the decoder. In other words, each type of syntax may be included in a bitstream and signaled by the encoder, and the decoder may parse the syntax and use the syntax in a reconstruction process. In this case, the sequence of bits for each type of syntax arranged according to a prescribed hierarchical configuration may be called a bitstream.

One picture may be partitioned into sub-pictures, slices, tiles, etc. and encoded. A sub-picture may include one or more slices or tiles. When one picture is partitioned into multiple slices or tiles and encoded, all the slices or tiles within the picture must be decoded before the picture can be output a screen. On the other hand, when one picture is encoded into multiple subpictures, only a random subpicture may be decoded and output on the screen. A slice may include multiple tiles or subpictures. Alternatively, a tile may include multiple subpictures or slices. Subpictures, slices, and tiles may be encoded or decoded independently of each other, and thus are advantageous for parallel processing and processing speed improvement. However, there is the disadvantage in that a bit rate increases because encoded information of other adjacent subpictures, slices, and tiles is not available. A subpicture, a slice, and a tile may be partitioned into multiple coding tree units (CTUs) and encoded.

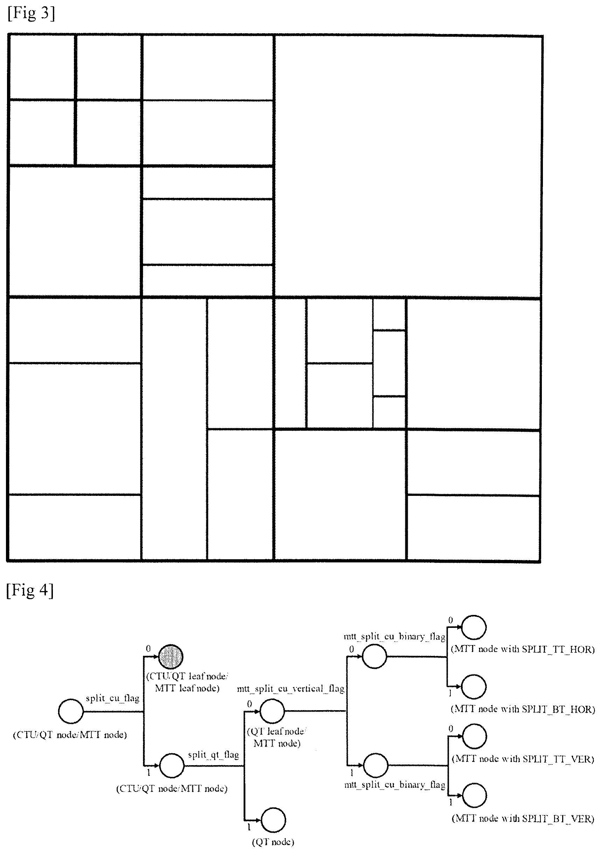

FIG. 3 illustrates an embodiment in which a coding tree unit (CTU) is divided into coding units (CUs) within a picture. In the process of coding a video signal, a picture may be divided into a sequence of coding tree units (CTUs). A coding tree unit may include a luma Coding Tree Block (CTB), two chroma coding tree blocks, and encoded syntax information thereof. One coding tree unit may include one coding unit, or one coding tree unit may be divided into multiple coding units. One coding unit may include a luma coding block (CB), two chroma coding blocks, and encoded syntax information thereof. One coding block may be partitioned into multiple sub-coding blocks. One coding unit may include one transform unit (TU), or one coding unit may be partitioned into multiple transform units. A transform unit may include a luma transform block (TB), two chroma transform blocks, and encoded syntax information thereof. A coding tree unit may be partitioned into multiple coding units. A coding tree unit may become a leaf node without being partitioned. In this case, the coding tree unit itself may be a coding unit.

The coding unit refers to a basic unit for processing a picture in the process of processing the video signal described above, that is, intra/inter prediction, transformation, quantization, and/or entropy coding. The size and shape of the coding unit in one picture may not be constant. The coding unit may have a square or rectangular shape. The rectangular coding unit (or rectangular block) includes a vertical coding unit (or vertical block) and a horizontal coding unit (or horizontal block). In the present specification, the vertical block is a block whose height is greater than the width, and the horizontal block is a block whose width is greater than the height. Further, in this specification, a non-square block may refer to a rectangular block, but the present invention is not limited thereto.

Referring to FIG. 3, the coding tree unit is first split into a quad tree (QT) structure. That is, one node having a 2NX2N size in a quad tree structure may be split into four nodes having an NXN size. In the present specification, the quad tree may also be referred to as a quaternary tree. Quad tree split can be performed recursively, and not all nodes need to be split with the same depth.

Meanwhile, the leaf node of the above-described quad tree may be further split into a multi-type tree (MTT) structure. According to an embodiment of the present invention, in a multi-type tree structure, one node may be split into a binary or ternary tree structure of horizontal or vertical division. That is, in the multi-type tree structure, there are four split structures such as vertical binary split, horizontal binary split, vertical ternary split, and horizontal ternary split. According to an embodiment of the present invention, in each of the tree structures, the width and height of the nodes may all have powers of 2. For example, in a binary tree (BT) structure, a node of a 2NX2N size may be split into two NX2N nodes by vertical binary split, and split into two 2NXN nodes by horizontal binary split. In addition, in a ternary tree (TT) structure, a node of a 2NX2N size is split into (N/2)X2N, NX2N, and (N/2)X2N nodes by vertical ternary split, and split into 2NX(N/2), 2NXN, and 2NX(N/2) nodes by horizontal ternary split. This multi-type tree split can be performed recursively.

A leaf node of the multi-type tree can be a coding unit. When the coding unit is not greater than the maximum transform length, the coding unit can be used as a unit of prediction and/or transform without further splitting. As an embodiment, when the width or height of the current coding unit is greater than the maximum transform length, the current coding unit can be split into a plurality of transform units without explicit signaling regarding splitting. On the other hand, at least one of the following parameters in the above-described quad tree and multi-type tree may be predefined or transmitted through a higher level set of RBSPs such as PPS, SPS, VPS, and the like. 1) CTU size: root node size of quad tree, 2) minimum QT size MinQtSize: minimum allowed QT leaf node size, 3) maximum BT size MaxBtSize: maximum allowed BT root node size, 4) Maximum TT size MaxTtSize: maximum allowed TT root node size, 5) Maximum MTT depth MaxMttDepth: maximum allowed depth of MTT split from QT's leaf node, 6) Minimum BT size MinBtSize: minimum allowed BT leaf node size, 7) Minimum TT size MinTtSize: minimum allowed TT leaf node size.

FIG. 4 illustrates an embodiment of a method of signaling splitting of the quad tree and multi-type tree. Preset flags can be used to signal the splitting of the quad tree and multi-type tree described above. Referring to FIG. 4, at least one of a flag 'split_cu_flag' indicating whether or not to split a node, a flag 'split_qt_flag' indicating whether or not to split a quad tree node, a flag 'mtt_split_cu_vertical_flag' indicating a splitting direction of the multi-type tree node, or a flag 'mtt_split_cu_binary_flag' indicating a splitting shape of the multi-type tree node can be used.

According to an embodiment of the present invention, 'split_cu_flag', which is a flag indicating whether or not to split the current node, can be signaled first. When the value of 'split_cu_flag' is 0, it indicates that the current node is not split, and the current node becomes a coding unit. When the current node is the coating tree unit, the coding tree unit includes one unsplit coding unit. When the current node is a quad tree node 'QT node', the current node is a leaf node 'QT leaf node' of the quad tree and becomes the coding unit. When the current node is a multi-type tree node 'MTT node', the current node is a leaf node 'MTT leaf node' of the multi-type tree and becomes the coding unit.

When the value of 'split cu flag' is 1, the current node can be split into nodes of the quad tree or multi-type tree according to the value of 'split_qt_flag'. A coding tree unit is a root node of the quad tree, and can be split into a quad tree structure first. In the quad tree structure, 'split_qt_flag' is signaled for each node 'QT node'. When the value of 'split_qt_flag' is 1, the corresponding node is split into 4 square nodes, and when the value of 'qt_split_flag' is 0, the corresponding node becomes the 'QT leaf node' of the quad tree, and the corresponding node is split into multi-type nodes. According to an embodiment of the present invention, quad tree splitting can be limited according to the type of the current node. Quad tree splitting can be allowed when the current node is the coding tree unit (root node of the quad tree) or the quad tree node, and quad tree splitting may not be allowed when the current node is the multi-type tree node. Each quad tree leaf node 'QT leaf node' can be further split into a multi-type tree structure. As described above, when 'split_qt_flag' is 0, the current node can be split into multi-type nodes. In order to indicate the splitting direction and the splitting shape, 'mtt_split_cu_vertical_flag' and `mtt_split_cu_binary_flag' can be signaled. When the value of 'mtt_split_cu_vertical_flag' is 1, vertical splitting of the node 'MTT node' is indicated, and when the value of 'mtt_split_cu_vertical_flag' is 0, horizontal splitting of the node 'MTT node' is indicated. In addition, when the value of `mtt_split_cu_binary_flag' is 1, the node 'MTT node' is split into two rectangular nodes, and when the value of 'mtt_split_cu_binary_flag' is 0, the node 'MTT node' is split into three rectangular nodes.

In the tree partitioning structure, a luma block and a chroma block may be partitioned in the same form. That is, a chroma block may be partitioned by referring to the partitioning form of a luma block. When a current chroma block is less than a predetermined size, a chroma block may not be partitioned even if a luma block is partitioned.

In the tree partitioning structure, a luma block and a chroma block may have different forms. In this case, luma block partitioning information and chroma block partitioning information may be signaled separately. Furthermore, in addition to the partitioning information, luma block encoding information and chroma block encoding information may also be different from each other. In one example, the luma block and the chroma block may be different in at least one among intra encoding mode, encoding information for motion information, etc.

A node to be split into the smallest units may be treated as one coding block. When a current block is a coding block, the coding block may be partitioned into several sub-blocks (sub-coding blocks), and the sub-blocks may have the same prediction information or different pieces of prediction information. In one example, when a coding unit is in an intra mode, intra-prediction modes of sub-blocks may be the same or different from each other. Also, when the coding unit is in an inter mode, sub-blocks may have the same motion information or different pieces of the motion information. Furthermore, the sub-blocks may be encoded or decoded independently of each other. Each sub-block may be distinguished by a sub-block index (sbIdx). Also, when a coding unit is partitioned into sub-blocks, the coding unit may be partitioned horizontally, vertically, or diagonally. In an intra mode, a mode in which a current coding unit is partitioned into two or four sub-blocks horizontally or vertically is called intra sub-partitions (ISP). In an inter mode, a mode in which a current coding block is partitioned diagonally is called a geometric partitioning mode (GPM). In the GPM mode, the position and direction of a diagonal line are derived using a predetermined angle table, and index information of the angle table is signaled.

Picture prediction (motion compensation) for coding is performed on a coding unit that is no longer divided (i.e., a leaf node of a coding unit tree). Hereinafter, the basic unit for performing the prediction will be referred to as a "prediction unit" or a "prediction block".

Hereinafter, the term "unit" used herein may replace the prediction unit, which is a basic unit for performing prediction. However, the present disclosure is not limited thereto, and "unit" may be understood as a concept broadly encompassing the coding unit.

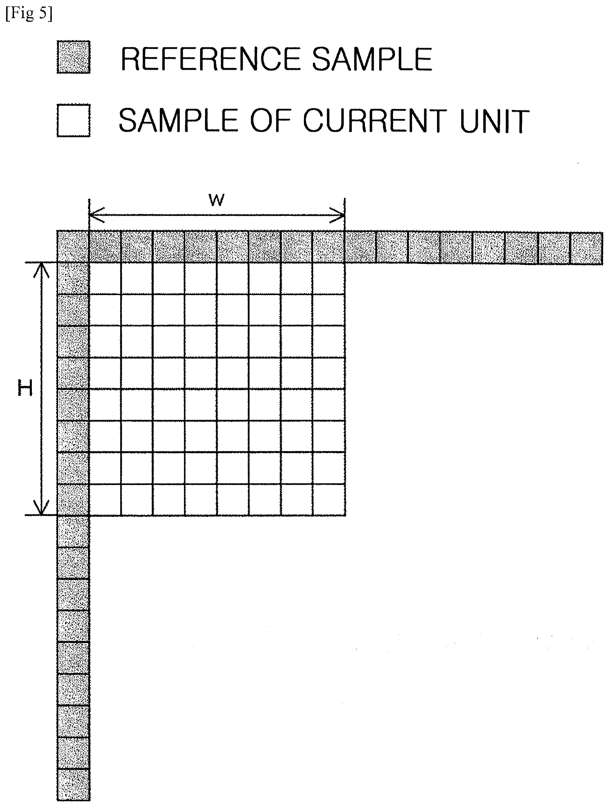

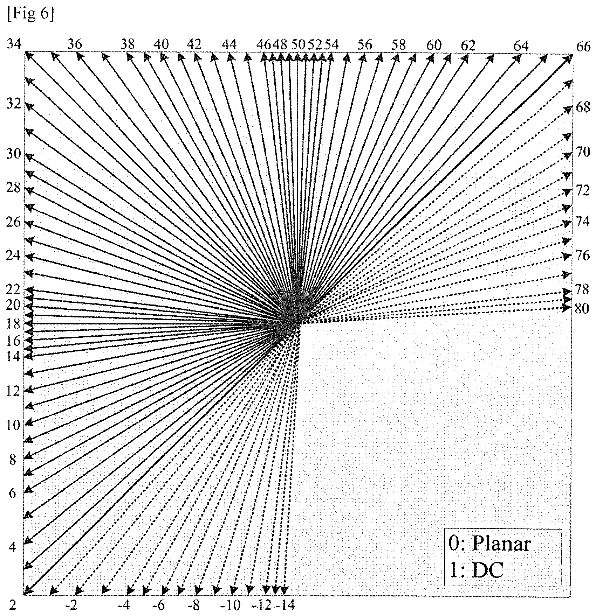

FIGS. 5 and 6 more specifically illustrate an intra prediction method according to an embodiment of the present invention. As described above, the intra prediction unit predicts the sample values of the current block by using the reconstructed samples located on the left and/or upper side of the current block as reference samples.

First, FIG. 5 shows an embodiment of reference samples used for prediction of a current block in an intra prediction mode. According to an embodiment, the reference samples may be samples adjacent to the left boundary of the current block and/or samples adjacent to the upper boundary. As shown in FIG. 5, when the size of the current block is WXH and samples of a single reference line adjacent to the current block are used for intra prediction, reference samples may be configured using a maximum of 2W+2H+1 neighboring samples located on the left and/or upper side of the current block.

Pixels from multiple reference lines may be used for intra prediction of the current block. The multiple reference lines may include n lines located within a predetermined range from the current block. According to an embodiment, when pixels from multiple reference lines are used for intra prediction, separate index information that indicates lines to be set as reference pixels may be signaled, and may be named a reference line index.

When at least some samples to be used as reference samples have not yet been restored, the intra prediction unit may obtain reference samples by performing a reference sample padding procedure. The intra prediction unit may perform a reference sample filtering procedure to reduce an error in intra prediction. That is, filtering may be performed on neighboring samples and/or reference samples obtained by the reference sample padding procedure, so as to obtain the filtered reference samples. The intra prediction unit predicts samples of the current block by using the reference samples obtained as in the above. The intra prediction unit predicts samples of the current block by using unfiltered reference samples or filtered reference samples. In the present disclosure, neighboring samples may include samples on at least one reference line. For example, the neighboring samples may include adjacent samples on a line adjacent to the boundary of the current block.

Next, FIG. 6 shows an embodiment of prediction modes used for intra prediction. For intra prediction, intra prediction mode information indicating an intra prediction direction may be signaled. The intra prediction mode information indicates one of a plurality of intra prediction modes included in the intra prediction mode set. When the current block is an intra prediction block, the decoder receives intra prediction mode information of the current block from the bitstream. The intra prediction unit of the decoder performs intra prediction on the current block based on the extracted intra prediction mode information.

According to an embodiment of the present invention, the intra prediction mode set may include all intra prediction modes used in intra prediction (e.g., a total of 67 intra prediction modes). More specifically, the intra prediction mode set may include a planar mode, a DC mode, and a plurality (e.g., 65) of angle modes (i.e., directional modes). Each intra prediction mode may be indicated through a preset index (i.e., intra prediction mode index). For example, as shown in FIG. 6, the intra prediction mode index 0 indicates a planar mode, and the intra prediction mode index 1 indicates a DC mode. Also, the intra prediction mode indexes 2 to 66 may indicate different angle modes, respectively. The angle modes respectively indicate angles which are different from each other within a preset angle range. For example, the angle mode may indicate an angle within an angle range (i.e., a first angular range) between 45 degrees and -135 degrees clockwise. The angle mode may be defined based on the 12 o'clock direction. In this case, the intra prediction mode index 2 indicates a horizontal diagonal (HDIA) mode, the intra prediction mode index 18 indicates a horizontal (Horizontal, HOR) mode, the intra prediction mode index 34 indicates a diagonal (DIA) mode, the intra prediction mode index 50 indicates a vertical (VER) mode, and the intra prediction mode index 66 indicates a vertical diagonal (VDIA) mode.

Meanwhile, the preset angle range can be set differently depending on a shape of the current block. For example, if the current block is a rectangular block, a wide angle mode indicating an angle exceeding 45 degrees or less than -135 degrees in a clockwise direction can be additionally used. When the current block is a horizontal block, an angle mode can indicate an angle within an angle range (i.e., a second angle range) between (45 + offset1) degrees and (-135 + offset1) degrees in a clockwise direction. In this case, angle modes 67 to 76 outside the first angle range can be additionally used. In addition, if the current block is a vertical block, the angle mode can indicate an angle within an angle range (i.e., a third angle range) between (45 - offset2) degrees and (-135 - offset2) degrees in a clockwise direction. In this case, angle modes -10 to -1 outside the first angle range can be additionally used. According to an embodiment of the present disclosure, values of offset1 and offset2 can be determined differently depending on a ratio between the width and height of the rectangular block. In addition, offset1 and offset2 can be positive numbers.

According to a further embodiment of the present invention, a plurality of angle modes configuring the intra prediction mode set can include a basic angle mode and an extended angle mode. In this case, the extended angle mode can be determined based on the basic angle mode.

According to an embodiment, the basic angle mode is a mode corresponding to an angle used in intra prediction of the existing high efficiency video coding (HEVC) standard, and the extended angle mode can be a mode corresponding to an angle newly added in intra prediction of the next generation video codec standard. More specifically, the basic angle mode can be an angle mode corresponding to any one of the intra prediction modes {2, 4, 6, ..., 66}, and the extended angle mode can be an angle mode corresponding to any one of the intra prediction modes {3, 5, 7, ..., 65}. That is, the extended angle mode can be an angle mode between basic angle modes within the first angle range. Accordingly, the angle indicated by the extended angle mode can be determined on the basis of the angle indicated by the basic angle mode.

According to another embodiment, the basic angle mode can be a mode corresponding to an angle within a preset first angle range, and the extended angle mode can be a wide angle mode outside the first angle range. That is, the basic angle mode can be an angle mode corresponding to any one of the intra prediction modes {2, 3, 4, ..., 66}, and the extended angle mode can be an angle mode corresponding to any one of the intra prediction modes {-14, -13, -12, ..., -1} and {67, 68, ..., 80}. The angle indicated by the extended angle mode can be determined as an angle on a side opposite to the angle indicated by the corresponding basic angle mode. Accordingly, the angle indicated by the extended angle mode can be determined on the basis of the angle indicated by the basic angle mode. Meanwhile, the number of extended angle modes is not limited thereto, and additional extended angles can be defined according to the size and/or shape of the current block. Meanwhile, the total number of intra prediction modes included in the intra prediction mode set can vary depending on the configuration of the basic angle mode and extended angle mode described above

In the embodiments described above, the spacing between the extended angle modes can be set on the basis of the spacing between the corresponding basic angle modes. For example, the spacing between the extended angle modes {3, 5, 7, ..., 65} can be determined on the basis of the spacing between the corresponding basic angle modes {2, 4, 6,... , 66}. In addition, the spacing between the extended angle modes {-14, -13, ... , -1} can be determined on the basis of the spacing between corresponding basic angle modes {53, 54,... , 66} on the opposite side, and the spacing between the extended angle modes {67, 68, ..., 80} can be determined on the basis of the spacing between the corresponding basic angle modes {2, 3, 4, ... , 15} on the opposite side. The angular spacing between the extended angle modes can be set to be the same as the angular spacing between the corresponding basic angle modes. In addition, the number of extended angle modes in the intra prediction mode set can be set to be less than or equal to the number of basic angle modes.

According to an embodiment of the present invention, the extended angle mode can be signaled based on the basic angle mode. For example, the wide angle mode (i.e., the extended angle mode) can replace at least one angle mode (i.e., the basic angle mode) within the first angle range. The basic angle mode to be replaced can be a corresponding angle mode on a side opposite to the wide angle mode. That is, the basic angle mode to be replaced is an angle mode that corresponds to an angle in an opposite direction to the angle indicated by the wide angle mode or that corresponds to an angle that differs by a preset offset index from the angle in the opposite direction. According to an embodiment of the present invention, the preset offset index is 1. The intra prediction mode index corresponding to the basic angle mode to be replaced can be remapped to the wide angle mode to signal the corresponding wide angle mode. For example, the wide angle modes {-14, -13, ..., -1} can be signaled by the intra prediction mode indices {52, 53, ..., 66}, respectively, and the wide angle modes {67, 68, ..., 80} can be signaled by the intra prediction mode indices {2, 3, ..., 15}, respectively. In this way, the intra prediction mode index for the basic angle mode signals the extended angle mode, and thus the same set of intra prediction mode indices can be used for signaling the intra prediction mode even if the configuration of the angle modes used for intra prediction of each block are different from each other. Accordingly, signaling overhead due to a change in the intra prediction mode configuration can be minimized.

Meanwhile, whether or not to use the extended angle mode can be determined on the basis of at least one of the shape and size of the current block. According to an embodiment, when the size of the current block is greater than a preset size, the extended angle mode can be used for intra prediction of the current block, otherwise, only the basic angle mode can be used for intra prediction of the current block. According to another embodiment, when the current block is a block other than a square, the extended angle mode can be used for intra prediction of the current block, and when the current block is a square block, only the basic angle mode can be used for intra prediction of the current block.

The intra-prediction unit determines reference samples and/or interpolated reference samples to be used for intra prediction of the current block, based on the intra-prediction mode information of the current block. When the intra-prediction mode index indicates a specific angular mode, a reference sample corresponding to the specific angle or an interpolated reference sample from current samples in the current block is used for prediction of a current pixel. Thus, different sets of reference samples and/or interpolated reference samples may be used for intra prediction depending on the intra-prediction mode. After the intra prediction of the current block is performed using the reference samples and the intra-prediction mode information, the decoder reconstructs sample values of the current block by adding the residual signal of the current block, which has been obtained from the inverse transform unit, to the intra-prediction value of the current block.

Motion information used for inter prediction may include reference direction indication information (inter_pred_idc), reference picture index (ref_idx_10, ref_idx_l1), and motion vector (mvL0, mvL1). Reference picture list utilization information (predFlagL0, predFlagL1) may be set based on the reference direction indication information. In one example, for a unidirectional prediction using an L0 reference picture, predFlagL0=1 and predFlagL1=0 may be set. For a unidirectional prediction using an L1 reference picture, predFlagL0=0 and predFlagL1=1 may be set. For bidirectional prediction using both the L0 and L1 reference pictures, predFlagL0=1 and predFlagL1=1 may be set.

When the current block is a coding unit, the coding unit may be partitioned into multiple sub-blocks, and the sub-blocks have the same prediction information or different pieces of prediction information. In one example, when the coding unit is in an intra mode, intra-prediction modes of the sub-blocks may be the same or different from each other. Also, when the coding unit is in an inter mode, the sub-blocks may have the same motion information or different pieces of motion information. Furthermore, the sub-blocks may be encoded or decoded independently of each other. Each sub-block may be distinguished by a sub-block index (sbIdx).

The motion vector of the current block is likely to be similar to the motion vector of a neighboring block. Therefore, the motion vector of the neighboring block may be used as a motion vector predictor (MVP), and the motion vector of the current block may be derived using the motion vector of the neighboring block. Furthermore, to improve the accuracy of the motion vector, the motion vector difference (MVD) between the optimal motion vector of the current block and the motion vector predictor found by the encoder from an original video may be signaled.

The motion vector may have various resolutions, and the resolution of the motion vector may vary on a block-by-block basis. The motion vector resolution may be expressed in integer units, half-pixel units, 1/4 pixel units, 1/16 pixel units, 4-integer pixel units, etc. A video, such as screen content, has a simple graphical form such as text, and does not require an interpolation filter to be applied. Thus, integer units and 4-integer pixel units may be selectively applied on a block-by-block basis. A block encoded using an affine mode, which represent rotation and scale, exhibit significant changes in form, so integer units, 1/4 pixel units, and 1/16 pixel units may be applied selectively on a block-by-block basis. Information about whether to selectively apply motion vector resolution on a block-by-block basis is signaled by amvr_flag. If applied, information about a motion vector resolution to be applied to the current block is signaled by amvr_precision_idx.

In the case of blocks to which bidirectional prediction is applied, weights applied between two prediction blocks may be equal or different, and information about the weights is signaled via BCW_IDX.

In order to improve the accuracy of the motion vector predictor, a merge or AMVP(advanced motion vector prediction) method may be selectively used on a block-by-block basis. The merge method is a method that configures motion information of a current block to be the same as motion information of a neighboring block adjacent to the current block, and is advantageous in that the motion information is spatially propagated without change in a motion region with homogeneity, and thus the encoding efficiency of the motion information is increased. On the other hand, the AMVP method is a method for predicting motion information in L0 and L1 prediction directions respectively and signaling the most optimal motion information in order to represent accurate motion information. The decoder derives motion information for a current block by using the AMVP or merge method, and then uses a reference block, located in the motion information in a reference picture, as a prediction block for the current block.

A method of deriving motion information in Merge or AMVP involves a method for constructing a motion candidate list using motion vector predictors derived from neighboring blocks of the current block, and then signaling index information for the optimal motion candidate. In the case of AMVP, motion candidate lists are derived for L0 and L1, respectively, so the most optimal motion candidate indexes (mvp_10_flag, mvp_11_flag) for L0 and L1 are signaled, respectively. In the case of Merge, a single move candidate list is derived, so a single merge index (merge_idx) is signaled. There may be various motion candidate lists derived from a single coding unit, and a motion candidate index or a merge index may be signaled for each motion candidate list. In this case, a mode in which there is no information about residual blocks in blocks encoded using the merge mode may be called a MergeSkip mode.

The motion candidate and the motion information candidate in this specification may have the same meaning. In addition, the motion candidate list and the motion information candidate list in this specification may have the same meaning.

Bidirectional motion information for the current block may be derived by mixing AMVP and Merge modes. For example, motion information in the L0 direction may be derived using the AMVP method, and motion information in the L1 direction may be derived using the Merge method. Conversely, Merge may be applied to L0 and AMVP to L1. This encoding mode may be called AMVP-merge mode.

Symmetric MVD (SMVD) is a method which makes motion vector difference (MVD) values in the L0 and L1 directions symmetrical in the case of bi-directional prediction, thereby reducing the bit rate of motion information transmitted. The MVD information in the L1 direction that is symmetrical to the L0 direction is not transmitted, and reference picture information in the L0 and L1 directions is also not transmitted, but is derived during decoding.

Overlapped block motion compensation (OBMC) is a method in which, when blocks have different pieces of motion information, prediction blocks for a current block are generated by using motion information of neighboring blocks, and the prediction blocks are then weighted averaged to generate a final prediction block for the current block. This has the effect of reducing the blocking phenomenon that occurs at the block edges in a motion-compensated video.

Generally, a merged motion candidate has low motion accuracy. To improve the accuracy of the merge motion candidate, a merge mode with MVD (MMVD) method may be used. The MMVD method is a method for correcting motion information by using one candidate selected from several motion difference value candidates. Information about a correction value of the motion information obtained by the MMVD method (e.g., an index indicating one candidate selected from among the motion difference value candidates, etc.) may be included in a bitstream and transmitted to the decoder. By including the information about the correction value of the motion information in the bitstream, a bit rate may be saved compared to including an existing motion information difference value in a bitstream.

A template matching (TM) method is a method of configuring a template through a neighboring pixel of a current block, searching for a matching area most similar to the template, and correcting motion information. Template matching (TM) is a method of performing motion prediction by a decoder without including motion information in a bitstream so as to reduce the size of an encoded bitstream. The decoder does not have an original image, and thus may schematically derive motion information of a current block by using a pre-reconstructed neighboring block.

A Decoder-side Motion Vector Refinement (DMVR) method is a method for correcting motion information through the correlation of already reconstructed reference videos in order to find more accurate motion information. The DMVR method is a method which uses the bidirectional motion information of a current block to use, within predetermined regions of two reference pictures, a point with the best matching between reference blocks in the reference pictures as a new bidirectional motion. When the DMVR method is performed, the encoder may perform DMVR on one block to correct motion information, and then partition the block into sub-blocks and perform DMVR on each sub-block to correct motion information of the sub-block again, and this may be referred to as multi-pass DMVR (MP-DMVR).

A local illumination compensation (LIC) method is a method for compensating for changes in luma between blocks, and is a method which derives a linear model by using neighboring pixels adjacent to a current block, and then compensate for luma information of the current block by using the linear model.

Existing video encoding methods perform motion compensation by considering only parallel movements in upward, downward, leftward, and rightward directions, thus reducing the encoding efficiency when encoding videos that include movements such as zooming, scaling, and rotation that are commonly encountered in real life. To express the movements such as zooming, scaling, and rotation, affine model-based motion prediction techniques using four (rotation) or six (zooming, scaling, rotation) parameter models may be applied.

Bi-directional optical flow (BDOF) is used to correct a prediction block by estimating the amount of change in pixels on an optical-flow basis from a reference block of blocks with bi-directional motion. Motion information derived by the BDOF of VVC may be used to correct the motion of a current block.

Prediction refinement with optical flow (PROF) is a technique for improving the accuracy of affine motion prediction for each sub-block so as to be similar to the accuracy of motion prediction for each pixel. Similar to BDOF, PROF is a technique that obtains a final prediction signal by calculating a correction value for each pixel with respect to pixel values in which affine motion is compensated for each sub-block based on optical-flow.

The combined inter-/intra-picture prediction (CIIP) method is a method for generating a final prediction block by performing weighted averaging of a prediction block generated by an intra-picture prediction method and a prediction block generated by an inter-picture prediction method when generating a prediction block for the current block.

The intra block copy (IBC) method is a method for finding a part, which is most similar to a current block, in an already reconstructed region within a current picture and using the reference block as a prediction block for the current block. In this case, information related to a block vector, which is the distance between the current block and the reference block, may be included in a bitstream. The decoder can parse the information related to the block vector contained in the bitstream to calculate or set the block vector for the current block.

An intra template matching prediction (TMP) method is a method that constructs a base template by using the pixel values of neighboring blocks adjacent to a current block, finds a part most similar to the base template in an already reconstructed area within the current picture, and then uses the reference block as a prediction block for the current block.

The bi-prediction with CU-level weights (BCW) method is a method in which with respect to two motion-compensated prediction blocks from different reference pictures, weighted averaging of the two prediction blocks is performed by adaptively applying weights on a block-by-block basis without generating the prediction blocks using an average.

The multi-hypothesis prediction (MHP) method is a method for performing weighted prediction through various prediction signals by transmitting additional motion information in addition to unidirectional and bidirectional motion information during inter-picture prediction.

A cross-component linear model (CCLM) is a method for configuring a linear model by using a high correlation between a luma signal and a chroma signal at the same location as the corresponding luma signal, and then predicting a chroma signal through the corresponding linear model. After a template is configured using a block completed to be reconstructed from among neighboring blocks adjacent to a current block, and then a parameter for the linear model is derived through the template. Next, a current luma block selectively reconstructed according to the size of the chroma block according to a video format is down-sampled. Lastly, a chroma component block of the current block is predicted using the down-sampled luma component block and the corresponding linear model. In this case, the method using two or more linear models is called a multi-model linear mode (MMLM).

In independent scalar quantization, reconstructed coefficient t'ₖ for input coefficient tₖ is only dependent on quantization index qₖ. That is, a quantization index for any reconstructed coefficient has a value different from those of quantization indices for other reconstructed coefficients. In this case, t'ₖ may be a value obtained by adding a quantization error to tₖ, and may vary or remain the same according to a quantization parameter. Here, t'ₖ may be also referred to as a reconstructed transform coefficient or a de-quantized transform coefficient, and the quantization index may be also referred to as a quantized transform coefficient.

In uniform reconstruction quantization (URQ), reconstructed coefficients have the characteristic of being arrangement at equal intervals. The distance between two adjacent reconstructed values may be called a quantization step size. The reconstructed values may include 0, and the entire set of available reconstructed values may be uniquely defined based on the quantization step size. The quantization step size may vary depending on quantization parameters.

In the existing methods, quantization reduces the set of acceptable reconstructed transform coefficients, and elements of the set may be finite. Thus, there are limitation in minimizing the average error between an original video and a reconstructed video. Vector quantization may be used as a method for minimizing the average error.

A simple form of vector quantization used in video encoding is sign data hiding. This is a method in which the encoder does not encode a sign for one non-zero coefficient and the decoder determines the sign for the coefficient based on whether the sum of absolute values of all the coefficients is even or odd. To this end, in the encoder, at least one coefficient may be incremented or decremented by "1", and the at least one coefficient may be selected and have a value adjusted so as to be optimal from the perspective of rate-distortion cost. In one example, a coefficient with a value close to the boundary between the quantization intervals may be selected.

Another vector quantization method is trellis-coded quantization, and, in video encoding, is used as an optimal path-searching technique to obtain optimized quantization values in dependent quantization. On a block-by-block basis, quantization candidates for all coefficients in a block are placed in a trellis graph, and the optimal trellis path between optimized quantization candidates is found by considering rate-distortion cost. Specifically, the dependent quantization applied to video encoding may be designed such that a set of acceptable reconstructed transform coefficients with respect to transform coefficients depends on the value of a transform coefficient that precedes a current transform coefficient in the reconstruction order. At this time, by selectively using multiple quantizers according to the transform coefficients, the average error between the original video and the reconstructed video is minimized, thereby increasing the encoding efficiency.

Among intra prediction encoding techniques, the matrix intra prediction (MIP) method is a matrix-based intra prediction method, and obtains a prediction signal by using a predefined matrix and offset values through pixels on the left and top of a neighboring block, unlike a prediction method having directionality from pixels of neighboring blocks adjacent to a current bloc.

To derive an intra-prediction mode for a current block, on the basis of a template which is a random reconstructed region adjacent to the current block, an intra-prediction mode for a template derived through neighboring pixels of the template may be used to reconstruct the current block. First, the decoder may generate a prediction template for the template by using neighboring pixels (references) adjacent to the template, and may use an intra-prediction mode, which has generated the most similar prediction template to an already reconstructed template, to reconstruct the current block. This method may be referred to as template intra mode derivation (TIMD).

In general, the encoder may determine a prediction mode for generating a prediction block and generate a bitstream including information about the determined prediction mode. The decoder may parse a received bitstream to set an intra-prediction mode. In this case, the bit rate of information about the prediction mode may be approximately 10% of the total bitstream size. To reduce the bit rate of information about the prediction mode, the encoder may not include information about an intra-prediction mode in the bitstream. Accordingly, the decoder may use the characteristics of neighboring blocks to derive (determine) an intra-prediction mode for reconstruction of a current block, and may use the derived intra-prediction mode to reconstruct the current block. In this case, to derive the intra-prediction mode, the decoder may apply a Sobel filter horizontally and vertically to each neighboring pixel adjacent to the current block to infer directional information, and then map the directional information to the intra-prediction mode. The method by which the decoder derives the intra-prediction mode using neighboring blocks may be described as decoder side intra mode derivation (DIMD).

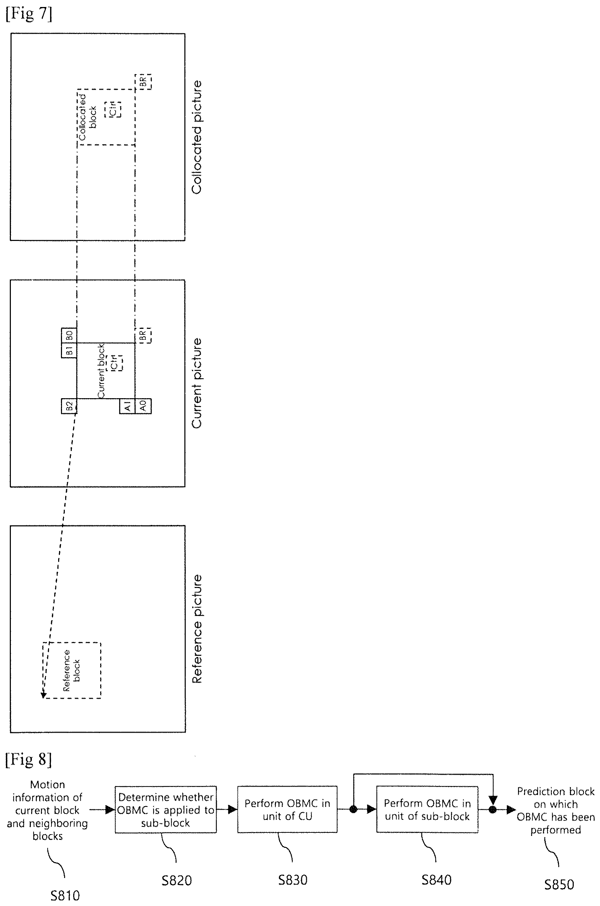

FIG. 7 illustrates the position of neighboring blocks used to construct a motion candidate list in inter prediction.

The neighboring blocks may be spatially located blocks or temporally located blocks. A neighboring block that is spatially adjacent to a current block may be at least one among a left (A1) block, a left below (A0) block, an above (B1) block, an above right (B0) block, or an above left (B2) block. A neighboring block that is temporally adjacent to the current block may be a block in a collocated picture, which includes the position of a top left pixel of a bottom right (BR) block of the current block. When a neighboring block temporally adjacent to the current block is encoded using an intra mode, or when the neighboring block temporally adjacent to the current block is positioned not to be used, a block, which includes a horizontal and vertical center (Ctr) pixel position in the current block, in the collocated picture corresponding to the current picture may be used as a temporal neighboring block. Motion candidate information derived from the collocated picture may be referred to as a temporal motion vector predictor (TMVP). Only one TMVP may be derived from one block. One block may be partitioned into multiple sub-blocks, and a TMVP candidate may be derived for each sub-block. A method for deriving TMVPs on a sub-block basis may be referred to as sub-block temporal motion vector predictor (sbTMVP).

The video signal processing device (e.g., an encoder and a decoder) may determine whether a new motion vector candidate exists in the motion vector candidate list, and determine whether to add the new motion vector candidate to the motion vector candidate list. In this case, the determination of whether the new motion vector candidate exists in the motion vector candidate list may be determined based on whether the motion vector candidates in the motion vector candidate list and the new motion vector candidate are identical or similar. If the motion vector candidates in the motion vector candidate list and the new motion vector candidate are identical or similar, the video signal processing device may determine that the new motion vector candidate is duplicated and may not add the new motion vector candidate to the motion vector candidate list. The video signal processing device may determine the identity based on whether the horizontal and vertical components (x, y) of the motion vector candidates in the motion vector candidate list and the new motion vector candidate are identical, and the video signal processing device may determine the similarity based on whether the difference between the horizontal and vertical components (x, y) of the motion vector candidates in the motion vector candidate list and the new motion vector candidate is within an arbitrary value. The arbitrary value may be determined based on at least one of whether the current block applies TM or DMVR, the horizontal or vertical size of the current block, the motion resolution of the current block, whether the reconstruction-reordered IBC (RRIBC) mode is applied to the current block, and whether the zeroComp mode is applied to the current block, and for example, the arbitrary value may be 1, 2, 4, etc. In addition, if at least one or more of whether the motion vector candidate applies LIC, the RRIBC mode of the motion vector candidate, the resolution of the motion vector, whether the motion vector uses half-pixel compensation, and the BCW information of the motion vector candidate are different, the video signal processing device may determine that the motion vector candidates in the motion vector candidate list and the new motion vector candidate are not the same or similar, and may add the new motion vector candidate to the motion vector candidate list.

Whether methods described in the present specification are to be applied may be determined on the basis of at least one of pieces of information relating to slice type information (e.g., whether a slice is an I slice, a P slice, or a B slice), whether the current block is a tile, whether the current block is a subpicture, the size of a current block, the depth of a coding unit, whether a current block is a luma block or a chroma block, whether a frame is a reference frame or a non-reference frame, and a temporal layer corresponding a reference sequence and a layer. Pieces of information used to determine whether methods described in the present specification are to be applied may be pieces of information promised between a decoder and an encoder in advance. In addition, such pieces of information may be determined according to a profile and a level. Such pieces of information may be expressed by a variable value, and a bitstream may include information on a variable value. That is, a decoder may parse information on a variable value included in a bitstream to determine whether the above methods are applied. For example, whether the above methods are to be applied may be determined on the basis of the width length or the height length of a coding unit. If the width length or the height length is equal to or greater than 32 (e.g., 32, 64, or 128), the above methods may be applied. If the width length or the height length is smaller than 32 (e.g., 2, 4, 8, or 16), the above methods may be applied. If the width length or the height length is equal to 4 or 8, the above methods may be applied.

FIG. 8 illustrates a process of performing OBMC according to an embodiment of the present disclosure.

Referring to FIG. 8, a decoder may acquire motion information (e.g., a motion vector) of a current block (e.g., a current coding unit) and motion information of neighboring blocks of the current block (S810). The decoder may determine whether OBMC is applied to a sub-block of the current block (S820). In this case, the decoder may determine whether the OMBC is applied to each sub-block. When an affine mode (e.g., a merge-based affine mode and an AMVP-based affine mode), a subblock-based temporal motion vector predictors (sbTMVP) mode, or a multi-pass decoder-side motion vector refinement (MP-DMVR) mode is applied to the current block, the decoder may determine that the OBMC is applied to the sub-block of the current block. This is because motion information between sub-blocks may be different when the affine mode, the sbTMVP mode, or the MP-DMVR mode is applied to the current block. The decoder may perform OBMC in the unit of a CU (S830). The OBMC in the unit of a CU may be performed independently for each sub-block including an upper boundary and a left boundary of the current block. Specifically, the decoder may divide the current block into sub-blocks. In this case, the size of each sub-block may be a predetermined size and have a positive value. For example, the predetermined size may be 4. The decoder may perform OBMC in the unit of a sub-block, based on whether the OBMC is applied to the sub-block of the current block (S840). That is, when the decoder determines that the OBMC is applied to the sub-block, the decoder may perform the OBMC in the unit of a sub-block. The OBMC in step S840 may be performed on a sub-block of a current block unit which does not include upper/left boundaries. That is, the OBMC may be performed on the remaining sub-blocks other than the sub-block on which the OBMC is performed in step S830. The decoder may perform the OBMC on the sub-block of the current block and acquire a prediction block of the current block (S850).

Hereinafter, the step S830 will be described in more detail. The decoder may determine whether motion information of a first sub-block of the current block and motion information of a neighboring block of the first sub-block are the same. When the pieces of motion information are different from each other, the decoder may perform the OBMC on the first sub-block. In addition, the decoder may determine whether motion information of a second sub-block of the current block and motion information of a neighboring block of the second sub-block are the same. Likewise, when the pieces of motion information are different from each other, the decoder may perform the OBMC on the second sub-block. In this case, when the motion information of the first sub-block and the motion information of the second sub-block are the same, and the motion information of the neighboring block of the first sub-block and the motion information of the neighboring block of the second sub-block are the same, the decoder may perform the OBMC after grouping the first sub-block and the second sub-block into one sub-block. This has an effect of reducing the number of memory accesses, although performing OBMC performance processes of the first sub-block and the second sub-block at once rather than separately, resulting in the same result. That is, the OBMC may be performed by comparing a motion difference between motion information of each sub-block of the current block and motion information of a neighboring block of each sub-block and grouping sub-blocks having the same motion difference into one sub-block. When the neighboring block of the first sub-block is encoded in an intra mode or the neighboring block of the first sub-block is not available, the decoder may perform the step S830 again on another sub-block (e.g., second sub-block) without performing the OBMC on the first sub-block. In addition, when the motion information of each sub-block of the current block is the same as the motion information of the neighboring block of each sub-block, the decoder may not perform the OBMC on a sub-block having the same motion information. That is, when the motion information of the first sub-block and the motion information of the neighboring block of the first sub-block are the same, the decoder may perform the step S830 again on the other sub-block without performing the OBMC on the first sub-block. In this case, the step S830 may be performed first on sub-blocks including the upper boundary of the current block and then performed on sub-blocks including the left boundary of the current block. Conversely, the step S830 may be performed first on the sub-blocks including the left boundary of the current block and then performed on the sub-blocks including the upper boundary of the current block. In this case, the step S830 may be performed starting from a sub-block on the left side with respect to the sub-blocks including the upper boundary. The step S830 may be performed starting from a sub-block on the upper side with respect to the sub-blocks including the left boundary.

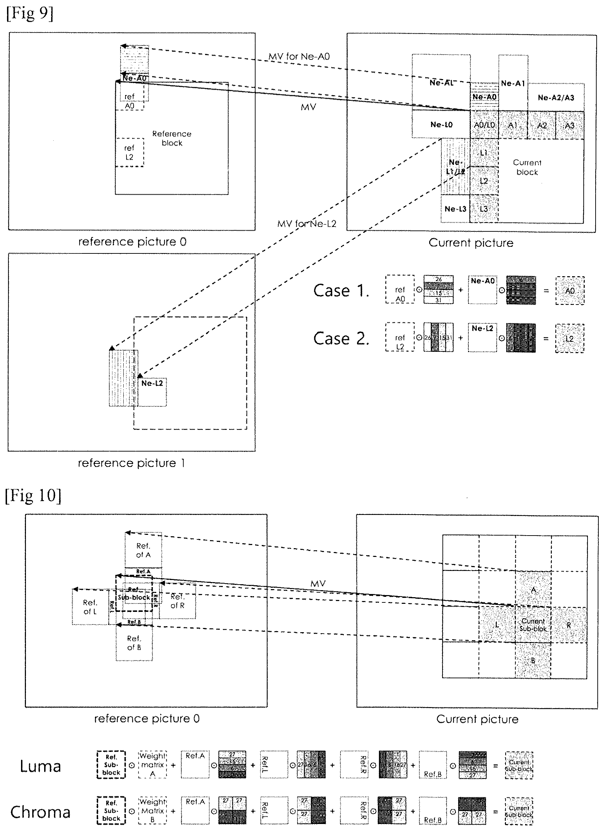

FIG. 9 illustrates a method of performing OMBC in the unit of a CU according to an embodiment of the present disclosure.

Specifically, FIG. 9 illustrates the step S830 in more detail.

Referring to FIG. 9, the decoder may perform the OBMC on an A0 block which is an upper left block of the current block (Case 1). The decoder may perform the OBMC for the A0 block when motion information of the A0 block and motion information of an Ne-A0 block, which is an upper end block adjacent to the A0 block, are different from each other. In this case, in order to perform the OBMC, the decoder may acquire a first prediction block ref A0 from reference picture 0 by using the motion information of the A0 block, and acquire a second prediction block from reference picture 0 by projecting the motion information of the Ne-A0 block onto a location of the A0 block. Further, the decoder may acquire a final prediction block for the A0 block by performing weight-averaging of the first prediction block and the second prediction block, based on a preconfigured weight.

In addition, the decoder may perform the OBMC on an L2 block which is a left block of the current block (Case 2). The decoder may perform the OBMC for the L2 block when motion information of the L2 block and motion information of an Ne-L2 block, which is a left block adjacent to the L2 block, are different from each other. In this case, in order to perform the OBMC, the decoder may acquire a first prediction block ref L2 from reference picture 0 by using the motion information of the L2 block, and acquire a second prediction block of the Ne-L2 block from reference picture 1 by projecting the motion information of the Ne-L2 block onto a location of the L2 block. Further, the decoder may acquire a final prediction block for the L2 block by performing weight-averaging of the first prediction block and the second prediction block, based on a preconfigured weight.

In this case, the preconfigured weight may be defined in a table form. The reference pictures between the current block and the neighboring blocks may be the same as in case 1 or different from each other as in case 2.

Referring to FIG. 9, there may be two blocks (an Ne-A0 block and an Ne-L0 block) adjacent to an A0 (or L0) block which is a sub-block located at an upper left end of the current block. Therefore, the decoder may perform the OBMC two times on the A0 block. For example, the decoder may compare motion information of the A0 block with motion information of the Ne-A0 block and, when the pieces of motion information are different from each other, perform primary OBMC for the A0 block. Afterwards, the decoder may compare the motion information of the A0 block with motion information of the Ne-L0 block, and when the pieces of motion information are different from each other, additionally perform secondary OBMC for the A0 block on which the primary OBMC has been performed. That is, the decoder may acquire a prediction block acquired by performing primary OBMC, and acquire a final prediction block for the A0 block by performing secondary OBMC on the prediction block acquired by performing the primary OMBC, and two times of OBMCs may be performed continuously (or sequentially) on the A0 block. Therefore, the primary OBMC may affect the secondary OBMC. That is, there is a dependency between the primary OBMC and the secondary OBMC. In order to remove the dependency, the decoder may perform the OBMC in parallel when multiple neighboring blocks adjacent to a sub-block exist. For example, the decoder may acquire in parallel a prediction block based on the motion information of the A0 block and the motion information of the Ne-A0 block, and a prediction block based on the motion information of the A0 block and the motion information of the Ne-L0 block. Afterwards, the decoder may acquire a final prediction block for the A0 block by performing weight-averaging of the prediction blocks acquired in parallel. When multiple neighboring blocks adjacent to a sub-block exist, the decoder may perform the OBMC, based on motion information of one neighboring block. For example, the decoder may acquire a first motion difference which is a difference between the motion information of the A0 block and the motion information of the Ne-A0 block, and a second motion difference which is a difference between the motion information of the A0 block and the motion information of the Ne-L0 block. Further, the decoder may compare the first motion difference and the second motion difference to perform the OBMC for the A0 block by using motion information of a neighboring block corresponding to the larger motion difference. For example, if the first motion difference is greater than the second motion difference, the decoder may perform only the OBMC for an upper boundary of the A0 block by using the motion information of the Ne-A0 block which is a neighboring block corresponding to the first motion difference.

FIG. 10 illustrates a method of performing OBMC in the unit of a sub-block according to an embodiment of the present disclosure.

Specifically, FIG. 10 illustrates the step S840 in more detail.

The OBMC in the unit of a CU in the present disclosure may refer to OBMC for sub-blocks adjacent to a current CU boundary, and may be described as CU boundary sub-block OBMC. OBMC in the unit of a sub-block may refer to OBMC for sub-blocks (sub-blocks not adjacent to the CU boundary) within a current CU, and may be described as CU internal sub-block OBMC.

In this case, since a reference picture of the current block is used to perform OBMC, all reference pictures in the unit of a sub-block may be the same.

The decoder may compare motion information of a current sub-block with motion information of each of neighboring blocks adjacent to the upper, lower, left, and right sides of the current sub-block. Further, the decoder may perform OBMC for the current sub-block by using motion information about adjacent neighboring blocks which have motion information different from the motion information of the current sub-block.

A method of performing OBMC for a luminance component sub-block will be described with reference to FIG. 10. The current sub-block is a luminance component sub-block, and the motion information of the current sub-block may be different from the motion information of each of the neighboring blocks adjacent to the upper, lower, left, and right sides of the current sub-block. In this case, the decoder may generate each prediction block by projecting the motion information about each of the neighboring blocks onto the current sub-block. That is, referring to FIG. 10, a prediction block generated based on the motion information about the neighboring block adjacent to the upper side of the current sub-block may be an Ref.A block, a prediction block generated based on the motion information about the neighboring block adjacent to the lower side of the current sub-block may be an Ref.B block, a prediction block generated based on the motion information about the neighboring block adjacent to the left side of the current sub-block may be an Ref.L block, and a prediction block generated based on the motion information about the neighboring block adjacent to the right side of the current sub-block may be an Ref.R block. The decoder may acquire a prediction block for the current sub-block by performing weight-averaging of the Ref.A block, the Ref.B block, the Ref.L block, and the Ref.R block. In this case, since multiple prediction blocks are added, the decoder may perform weight-averaging by using an expanded pixel range and then reconstruct the pixel range to the existing pixel range. A difference value obtained by subtracting the sum of weights according to each pixel location of the upper, lower, left, and right neighboring blocks from the total weight of the expanded pixel range may be a weight for each pixel of a current prediction block. When a neighboring block of the current sub-block is encoded in an intra mode, a weight of the corresponding neighboring block may be configured to be 0. In addition, when the neighboring block of the current sub-block is not available, a weight of the neighboring block which is not available may be configured to be 0. In addition, when the expanded pixel range is used, a video signal processing device (e.g., an encoder or a decoder) may fall outside the range of acceptable values. Therefore, weight average calculation may be applied by reducing a pixel value of each prediction block to a range of predetermined values. As a method of reducing a pixel value to a range of predetermined values, a method of performing a predetermined number of ">>" which refers to a right shift operation on each pixel value of a prediction block may be used. In this case, the predetermined number may be an integer greater than or equal to 1 and may be 2. In order to reconstruct an original range after the weight-averaging is performed, a method of performing a predetermined number of "<<" which refers to a left shift operation may be used, and the predetermined number may be equal to a number by which the range of values is reduced.

A method of performing OBMC for a chrominance component sub-block will be described with reference to FIG. 10. For example, when a component format of a current picture is 4:2:0, the horizontal and vertical sizes of a chrominance component block are half of the horizontal and vertical sizes of a luminance component block. That is, if the size of the luminance component block is 4x4, the size of the chrominance component block is 2x2. Therefore, only 2x2 value may exist in a weight table. A method of performing OBMC on a chrominance component sub-block may be similar to a method of performing OBMC for a luminance component sub-block. However, the resolution of motion information of a chrominance component sub-block may be half of the resolution of motion information of a luminance component sub-block. That is, there may be a difference between the motion information of the luminance component sub-block and motion information of a neighboring block of the luminance component sub-block, but there may be no difference between the motion information of the chrominance component sub-block and motion information of a neighboring block of the chrominance component sub-block. In this case, OBMC may be applied only to the luminance component sub-block, and the OBMC may not be applied to the chrominance component sub-block. Therefore, a blocking phenomenon which has not occurred in the luminance component sub-block may occur in the chrominance component sub-block. If OBMC is applied to the luminance component sub-block to solve the blocking phenomenon, the OBMC may also be applied to the chrominance component sub-block. The OBMC in the unit of a CU may be performed for each of Y, U, and V components, and in the case of the chrominance component block, the OBMC may be performed on the first adjacent pixel line. In this case, it is natural that the present invention is not limited to the first pixel line.

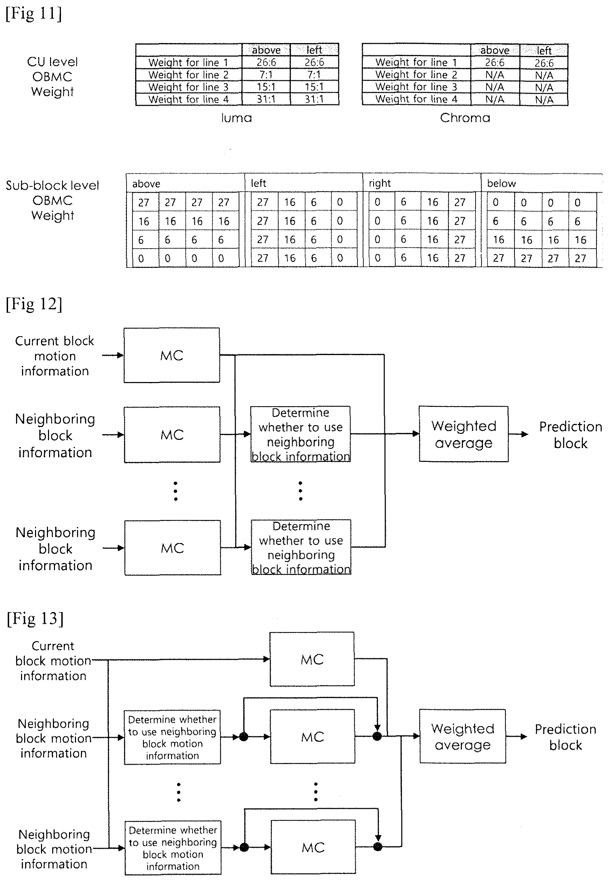

FIG. 11 illustrates a table in which a weight is defined according to an embodiment of the present disclosure.

A weight in the present disclosure may be determined based on a location of an adjacent block and a color component (whether it is a luminance component or a chrominance component) of a current block. For example, when OBMC in the unit of a CU is performed, a current sub-block is a block including an upper boundary of the current block, and in the case of a luminance component block, a weight for a prediction block of the current sub-block may be configured to increase from the upper side to the lower side (referring to Case 1 in FIG. 9). In addition, when the OBMC in the unit of a CU is performed, the current sub-block is a block including a left boundary of the current block, and in the case of the luminance component block, the weight for the prediction block of the current sub-block may be configured to increase from the left side to the right side (referring to Case 2 in FIG. 9).

In addition, the weight in the present disclosure may be determined depending on whether a neighboring block of the current block (the sub-block of the current block) is a block for which reconstruction has been completed or a block on which only prediction has been performed. For example, when the neighboring block is the block on which reconstruction has been completed, a strong blocking phenomenon may occur, and thus filtering based on a high weight may be performed. That is, a weight for a portion of the neighboring block adjacent to the boundary of the current block may be configured to be higher than a weight for a prediction block of the current block. Conversely, since a boundary portion may be the characteristic of an image itself, the weight for the portion of the neighboring block adjacent to the boundary of the current block may be configured to be smaller than the weight for the prediction block of the current block. The decoder may identify whether the boundary portion is the characteristic of the image itself, through quantization parameter information of the current block and distribution of pixels around the boundary. When the boundary portion is the characteristic of the image itself, the decoder may apply the existing deblocking filtering method.

OBMC in the unit of a sub-block may be performed according to a predetermined block size (unit). For example, the decoder may perform OBMC on a sub-block having a 4x4 size. However, the units of sub-blocks for an affine mode, an sbTMVP mode, and an MP-DMVR mode may be different from each other. For example, the affine mode is processed in the unit of a 4x4 sub-block, the sbTMVP mode is processed in the unit of a 8x8 sub-block, the MP-DMVR mode is processed in the units of 8x8, 8x4, 4x8, and 4x4 sub-blocks, and thus motion information may be different for each unit. The OBMC has an effect of alleviating a blocking phenomenon at a block boundary caused by a motion difference between motion information of the current block and motion information of the neighboring block of the current block, and thus a sub-block unit for the OBMC is needed to be changed depending on each encoding mode. As an embodiment, since the sbTMVP mode has different pieces of motion information in the unit of an 8x8 sub-block, when the current block is encoded in the sbTMVP mode, the unit of a sub-block for sub-block OBMC processing may be 8x8. As another embodiment, since the MP-DMVR mode has different pieces of motion information in the unit of 8x8, 8x4, 4x8, and 4x4 sub-blocks, when the current block is encoded in the MP-DMVR mode, the unit of a sub-block for sub-block OBMC processing may be configured to be the same as the MP-DMVR processing unit.

The OBMC may be applied only when the motion information of the current block corresponds to unidirectional prediction. The OBMC may not be performed when there is no difference between the motion information of the current block and the motion information of the neighboring block of the current block. This may be to increase a bidirectional prediction effect through various motion information. That is, the decoder may selectively use a neighboring block, use motion information about multiple neighboring blocks, or use scaled motion information about another reference picture so that the decoder applies various motion information when performing the OBMC.

When the OBMC is performed, the decoder may selectively use a neighboring block of the current block. For example, when the OBMC for the A0 block of FIG. 9 is performed, the decoder may additionally use motion information of an Ne-AL block and an Ne-A1 block in addition to the motion information of the Ne-A0 block. The decoder may additionally use motion information about a block adjacent to the neighboring block of the current block.

The decoder may perform the OBMC by using another reference picture. For example, when the OBMC for the L2 block of FIG. 9 is performed, the decoder may use motion information of an Ne-L2 block scaled by reference picture 0 in addition to a reference block of reference picture 1. That is, the decoder may acquire a prediction block for the L2 block by performing weight-averaging of three prediction blocks (a prediction block acquired based on the motion information of the L2 block, a prediction block acquired based on the motion information of the Ne-L2 block, and a prediction block acquired based on the motion information of the scaled Ne-L2 block). In addition, the decoder may acquire a prediction block for the L2 block by performing weight-averaging of two prediction blocks (a prediction block acquired based on the motion information of the L2 block, and a prediction block acquired based on the scaled Ne-L2 block). In addition, the decoder may perform the OBMC by using only a reference picture used by the motion information of the L2 block. In this case, since there is only one reference picture, memory usage can be reduced.

An OBMC method may reduce a blocking phenomenon between blocks, but has a problem that afterimages such as a halo phenomenon may occur when the characteristic of the neighboring block of the current block is different from that of the current block. Since the halo phenomenon may occur due to different motions between different objects, the OBMC is not applied uniformly to all blocks, but application of the OBMC may be determined depending on the characteristic between neighboring blocks.

FIGS. 12 to 14 illustrate a method of selectively using a neighboring block when performing OBMC according to an embodiment of the present disclosure. MC in FIGS. 12 to 14 may refer to motion compensation.

Referring to FIG. 12, when OBMC is performed on a current block, the decoder may selectively use prediction blocks of neighboring blocks of the current block or apply different weights. The decoder may generate a prediction block for each of the neighboring blocks through motion information of the neighboring blocks of the current block, and then determine whether to use a corresponding neighboring block to acquire a final prediction block of the current block, based on the motion information of the neighboring blocks. Specifically, the decoder may use, for a weight average, only prediction blocks, which satisfy a specific condition, without using, for a weight average, all prediction blocks for each of the neighboring blocks generated to acquire the final prediction block of the current block. In this case, the specific condition may be a case where a cost between a prediction block acquired based on motion information of the current block and prediction blocks acquired based on the motion information of the neighboring blocks of the current block is within a predetermined value. That is, the decoder may use, for a weight average, only prediction blocks of neighboring blocks corresponding to the cost within the predetermined value. Alternatively, the decoder may configure a higher weight for a prediction block (a main prediction block) of a neighboring block corresponding to the cost within the predetermined value compared to other neighboring blocks, and configure a lower weight than that of the main prediction block for other neighboring blocks. In this case, the predetermined value may be the size of the current block (the horizontal size of the current block or the vertical size of the current block) or the number of pixels of the current block, and the cost may be a pixel-based cost. That is, the decoder may determine a neighboring block to be used for the OBMC, based on a similarity between the current block and the neighboring blocks of the current block.

Referring to FIG. 13, when the OBMC is performed on the current block, the decoder may consider the characteristic of the motion information of the neighboring blocks of the current block. The decoder may determine whether to acquire prediction blocks of the neighboring blocks or a weight to be configured, through the characteristic of the neighboring blocks of the current block. The decoder may compare a motion difference between the motion information of the current block and the motion information of the neighboring blocks, and when the motion difference is within (or equal to or greater than) a predetermined value, acquire a prediction block of a corresponding neighboring block, based on the motion information of the neighboring block. Further, the decoder may acquire a final prediction block for the current block by performing weight-averaging of the acquired prediction block and the prediction block of the current block. In this case, the predetermined value is a value which is changed depending on motion resolution information of the current block, and may be a positive integer.

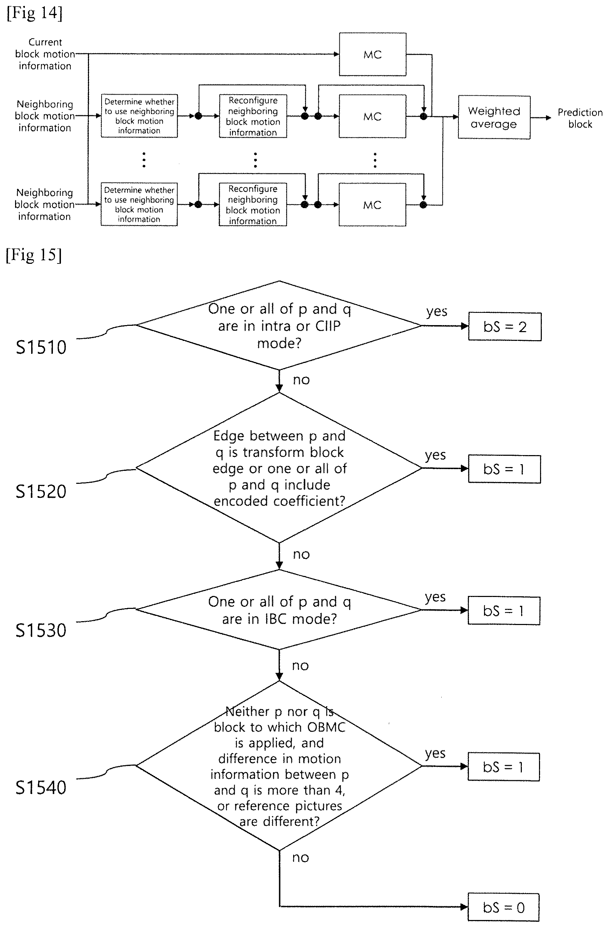

Referring to FIG. 14, when the OBMC is performed on the current block, the decoder may reconfigure motion information in consideration of the characteristic of the motion information of the neighboring blocks of the current block. As described above through FIG. 13, the decoder may compare a motion difference between the motion information of the current block and the motion information of the neighboring blocks, and when the motion difference is within (or equal to or greater than) a predetermined value, acquire a prediction block of a corresponding neighboring block, based on the motion information of the neighboring block. In this case, if the motion information difference between the neighboring blocks and the current block is not within (or equal to or greater than) the predetermined value, the decoder may reconfigure the corresponding motion information as new motion information. In this case, the new motion information may be reconfigured by using motion information adjacent to the neighboring blocks or motion information of temporal neighboring blocks located at the same location in a corresponding picture. For example, after separating the motion information of the neighboring blocks into motion information in horizontal and vertical directions, a middle value of the motion information in the horizontal direction and a middle value of the motion information in the vertical direction may become new motion information. The decoder may acquire a final prediction block for the current block by performing weight-averaging of a prediction block acquired based on the motion information of the current block, prediction blocks acquired based on the existing motion information of the neighboring blocks, and prediction blocks acquired based on the new motion information. The existing motion information of the neighboring blocks may be motion information of a neighboring block for which the above-described motion information difference is within (or equal to or greater than) a predetermined value. In this case, the predetermined value is a value which is changed depending on motion resolution information of the current block, and may be a positive integer.

In addition, when the neighboring blocks of the current block are not available or the neighboring blocks are encoded in an intra mode, the decoder may derive new replacement motion information and use the same to generate a prediction block. That is, the decoder may derive TMVP motion information about a current sub-block in advance, and then, when at least one unavailable neighboring block occurs, generate a prediction sub-block by using TMVP motion and apply weight-based OBMC. The new replacement motion information may be reconfigured by using motion information adjacent to the neighboring blocks or motion information of temporal neighboring blocks located at the same location in a corresponding picture. For example, the decoder may separate the motion information of the neighboring blocks into motion information in horizontal and vertical directions, and then reconfigure a middle value of the motion information in the horizontal direction and a middle value of the motion information in the vertical direction as new motion information.

FIG. 15 illustrates a method of determining a strength of deblocking filtering when performing OBMC, according to an embodiment of the present disclosure.

p and q in FIG. 15 may be a p block including a p pixel at a first location and a q block including a q pixel at a second location. The p block and the q block may be blocks on which deblocking filtering is performed. For example, when deblocking filtering is performed on a boundary between sub-blocks of a coding block, the p block and the q block may be sub-blocks of the coding block including the boundary. In addition, when deblocking filtering is performed on the boundary between the sub-blocks of the coding block and neighboring blocks of the coding block, the p block may be a neighboring block of the coding block, and the q block may be a sub-block (a sub-block including the boundary of the coding block) of the coding block.

Referring to FIG. 15, the decoder may identify whether an encoding mode for at least one block among the p block and the q block is an intra mode or a CIIP mode (S1510). As a result of the step S1510, when the encoding mode for at least one block is the intra mode or the CIIP mode, the decoder may configure a bS value indicating a filtering strength for a current block to be 2. As a result of the step S1510, when the encoding mode for at least one block is not the intra mode and the CIIP mode, the decoder may identify whether an edge between the p block and the q block is a transform block edge or whether at least one of the p block and the q block includes an encoded coefficient (S1520). As a result of the step S1520, when the edge between the p block and the q block is the transform block edge or at least one of the p block and the q block includes the encoded coefficient, the decoder may configure the bS value to be 1. As a result of the step S1520, when the edge between the p block and the q block is not the transform block edge, and at least one of the p block and the q block does not include the encoded coefficient, the decoder may identify whether an IBC mode is applied to at least one block among the p block and the q block (S1530). As a result of the step S1530, when the IBC mode is applied to the at least one block, the decoder may configure the bS value to be 1. As a result of the step S1530, when the IBC mode is not applied to the at least one block, the decoder may identify whether neither the p block nor the q block is a block to which OBMC is applied, and a difference between motion information of the p block and motion information of the q block is 4 or more, or a reference picture of the p block and a reference picture of the q block are different from each other (S1540). As a result of the step S1540, when neither the p block nor the q block is the block to which the OBMC is applied, and the difference between the motion information of the p block and the motion information of the q block is 4 or more, or the reference picture of the p block and the reference picture of the q block are different from each other, the decoder may configure the bS value to be 1. As a result of the step S1540, when at least one of the p block and the q block is the block to which the OBMC is applied, and the difference between the motion information of the p block and the motion information of the q block is 4 or more, or the reference picture of the p block and the reference picture of the q block are not different from each other, the decoder may configure the bS value to be 0. The larger the bS value, the greater the strength of deblocking filtering. If the bS value is "2", strong filtering may be performed, if the bS value is "1", weak filtering may be performed, and if the bS value is "0", filtering may not be performed. In addition, strong filtering may change more than a predetermined number of pixel values around a boundary between the p block and the q block through filtering, and weak filtering may change pixel values less than the predetermined number. The predetermined number may be an integer and may be 6. That is, the decoder may not perform deblocking filtering on a boundary of the current block if the OBMC has been performed on at least one block among neighboring blocks of the current block. This is because the OBMC method has an effect of alleviating a blocking phenomenon caused by a motion difference between blocks.

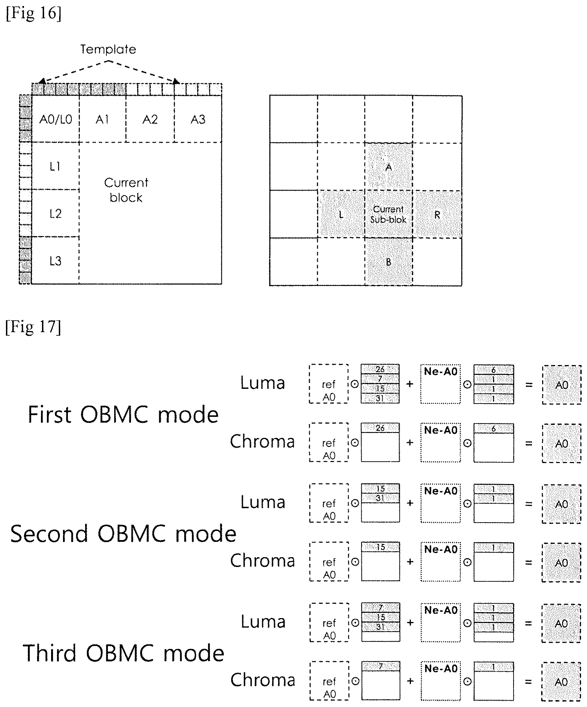

FIG. 16 illustrates a method of configuring a template for performing OBMC, according to an embodiment of the present disclosure.

Referring to FIG. 16, the decoder may determine whether to perform (apply) OBMC to a current block (coding block) based on a template. Hereinafter, a method of configuring a template by using neighboring blocks (pixels) adjacent to a current block according to an embodiment of the present disclosure will be described.

Whether to perform OBMC may be determined in the unit of a coding block, and an encoder may generate a bitstream including information related to whether to perform the OBMC. The decoder may parse a bitstream to determine whether the OBMC is performed on the current block. When the OBMC is applied to the current block, the OBMC may be applied to all sub-blocks (A0/L0, A1, A2, A3, L1, L2, and L3 blocks in FIG. 16) including a boundary of the current block. In this case, since each sub-block has a different characteristic, the decoder may determine whether the OBMC is applied to each sub-block.

Since the OBMC method uses motion information of a neighboring block of the current block, the decoder may determine whether to perform the OBMC on the current block (each sub-block of the current block), based on the similarity between the current block and the neighboring block of the current block. In addition, the decoder may determine the weight and the length of filtering for the OBMC applied to each sub-block, based on the similarity between the current block and the neighboring block of the current block. Specifically, the decoder may determine whether to perform OBMC for each sub-block, and the weight and the length of filtering for the OBMC, based on at least one of a difference between motion information of the current block and the motion information of the neighboring block of the current block, motion resolution information of the current block, motion resolution information of the neighboring block of the current block, prediction direction information (e.g., L0 prediction, L1 prediction, and bidirectional prediction) of the current block, the horizontal length of the current block, the vertical length of the current block, the product of the horizontal and vertical lengths of the current block, and an encoding mode (e.g., a merge mode, an affine mode, an sbTMVP mode, etc.) of the current block.

In this case, the weight and the length of filtering for the OBMC may also be applied to a prediction sample. The weight and the length of filtering applied to a sample predicted through motion information of a current sub-block may be the same as or different from the weight and the length of filtering applied to a sample predicted through motion information of a block adjacent to the current sub-block. For example, the OBMC may be performed on a neighboring block at the upper (or left) side of the current block. In this case, when the length of filtering applied to the sample predicted through the motion information of the current sub-block is 3 pixel lines (or 3 pixel columns), the length of filtering applied to the sample predicted through the motion information of the block adjacent to the upper (or left) side of the current sub-block may also be configured to be 3 pixel lines (or 3 pixel columns). In this case, when the length of OBMC filtering applied to the sample predicted through the motion information of the current sub-block is 3 pixel lines, a weight for each pixel line (or a weight for each pixel column) may be configured to be "7, 15, 31". In addition, the length of OBMC filtering applied to the sample predicted through the motion information of the block adjacent to the upper (or left) side of the current sub-block may be configured to be 3 pixel lines (or 3 pixel columns), and a weight for each pixel line (or a weight for each pixel column) may be configured to be "1, 1, 1".

Referring to FIG. 16, the decoder may determine whether the OBMC is performed on the current block, based on a template. First, the decoder may configure a template including pixels of a reconstructed block adjacent to the current block, and for convenience of description, this template may be referred to as a reference template. The width of an upper template may be determined based on the horizontal size of each sub-block, and the height of the upper template may be a preconfigured size. The height of a left template may be determined based on the vertical size of each sub-block, and the width of the left template may be a preconfigured size. The preconfigured size is a natural number and may be 1. In this case, the upper template for each sub-block may vary based on the size of a sub-block, and when the size of the sub-block is 4x4, the size of the upper template may be 4x1. Next, the decoder may calculate three costs for each sub-block. A first cost (Cost 1) may be obtained based on the motion information of the current sub-block, a second cost (Cost 2) may be obtained based on the motion information of the block adjacent to the current sub-block, and a third cost (Cost 3) may be obtained based on the motion information of the current sub-block and the motion information of the block adjacent to the current sub-block. The cost described in the present disclosure may be obtained through pixel-unit sum of absolute differences (SAD) or mean-removed SAD (MRSAD) calculation between samples obtained by predicting an area corresponding to a template by using motion information of each sub-block and the template. Specifically, the first cost may be obtained based on a template (reference template) including pixels of a reconstructed block adjacent to the current sub-block and a first reference template predicted by projecting the motion information of the current sub-block onto the reference template. The second cost may be obtained based on the reference template and a second reference template predicted by projecting motion information of a block adjacent to the current sub-block onto the reference template. The third cost may be obtained based on the first reference template and the second reference template. Alternatively, the third cost may be obtained based on the reference template and a prediction sample obtained by performing weight-averaging of a sample obtained by predicting an area corresponding to a template by using the motion information of the current sub-block and a sample obtained by predicting an area corresponding to a template by using the motion information of the block adjacent to the current sub-block. In this case, a weight is a preconfigured value and may be a decimal value of 0 or more. For example, the preconfigured value may be 1/4, 3/4, etc. Next, the decoder may derive whether to perform OBMC for the current sub-block, the length of filtering for the OBMC, and the weight, based on the obtained cost. For example, if Cost 1 (first cost) is the smallest among the obtained costs, the OBMC may not be performed on a corresponding sub-block. In addition, if Cost 1 is the smallest among the obtained costs, a second OBMC mode may be performed on a corresponding sub-block, or a new OBMC mode having a filtering length smaller than the filtering length for the second OBMC mode may be performed. In addition, if a value of "(Cost 2 + (Cost 2 » 2) + (Cost 2 >> 3))" is less than or equal to Cost 1, a first OBMC mode may be performed on a corresponding sub-block. Herein, "X>>Y" refers to a right shift operation, and a quotient obtained by dividing X by 2 as many times as Y may be output. If Cost 1 is less than or equal to Cost 2, the second OBMC mode may be performed on a corresponding sub-block. Conversely, if Cost 1 is greater than Cost 2, a third OBMC mode may be performed on a corresponding sub-block.

FIG. 17 illustrates a method of generating a prediction block according to each OBMC mode according to an embodiment of the present disclosure.

The first OBMC mode, the second OBMC mode, and the third OBMC mode described in the present disclosure will be described with reference to FIG. 17.

An ref A0 block and an Ne-A0 block in FIG. 17 may be blocks having a 4x4 size. The ref A0 in FIG. 17 may be a current sub-block and may be the same as the ref A0 block in FIG. 9. The Ne-A0 block in FIG. 17 is a neighboring block adjacent to the upper side of a current sub-block and may be the same as the Ne-A0 block in FIG. 9. Referring to FIG. 17, numbers shown next to the ref A0 block and the Ne-A0 block may indicate a weight and a length of OBMC filtering. The decoder may perform weight-averaging of a prediction block ref A0 and the Ne-A0 block to acquire a current sub-block A0 to which OBMC filtering is applied. The first OBMC mode, the second OBMC mode, and the third OBMC mode may be applied to each of a luminance component block and a chrominance component block. When the first OBMC mode is applied to the luminance component block, the first OBMC mode may be a mode in which a current luminance component sub-block is obtained by performing weight-averaging of 4 pixel lines of the current luminance component sub-block and 4 pixel lines of a luminance component block adjacent to the upper side of the current sub-block. When the second OBMC mode is applied to the luminance component block, the second OBMC mode may be a mode in which a current luminance component sub-block is obtained by performing weight-averaging of 2 pixel lines of the current luminance component sub-block and 2 pixel lines of a luminance component block adjacent to the upper side of the current sub-block. When the third OBMC mode is applied to the luminance component block, the third OBMC mode may be a mode in which a current luminance component sub-block is obtained by performing weight-averaging of 3 pixel lines of the current luminance component sub-block and 3 pixel lines of a luminance component block adjacent to the upper side of the current sub-block. When the first OBMC mode, the second OBMC mode, and the third OBMC mode are applied to the chrominance component block, the first OBMC mode, the second OBMC mode, and the third OBMC mode may be modes in which a current chrominance component sub-block is obtained by performing weight-averaging of 1 pixel line of the current chrominance component sub-block and 1 pixel line of a chrominance component block adjacent to the upper side of the current sub-block. For example, when the first OBMC mode is applied to the luminance component block, 4 pixels of the first pixel line of the luminance component block of the ref A0 block are multiplied by a weight of "26", 4 pixels of the second pixel line are multiplied by a weight of "7", 4 pixels of the third pixel line are multiplied by a weight of "15", and 4 pixels of the fourth pixel line are multiplied by a weight of "31", so that a weighted "ref A0" luminance component prediction block may be generated. In addition, 4 pixels of the first pixel line of the Ne-A0 block are multiplied by a weight of "6", 4 pixels of the second pixel line are multiplied by a weight of "1", 4 pixels of the third pixel line are multiplied by a weight of "1", and 4 pixels of the fourth pixel line are multiplied by a weight of "1", so that a weighted "Ne-A0" luminance component prediction block may be generated. The decoder may generate a final prediction block for A0 by performing weight-averaging of a weighted "ref A0" prediction block and a weighted *Ne-A0" prediction block. The decoder may apply the second OBMC mode and the third OBMC mode in the same method to generate a final prediction block for A0.

Whether to perform template-based OBMC may be determined based on the cost obtained by using motion information of the current sub-block and motion information of a neighboring block of the current sub-block. In addition, as described above with reference to FIG. 16, the template-based OBMC may be performed on only a sub-block which includes a boundary of a current block. The decoder may determine whether to apply OBMC for each sub-block unit. The template-based OBMC may not be applied to a sub-block which does not include the boundary of the current block. When the OBMC is applied to at least one sub-block among sub-blocks which include the boundary of the current block, the OBMC may also be applied to a sub-block which does not include the boundary of the current block. In addition, when an encoding mode of the current block is one of an affine mode, a DMVR (or multi-pass DMVR) mode, a TM Merge mode, an MMVD mode, an affine MMVD mode, a BM merge mode, and a GPM mode, the OBMC may be applied to a sub-block which does not include the boundary of the current block.

Whether the OBMC is applied to the current block may be determined by comparing the image quality and bit amount when the OBMC is applied to the current block with the image quality and bit amount when the OBMC is not applied to the current block. That is, by comparing the image quality and bit amount when the OBMC is applied to the current block with the image quality and bit amount when the OBMC is not applied to the current block, if a compression efficiency is good when the OBMC is applied to the current block, the OBMC may be applied, and if the compression efficiency is not good, the OBMC may not be applied. The encoder may generate a bitstream which includes information (e.g., a syntax element) about whether the OBMC is applied to the current block. The decoder may determine whether to apply the OBMC to the current block by parsing the information about whether the OBMC is applied to the current block from the bitstream. When the OBMC is applied to the current block as a result of the parsing, the decoder may divide the current block into multiple sub-blocks and then perform the template-based OBMC for each sub-block. In this case, whether the OBMC is performed for each sub-block may be determined. When the OBMC is not applied to the current block as a result of the parsing, the template-based OBMC may not be performed on all sub-blocks of the current block.

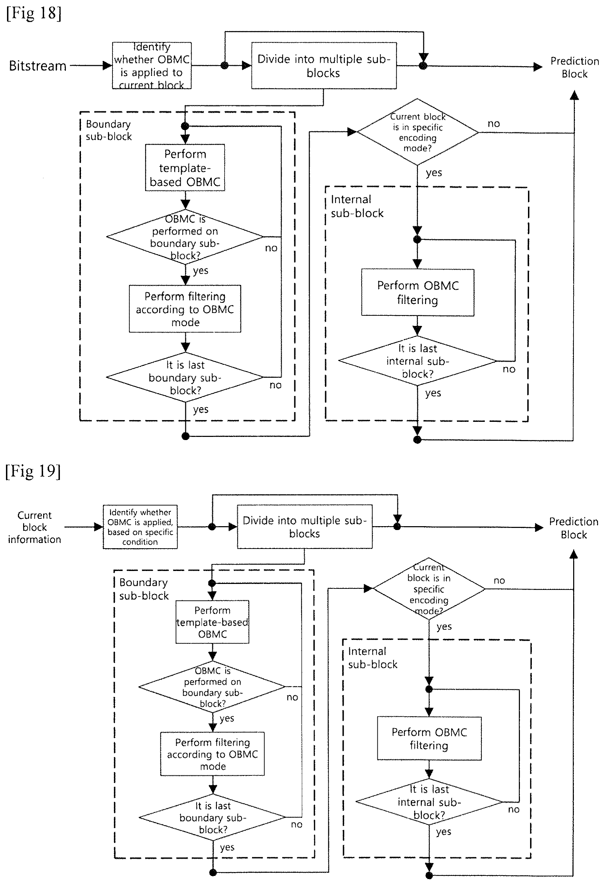

FIGS. 18 to 20 illustrate a process of performing OBMC according to an embodiment of the present disclosure.

Referring to FIG. 18, the decoder may parse a bitstream to identify whether OBMC is applied to a current block. When the OBMC is applied to the current block, the decoder may divide the current block into multiple sub-blocks. In this case, different OBMCs may be applied to sub-blocks (boundary sub-blocks) which include a boundary of the current block and sub-blocks (internal sub-blocks) which do not include the boundary of the current block, respectively. First, the decoder may determine whether OBMC is applied to a sub-block including the boundary of the current block and an OBMC mode to be applied, based on a template. When the OBMC is applied to the sub-block including the boundary of the current block, the decoder may perform filtering on the corresponding sub-block according to the determined OBMC mode. Further, when the OBMC has been applied to all sub-blocks including the boundary of the current block, the decoder may identify whether the OBMC is applied to a sub-block which does not include the boundary of the current block. In this case, whether the OBMC is applied to the sub-block which does not include the boundary of the current block may be determined based on an encoding mode of the current block. Specifically, when the current block is encoded in one of Affine, DMVR, TM Merge, MMVD, affine MMVD, BM merge, AMVP-merge, and GPM modes, the OBMC may be performed on the sub-block which does not include the boundary of the current block. When the OBMC is performed on the sub-block which does not include the boundary of the current block, the decoder may perform OBMC filtering on the corresponding sub-block. Further, the decoder may perform OBMC filtering on all sub-blocks which do not include the boundary of the current block. The decoder may perform OBMC filtering on the all sub-blocks which do not include the boundary of the current block, so as to generate a prediction block to which OBMC filtering is applied.

The decoder may primarily determine whether OBMC is applied to the current block from a bitstream, and then secondarily determine whether the OBMC is applied, based on a template for each sub-block of the current block. When information about whether the OBMC is applied to the current block is included in the bitstream and signaled, there may be a problem that a bit amount increases. Therefore, the bitstream does not include the information about whether the OBMC is applied to the current block, and the decoder may reduce a bit amount by determining whether the OBMC is performed for each sub-block, based on the template.

Hereinafter, with reference to FIG. 19, a method will be described in which a bitstream does not include information about whether OBMC is applied to a current block and the decoder determines whether OBMC is performed for each sub-block, based on a template.

Referring to FIG. 19, the decoder may acquire information about a current block and identify whether OBMC is applied to the current block, based on specific conditions. When the OBMC is applied to the current block, the decoder may divide the current block into multiple sub-blocks and apply the OBMC to each sub-block, and a specific process is the same as the process described with reference to FIG. 18. In this case, the specific conditions are as follows. i) When horizontal and vertical sizes of the current block are smaller than a threshold value, or when the product of the horizontal and vertical sizes of the current block is smaller than the threshold value, OBMC may not be applied to the current block. In this case, the threshold value is a positive integer and may be 8 or 32. ii) When an encoding mode of the current block is one of an intra mode, an IBC mode, a TMP mode, an LIC mode, and a BCW mode, OBMC may not be applied to the current block. iii) When an encoding mode of the current block is one of merge, Affine, DMVR, TM Merge, MMVD, affine MMVD, BM merge, AMVP-merge, and GPM modes, OBMC may be applied to the current block. Whether OBMC is applied to each of the sub-blocks (boundary and internal sub-blocks) of the current block may be determined based on a template.

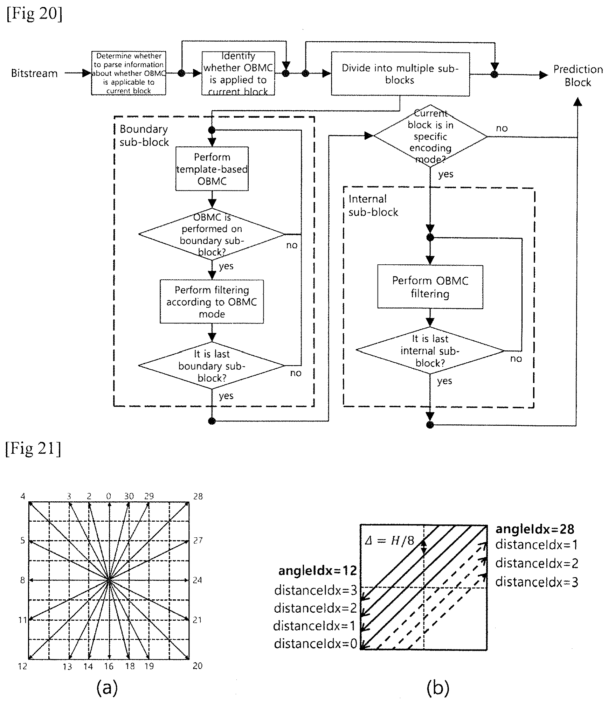

Referring to FIG. 20, the decoder may acquire a bitstream including information about whether OBMC is applicable to a current block. The decoder may determine whether to parse the information about whether the OBMC is applicable to the current block, based on specific conditions. When the OBMC is applicable to the current block as a result of the parsing, the decoder may identify whether the OBMC is applied to the current block. Further, when the OBMC is applied to the current block, the decoder may apply the OBMC to each sub-block of the current block by using the method described with reference to FIG. 18. In this case, the specific conditions are the same as the conditions described above with reference to FIG. 19.

Template-based OBMC may be applied to each of a luminance component block and a chrominance component block. That is, whether the OBMC is applied may be determined for each luminance component block and each chrominance component block. Therefore, in relation to whether the OBMC is applied to a chrominance block, whether the OBMC is applied may be configured for each chrominance sub-block, based on a cost through a chrominance block adjacent to a current chrominance block. Alternatively, when the OBMC is applied to a luminance block through a template-based OBMC method, the OBMC may be configured to be applied to a chrominance block as well.

In addition, the template-based OBMC may be applied to sub-blocks which include a boundary of the current block and sub-blocks which do not include the boundary of the current block. Whether the OBMC is applied to the sub-blocks which do not include the boundary of the current block may be determined depending on the number of sub-blocks to which the OBMC is applied among the sub-blocks which include the boundary of the current block. For example, when the number of sub-blocks to which the OBMC is applied among the sub-blocks including the boundary of the current block is equal to or greater than a predetermined value, the OBMC may be applied to the sub-blocks which do not include the boundary of the current block. Conversely, when the number of sub-blocks to which the OBMC is applied among the sub-blocks including the boundary of the current block is smaller than the predetermined value, the OBMC may not be applied to the sub-blocks which do not include the boundary of the current block. In this case, the predetermined value is a positive integer and may be 4. In addition, when the OBMC is not applied to any one of the sub-blocks including the boundary of the current block, the OBMC may not be applied to the sub-blocks which do not include the boundary of the current block.

FIG. 21 illustrates a GPM mode according to an embodiment of the present disclosure.

Case (a) of FIG. 21 illustrates an angle in a GPM mode, and case (b) of FIG. 21 illustrates a distance in a GPM mode. A GPM mode may be a method in which a current block is divided into two areas (a first area and a second area) based on a reference line and each of the first area and the second area is encoded. Specifically, inter prediction, an intra prediction mode, and intra and inter prediction may all be used for each of the first area and the second area. That is, each of the first area and the second area may be encoded in the intra prediction or inter prediction mode. The first area and the second area may be encoded in the same mode or may be encoded in different modes. For example, when the first area is encoded in the inter mode, OBMC may be applied to the current block based on motion information about the first area.

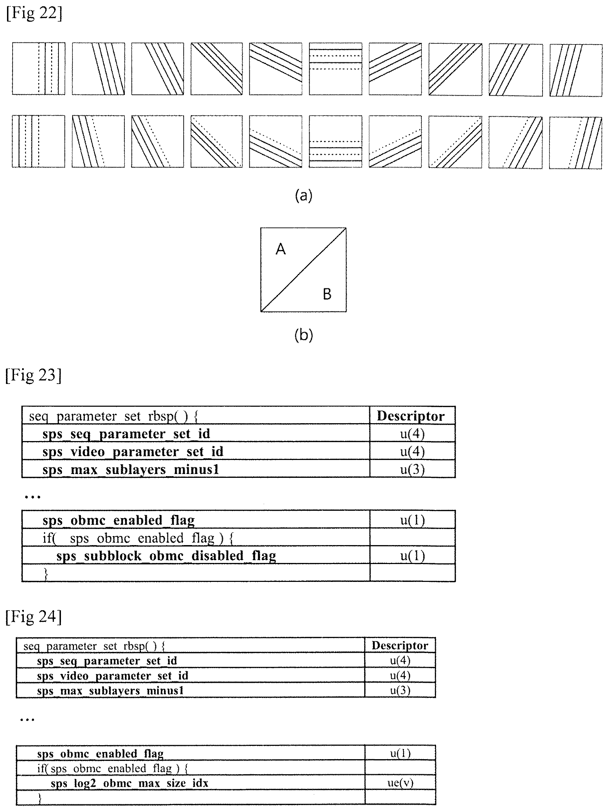

FIG. 22 illustrates a method of dividing a GPM mode according to an embodiment of the present disclosure.

Case (a) of FIG. 22 illustrates various embodiments in which a current block is divided in a GPM mode. The solid line in case (a) of FIG. 22 represents a dividing reference line. The dotted line in case (a) of FIG. 22 represents a reference line which overlaps with that of another dividing method. When the current block is divided, an angle may be the same, but a division form may vary depending on a distance. For example, in the first drawing in case (a) of FIG. 22, the current block may be divided into two areas based on a reference line in a vertical direction (same angle), and there may be four reference lines (dotted line and solid line) depending on a distance. The current block may be divided into two areas based on one reference line among the four reference lines. Case (b) of FIG. 22 illustrates an embodiment of a current block divided according to a GPM mode. Referring to case (b) of FIG. 22, the current block may be divided into area A and area B based on an upper right diagonal line. In this case, neighboring blocks adjacent to the left and upper sides of the area A may be blocks for which reconstruction has been completed. Therefore, OBMC may be applied to the area A based on motion information of the neighboring blocks. On the other hand, neighboring blocks adjacent to the right and lower sides of the area B may be blocks for which reconstruction has not been completed. Therefore, since there is no motion information about the neighboring blocks, the OBMC may not be applied to the area B. When the divided area is adjacent to neighboring blocks adjacent to the left and upper sides of the current block, the OBMC may be applied to the corresponding divided area, and when the divided area is not adjacent to the neighboring blocks adjacent to the left and upper sides of the current block, the OBMC may not be applied to the corresponding divided area. That is, whether to apply the OBMC may be determined depending on a division form and a location of an area according to a GPM mode. In addition, one of the two areas divided according to the GPM mode may be encoded in an intra mode. In this case, the OBMC may not be applied to an area encoded in the intra mode since there is no motion information. In addition, when one of the two areas is encoded in the intra mode, an OBMC process in the unit of a sub-block may not be performed, and syntax related to the OBMC may not be parsed. In the GPM mode, when both the two divided areas are encoded in the intra mode, the OBMC may not be applied since there is no motion information, and syntax (obmc_flag) related to the OBMC may not be parsed. For example, when the GPM mode is applied to the current block and at least one of the two divided areas is encoded in the intra mode, a value of obmc_flag may be inferred to be "0". If the value of obmc_flag is 0, it may mean that an obmc mode is not applied to the current block, and if the value of obmc_flag is 1, it may mean that the obmc mode is applied to the current block.

Whether the OBMC is applied to the current block may be determined depending on an encoding mode of the current block. For example, when the current block is encoded in a merge mode, the OBMC may be implicitly applied to the current block. When the current block is encoded in an intra TMP mode or an IBC mode, the OBMC may not be implicitly applied to the current block. In addition, when the current block is not encoded in the merge mode, the encoder may generate a bitstream including information about whether the OBMC is applied to the current block. The decoder may parse the information about whether the OBMC is applied to the current block, the information being included in the bitstream, so as to determine whether the OBMC is applied to the current block.

In addition, whether OBMC in the unit of a sub-block is performed may be determined depending on the encoding mode of the current block. When the current block has been encoded in an affine mode or an sbTMVP mode, the OBMC may be applied to a sub-block of the current block. In addition, whether the OBMC is applied to the sub-block of the current block may be determined based on specific conditions. That is, the OBMC may be applied to the sub-block of the current block when at least one of the specific conditions is satisfied. The specific conditions may include 1) when a syntax element indicating whether a DMVR mode signaled in SPS is activated is true, 2) when bidirectional prediction is applied to the current block, 3) when reference pictures are in different directions in time order with reference to a current picture, and a POC distance between the current picture and each reference picture is the same, 4) when the current block is not encoded in an Affine mode, 5) when the current block is not encoded in an sbTMVP mode, 6) when the current block is not encoded in a CIIP mode, 7) when the current block is not encoded in an MMVD mode, 8) when the current block is encoded in a merge mode or an AMVP-merge mode, 9) when a weight parameter value for a luminance component and a chrominance component derived from a reference picture of the current block is 0, 10) when the current block is not encoded in a TM merge mode, 11) when the current block is not encoded in a BM merge mode, 12) when a motion vector difference between motion candidates in a motion candidate list and a motion candidate of the current block is within a predetermined value, and 13) when a prediction direction of the current block is not changed to unidirectional prediction by TM. In this case, the predetermined value of 12) may be a value determined according to the size of the current block. For example, when the number of pixels in the current block is less than 64, the predetermined value may be 4, when the number of pixels in the current block is less than 256, the predetermined value may be 8, and when the number of pixels in the current block is equal to or greater than 256, the predetermined value may be 16.

In addition, whether OBMC is applied to the current block and whether OBMC in the unit of a sub-block of the current block is performed may be determined based on whether an MHP mode is applied to the current block. The MHP mode is a method of performing weight prediction based on additional motion information in addition to unidirectional and bidirectional motion information during intra prediction. Therefore, since it has high complexity, when the MHP mode is applied to the current block, the OBMC may not be applied to the current block or a sub-block of the current block. In addition, when the MHP mode is applied to the current block, the decoder may not parse a syntax element related to the OBMC. For example, when the MHP mode is applied to the current block, the value of obmc_flag may be inferred to be 0. Conversely, when the MHP mode is applied to the current block to improve performance, the value of obmc_flag may be inferred to be 1.

Whether OBMC is applied to the current block and whether OBMC in the unit of a sub-block of the current block is performed may be determined depending on whether an AMVP-merge mode is applied to the current block. AMVP-merge is a mode applied to a bidirectional prediction block and is a method of encoding motion information in L0 and L1 directions by using both AMVP and merge. That is, an AMVP mode may be applied to an L0 direction, and a merge mode may be applied to an L1 direction. Conversely, the merge mode may be applied to the L0 direction, and the AMVP mode may be applied to the L1 direction. When the current block is encoded in the merge mode, the OBMC is applied to the current block, and the OBMC in the unit of a sub-block of the current block may be implicitly configured to be performed. In addition, BDOF in the unit of a sub-block may be applied to blocks encoded in an AMVP-merge mode. Therefore, when the AMVP-merge mode is applied to the current block, the OBMC is applied to the current block, and the OBMC in the unit of a sub-block of the current block may be implicitly configured to be performed. When the AMVP-merge mode is applied to the current block, the value of obmc_flag may be inferred to be 1.

Whether OBMC is applied to the current block and whether OBMC in the unit of a sub-block of the current block is performed may be determined depending on whether a skip or MMVD skip mode is applied to the current block. The skip mode is a mode in which there is no information about remaining blocks in blocks encoded in the merge mode. The MMVD skip mode is a mode in which there is no information about remaining blocks in blocks encoded in the MMVD mode. The skip or MMVD skip mode is an effective mode for an area where motion is static, such as the background. In the area where motion is static, since a change in motion between neighboring blocks of the current block is low, it may be more effective not to perform OBMC. Therefore, when the skip or MMVD skip mode is applied to the current block, the OBMC may not be implicitly applied to the current block, and the OBMC in the unit of a sub-block of the current block may not be performed. The decoder may not parse a syntax element related to the OBMC and may infer a value of the syntax element as a predetermined value. For example, the value of obmc_flag may be inferred to be 0.

Whether OBMC is applied to the current block and whether OBMC in the unit of a sub-block of the current block is performed may be determined depending on whether PROF or BDOF is applied to the current block. The PROF is a method of correcting a prediction pixel based on a spatial gradient between pixels in a prediction block, and has a similar effect to the OBMC. Therefore, when the PROF is applied to the current block, the OBMC may not be implicitly applied to the current block. In addition, the OBMC in the unit of a sub-block of the current block may not be performed implicitly. In this case, the value of obmc_flag may be inferred as a value indicating that the OBMC in the unit of a sub-block of the current block is not performed. For example, the value of obmc_flag may be inferred to be 0 (or 1). The BDOF is a method used for bidirectional motion prediction, uses temporal correlation between reference blocks, and may be motion-corrected for each sub-block. Therefore, when the BDOF is applied to the current block, the OBMC may be implicitly applied to the current block, and the OBMC in the unit of a sub-block of the current block may also be implicitly performed. In this case, the value of obmc_flag may be inferred as a value indicating that the OBMC in the unit of a sub-block of the current block is performed. For example, the value of obmc_flag may be inferred to be 1 (or 0).

Whether OBMC is applied to the current block and whether OBMC in the unit of a sub-block of the current block is performed may be determined depending on whether LIC is applied to the current block. The LIC is a method of compensating for a luminance change between blocks and a method of deriving a linear model by using neighboring pixels adjacent to a current block and then compensating for luminance information of the current block through the linear model. After a luminance component is compensated for by the LIC, new reference blocks are weight-averaged by the OBMC, so that an effect of the LIC may be attenuated. Therefore, if the LIC is applied to the current block, the OBMC may not be applied to the current block, and the OBMC in the unit of a sub-block of the current block may not be performed. In this case, the value of obmc_flag may be inferred to be 0.

When the current block is encoded in the merge mode, a motion candidate list may be configured by using motion information of neighboring blocks spatially adjacent to the current block or neighboring blocks temporally adjacent to the current block. The encoder may determine an optimal motion candidate among motion candidates in the motion candidate list, and then generate a bitstream including index information about the optimal motion candidate. The decoder may determine a motion candidate for the current block by parsing the index information. In this case, the motion candidates included in the motion candidate list may be derived from non-adjacent neighboring blocks (neighboring blocks separated by a predetermined distance or more) in addition to the neighboring blocks adjacent to the current block. In this case, the predetermine distance is a value which is changed depending on the horizontal or vertical size of the current block, and may be a positive integer. For example, the predetermine distance may be 8. In this case, motion information derived from the neighboring blocks adjacent to the current block may include at least one of prediction direction information (e.g., L0 prediction, L1 prediction, and bidirectional prediction), a motion vector, BCW index information, LIC information, MHP information, and half-pixel MC application information. In this case, if the LIC is applied to a neighboring block which is not adjacent to the current block, the correlation with a luminance compensation value of the current block is low, whether the LIC is applied to the current block may be reconfigured based on the motion information derived from the neighboring block. That is, a motion information value in the motion candidates may be preconfigured according to the location and distance of the neighboring block and used as a motion candidate for the current block. For example, LIC information among motion information of motion candidates derived from the neighboring blocks which are not adjacent to the current block may be reconfigured so that the LIC is not applied. Alternatively, when the current block is encoded in the merge mode, the OBMC may be applied regardless of whether the LIC is applied. Alternatively, when the current block is not encoded in the merge mode and the LIC is applied, the OBMC may not be applied. Alternatively, when the LIC is applied to at least one block among the neighboring blocks or the current block, the OBMC may not be applied to the current block. This is a measure for eliminating a situation where blocks to which LIC is applied and blocks to which LIC is not applied are mixed among prediction blocks used for weight-averaging in the OBMC process.

The LIC is applied only when the current block correspond to unidirectional motion prediction. However, when the current block is encoded in the merge mode, the current block is mostly encoded with bidirectional motion prediction. However, when the current block is encoded in the merge mode, and motion information of a derived motion candidate corresponds to bidirectional prediction and indicates that the LIC is applied (or when a prediction direction of the current block is bidirectional prediction and the LIC is applied), both the LIC and the OBMC may not be performed. To solve this constraint situation, when the current block is encoded in the merge mode, the OBMC may be performed regardless of whether the LIC is applied. Alternatively, when the current block is encoded in the merge mode, and the motion information of the derived motion candidate corresponds to unidirectional prediction and indicates that the LIC is applied (or when the LIC is applied to the current block), the OBMC may not be performed. Alternatively, when the current block is not encoded in the merge mode and the LIC is applied, the OBMC may not be performed. Alternatively, in order to increase the effect of the OBMC, when the current block is encoded in the merge mode, and the motion information of the derived motion candidate corresponds to unidirectional prediction and indicates that the LIC is applied (or when the LIC is applied to the current block), the OBMC may be performed. In addition, when the current block is encoded in the merge mode, and the motion information of the derived motion candidate corresponds to bidirectional prediction and indicates that the LIC is applied (or when the LIC is applied to the current block), the OBMC may be performed. Alternatively, when the current block is encoded in the merge mode, the motion information of the derived motion candidate corresponds to unidirectional prediction and indicates that the LIC is applied (or when the LIC is applied to the current block), and a parameter value for performing the LIC is within a predetermined value, the OBMC may be performed.

Whether OBMC is applied to the current block and whether OBMC in the unit of a sub-block of the current block is performed may be determined depending on the size of the current block. Generally, a background area is encoded with a large-sized block. In the background area, a motion change between neighboring blocks of the current block is low, and thus it may be better for the OBMC not to be performed. Therefore, when the horizontal and vertical sizes of the current block are larger than a predetermined value, the OBMC is not implicitly applied to the current block, and the OBMC in the unit of a sub-block of the current block may also not be performed. In this case, the predetermined value is a positive integer and may be 64. For example, when the horizontal and vertical sizes of the current block are greater than 64, the OBMC is not applied to the current block, and the OBMC in the unit of a sub-block of the current block may also not be performed. Alternatively, when the horizontal and vertical sizes of the current block are smaller than 128, the OBMC may be applied to the current block. When the horizontal and vertical sizes of the current block are equal to or greater than 128, the OBMC is not be applied to the current block, and the OBMC in the unit of a sub-block of the current block may also not be performed. In addition, a syntax element related to the OBMC is not parsed and may be inferred as a fixed value. For example, when the horizontal and vertical sizes of the current block are greater than 64, the value of obmc_flag may be inferred to be 0.

Whether OBMC in the unit of a sub-block is performed may be determined depending on an encoding mode of the current block and whether OBMC is applied to the current block. The OBMC in the unit of a sub-block may not be effective for a specific image such as screen content. Therefore, a measure for controlling whether an OBMC method in the unit of a sub-block is activated in a specific image is required.

FIG. 23 illustrates a method of signaling information indicating whether OBMC in the unit of a sub-block is activated, according to an embodiment of the present disclosure.

Referring to FIG. 23, the decoder may parse sps_disabled_subblock_obmc_flag, based on sps_obmc_enabled_flag. Specifically, the decoder may parse sps_disabled_subblock_obmc_flag when a value of sps_obmc_enabled_flag is 1 (i.e., true). sps_obmc_enabled_flag may be a syntax element (flag) indicating whether OBMC is activated in a CLVS, and if the value of sps_obmc_enabled_flag is 1, indicate that the OBMC is activated in the CLVS, and if the value of sps_obmc_enabled_flag is 0, indicate that the OBMC is inactivated in the CLVS. If sps_obmc_enabled_flag is not parsed, the value of sps_obmc_enabled_flag may be inferred to be 0 (sps_obmc_enabled_flag equal to 1 specifies that the OBMC (Overlapped Block Motion Compensation) is enabled for the CLVS. sps_obmc_enabled_flag equal to 0 specifies that the OBMC (Overlapped Block Motion Compensation) is disabled for the CLVS. When sps_obmc_enabled_flag is not present, it is inferred to be equal to 0). sps_disabled_subblock_obmc_flag may be a syntax element indicating whether OBMC in the unit of a sub-block is deactivated, and if a value of sps_disabled_subblock_obmc_flag is 1, indicate that the OBMC in the unit of a sub-block is deactivated, and if the value of sps_disabled_subblock_obmc_flag is 0, indicate that the OBMC in the unit of a sub-block is activated. If sps_disabled_subblock_obmc_flag is not parsed, the value of sps_disabled_subblock_obmc_flag may be inferred to be 0 (sps_subblock_obmc_disabled_flag equal to 1 specifies that the OBMC in sub-block is disabled for the CLVS. sps_subblock_obmc_disabled_flag equal to 0 specifies that the OBMC in sub-block is enabled for the CLVS. When sps_subblock_obmc_disabled_flag is not present, it is inferred to be equal to 0). In other words, if the value of sps_disabled_subblock_obmc_flag is 1, it may mean that the OBMC is not performed on all sub-blocks of a current block. If the value of sps_disabled_subblock_obmc_flag is 0, it may mean that the OBMC can be performed on a sub-block of the current block, and whether the OBMC is performed on each sub-block may be determined based on an encoding mode of the current block, whether the OBMC is applied to the current block, etc. The syntax elements of FIG. 23 may be signaled (parsed) at an SPS level. Information (syntax element) indicating whether the above OBMC is applied can be signaled and parsed not only at the SPS level but also at the PPS level, Slice header level, Tile level, etc.

A bitstream may be configured by one or more coded video sequences (CVS), and one CVS may be encoded independently from other CVSs. Each CVS may be configured by one or more layers, and each layer may represent a specific image quality and a specific resolution, or represent a general image, a depth information map, and a transparency map. In addition, a coded layer video sequence (CLVS) may refer to a layer-wise CVS configured by consecutive PUs (in decoding order) within the same layer. For example, a CLVS may exist for a layer representing a specific image quality, and a CLVS may exist for a depth information map.

When the size of the current block is larger than a specific size, the OBMC may not be effective. Therefore, whether the OBMC is activated may be determined based on the size of the current block. In addition, the maximum CTU size may be changed depending on the resolution of an image, the maximum block size in which the OBMC may be activated may be determined depending on the size of the image.

FIG. 24 illustrates a method of signaling information indicating the maximum block size for activation of OBMC according to an embodiment of the present disclosure.

Referring to FIG. 24, sps_log2_obmc_max_size_idx may be parsed based on sps_obmc_enabled_flag. Specifically, the decoder may parse sps_log2_obmc_max_size_idx when a value of sps_obmc_enabled_flag is 1 (i.e., true). sps_log2_obmc_max_size_idx may be a syntax element indicating the maximum block size for which OBMC may be activated. In this case, the value of sps_log2_obmc_max_size _idx is an integer greater than 0 and may have a value of 0 to 2. If the value of sps_log2_obmc_max_size_idx is 0, the maximum block size may be 1/2 of the maximum CTU size. If the value of sps_log2_obmc_max_size_idx is 1, the maximum block size may be 1/4 of the maximum CTU size. If the value of sps_log2_obmc_max_size_idx is 2, the maximum block size may be 1/8 of the maximum CTU size. If sps_log2_obmc_max_size_idx is not parsed, the value of sps_log2_obmc_max_size_idx may be inferred to be 0. The syntax elements of FIG. 24 may be signaled (parsed) at an SPS level.

The current block may be divided into two areas according to a GPM mode, and blending may be applied to a boundary between the two areas. The blending may not be effective for a specific image such as screen content. Therefore, a method of activating blending in a GPM mode in a specific image is needed. The blending may have the same meaning as the OBMC described herein.

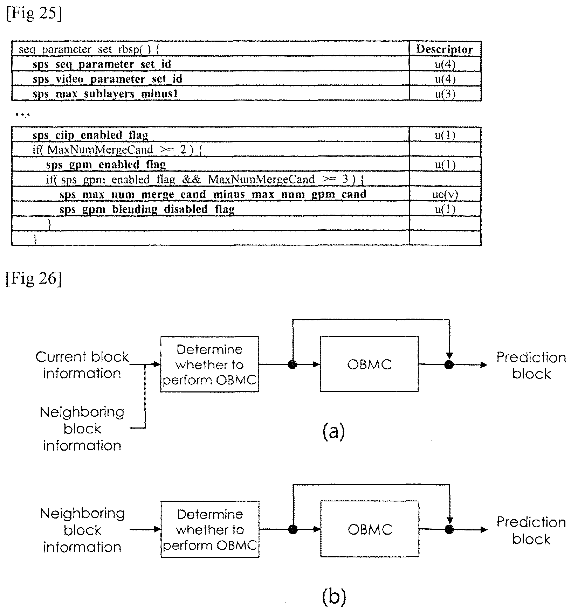

FIG. 25 illustrates a method of signaling information for activating blending in a GPM mode according to an embodiment of the present disclosure.

Referring to FIG. 25, the decoder may parse sps_gpm_blending_disabled_flag, based on sps_gpm_enabled_flag. Specifically, the decoder may parse sps_gpm__blending_disabled_flag when a value of sps_gpm_enabled_flag is 1 (i.e., true). sps_gpm_enabled_flag may be a syntax element (flag) indicating whether a GPM mode is activated in a CLVS, and if the value of sps_gpm_enabled_flag is 1, indicate that the GPM mode is activated in the CLVS, and if the value of sps_gpm_enabled_flag is 0, indicate that the GPM mode is inactivated in the CLVS. sps_gpm_blending_disabled_flag may be a syntax element indicating whether blending in the GPM mode is inactivated in the CLVS, and if a value of sps_gpm_blending_disabled_flag is 1, indicate that the blending in the GPM mode is inactivated in the CLV, and if the value of sps_gpm_blending_disabled_flag is 0, indicate that the blending in the GPM mode is activated in the CLVS. If sps_gpm_blending_disabled_flag is not parsed, the value of sps_gpm_blending_disabled_flag may be inferred to be 0 (sps_gpm_blending_disabled_flag equal to 1 specifies that the blending for the geometric partition based motion compensation is disabled for the CLVS. sps_gpm_blending_disabled_flag equal to 0 specifies that the blending for the geometric partition based motion compensation is enabled for the CLVS. When sps_gpm_blending_disabled_flag is not present, it is inferred to be equal to 0). In other words, if the value of sps_gpm _blending_disabled_flag is 0, it may mean that the blending is not performed when the current block is encoded in the GPM mode. If the value of sps _gpm_blending_disabled flag is 1, it may mean that the blending is performed when the current block is encoded in the GPM mode. Whether blending is applied when encoded in the above GPM mode can be signaled and parsed at the SPS level as well as the PPS level, Slice header level, Tile level, etc.

Luma mapping with chroma scaling (LMCS) may refer to a preprocessing process which dynamically changes an expression range of an input image signal in order to improve encoding performance and subjective image quality. Specifically, the LMCS is a method of dynamically changing an expression range of a pixel value and may be a method including luminance component mapping and chrominance component scaling. The luminance component mapping may refer to a method of reconfiguring a dynamic range of a luminance component of an input image through mapping, and the chrominance component scaling may refer to a method of compensating for a gap between a mapped luminance component and a chrominance component. When a current image is encoded, the input image may be converted to a dynamic range through a forward mapping process, and inverse mapping may be performed on a reconstructed image to convert the reconstructed image back to an original expression range. The encoder may perform forward mapping by dividing the existing dynamic area into 16 equal intervals and then redistributing a codeword of the input image through a linear model for each interval. The encoder may perform inverse mapping, which performs inverse mapping from a mapped dynamic area to the existing dynamic area. The encoder may generate a bitstream including parameters related to forward mapping and inverse mapping.

Since an image such as screen content is in a simple graphic form such as a character, encoding efficiency may be lowered when the video signal processing device performs OBMC on an image such as screen content. Therefore, the video signal processing device (i.e., an encoder and/or decoder) may not perform OBMC when there are characteristics such as a big difference in luminance between spatial pixels.

FIG. 26 is a diagram illustrating a method for a video signal processing device to determine whether to perform OBMC according to an embodiment of the disclosure.

Referring to FIG. 26, the video signal processing device may determine whether OBMC is performed on the current block based on the current block information and/or the neighboring block information.

In order to determine whether OBMC is performed, the video signal processing device may determine whether there is a characteristic such as a big difference in luminance between spatial pixels in the current block.

Referring to FIG. 26A, the video signal processing device may determine whether OBMC is performed on the current block based on the current block information and the neighboring block information. i) For example, the video signal processing device may perform arbitrary filtering to obtain a gradient to distinguish a big difference in luminance within the predicted block by using motion information on the current block, and if the gradient is greater than an arbitrary threshold, the video signal processing device may determine that a big difference in luminance exists. If a big difference in luminance exists, the video signal processing device may not perform OBMC on the current block. The arbitrary threshold may be an integer, for example, 100. In addition, the arbitrary filtering may be obtained through the difference between adjacent pixels or Sobel filtering may be used. As another example, ii) the video signal processing device may determine whether OBMC is performed on the current block through the difference (SAD or MRSAD) between the first block predicted through motion information of the current block and the second block predicted through motion information projected by the motion information of the neighboring blocks of the current block to the upper left position of the current block. When the sum of the difference (SAD or MRSAD) between the first block and the second block is greater than an arbitrary value, the video signal processing device may not perform OBMC on the current block. The arbitrary value may be an integer value calculated based on the horizontal and vertical sizes of the current block and a threshold value, and in this case, the threshold value may be an integer. Alternatively, when the maximum value of the absolute value of the difference (SAD or MRSAD) value at an arbitrary sample position among the differences (SAD or MRSAD) is greater than the arbitrary value, the video signal processing device may not perform OBMC on the current block.

In addition, the video signal processing device may determine whether OBMC is performed on the current block by using only the neighboring block information of the current block. This is to process the process of determining whether OBMC is performed on the current block in parallel. The video signal processing device may determine whether OBMC is performed on the current block by determining whether there is a characteristic such as a big difference in luminance between spatial pixels in the current block. i) For example, the video signal processing device may determine whether there is a big difference in brightness within the block predicted through motion information projected from the motion information of the neighboring block of the current block to the upper left position of the current block. To this end, the video signal processing device may perform arbitrary filtering to obtain a gradient and if the gradient is greater than an arbitrary threshold, the video signal processing device may determine that a big difference in luminance exists. If a big difference in luminance exists, the video signal processing device may not perform OBMC on the current block. The arbitrary threshold may be an integer, for example, 100. In addition, the arbitrary filtering may be obtained through the difference between adjacent pixels or Sobel filtering may be used. As another example, ii) the video signal processing device may determine whether OBMC is performed on the current block through the difference (SAD or MRSAD) between the first block predicted through motion information projected from the motion information of the upper neighboring blocks of the current block to the upper left position of the current block and the second block predicted through motion information projected by the motion information of the neighboring blocks of the current block to the upper left position of the current block. When the sum of the difference (SAD or MRSAD) is greater than an arbitrary value, the video signal processing device may not perform OBMC. The arbitrary value may be an integer value calculated based on the horizontal and vertical sizes of the current block and a threshold value, and in this case, the threshold value may be an integer. Alternatively, when the maximum value of the absolute value among the differences is greater than the arbitrary value, the video signal processing device may not perform OBMC on the current block. Meanwhile, when a neighboring block of the current block is encoded in the intra TMP or IBC mode, the video signal processing device may not perform OBMC on the current block. Alternatively, when the neighboring block of the current block is encoded in the intra TMP or IBC mode, the video signal processing device may use the block vector of the neighboring block of the current block to determine whether OBMC is performed on the current block described above and perform OBMC.

In the process of determining whether OBMC is performed on the current block described above, when prediction blocks are generated, the video signal processing device may not use an interpolation method to reduce complexity. That is, the video signal processing device may generate a prediction block through motion compensation in integer pixel units.

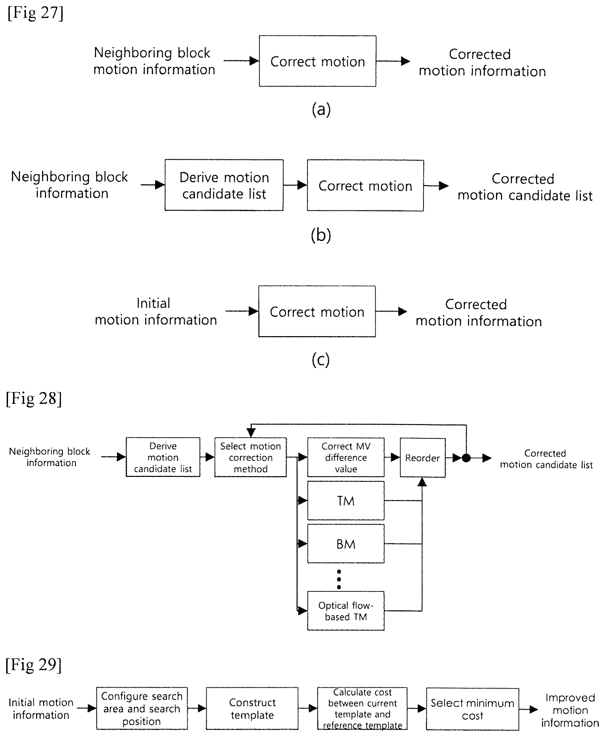

FIG. 27 is a diagram illustrating a method for correcting motion information according to an embodiment of the disclosure.

FIG. 8A illustrates the process of correcting (refining or revising) motion information derived from neighboring blocks of a current block to output new motion information. Referring to FIG. 8A, a decoder may correct motion information of the current block's neighboring blocks by various motion correction methods to obtain corrected motion information. Referring to FIG. 8B, the decoder may derive a motion candidate list from neighboring blocks of a current block, and then correct one or more motion candidates in the derived motion candidate list by various motion correction methods to obtain a corrected motion candidate list. The motion candidate list may be constructed using motion information derived from the neighboring blocks of the current block. The decoder may perform a motion correction process on each or all of the one or more motion candidates in the motion candidate list to obtain a corrected motion candidate list including the one or more corrected motion candidates. Referring to FIG. 8C, the decoder may correct initial motion information of a current block by various motion correction methods to obtain corrected motion information. The motion correction methods may be motion vector difference (MVD), template matching (TM), bilateral matching (BM), merge mode with MVD (MMVD), TM based on merge mode with MVD (MMVD), optical flow-based TM, multi-pass DMVR, etc.

FIG. 28 illustrates a method for correcting motion information of a current block by recursively performing a motion correction method according to an embodiment of the present disclosure.

A decoder may recursively perform the motion correction method to correct initial motion information of a current block. The decoder may use neighboring blocks of the current block to construct a motion candidate list for the current block, and may recursively perform one or more motion correction methods to correct motion information. The one or more motion correction methods may be motion vector difference (MVD), template matching (TM), bilateral matching (BM), merge mode with MVD (MMVD), TM based on merge mode with MVD (MMVD), optical flow-based TM, multi-pass DMVR, and the like. MVD may be a method in which an encoder generates a correction value for motion information by including the correction value in a bitstream, and the decoder corrects the motion information by obtaining the correction value for the motion information through the bitstream (MV difference value correction in FIG. 9). TM may be a method in which the decoder constructs a template based on neighboring pixels of a current block, and search for a matching area with the highest similarity to the constructed template to correct motion information. BM may be a method in which the decoder corrects motion information based on the similarity between a reference block within a picture included in an L0 picture list, derived based on motion information of the current block, and a reference block within a picture included in an L1 picture list. The MMVD method is a method for correcting motion information by using one among one or more motion difference value candidates. The encoder may generate a bitstream including information about an index indicating one of the one or more motion difference value candidates. The decoder may parse the information about the index included in the bitstream to obtain a difference value candidate indicated by the index, and may correct motion information, based on the obtained difference value candidate. The MMVD-based TM method is a method for reordering, based on a TM cost value, an extended motion candidate list including a motion candidate list and one or more motion difference value candidates, and correcting motion information of a current block by using a motion candidate in the reordered list. The encoder may generate a bitstream including information about an index indicating one of the candidates in the reordered list. The decoder may parse the information about the index, included in the bitstream, and use a motion correction candidate indicated by the index as a correction value for motion information of a current block. The optical flow-based TM method may be a method in which the decoder constructs a template of areas adjacent to a current block as an optical flow map and search for an area in a reference picture, which is similar to the optical flow map, to correct motion information.

One or more motion correction methods may be applied in a merge or AMVP mode. Referring to FIG. 28, the decoder may derive (construct) a motion candidate list (e.g., a merge candidate list) for a current block. The decoder may then correct each piece or all pieces of motion information (e.g., merge candidates) in the motion candidate list by using one or more motion correction methods. The decoder may reorder the motion candidate list, based on a cost value of the corrected motion information. As described above, the decoder may perform the above-described correction method on each or all of the motion candidates within the reordered motion candidate list and reorder the motion candidate list, and reorder the motion candidate list. That is, the decoder may recursively perform the above-described correction of the motion candidates and reordering of the motion candidate list. When this method is applied, the accuracy of motion information of the motion candidates in the motion candidate list may be increased, and thus the residual signal may be reduced, thereby resulting in the effect of reducing the bit rate of the residual signal. The decoder may separately receive, through signaling, an index indicating one of the motion candidates in the reordered motion candidate list and may predict (reconstruct) the current block, based on the motion candidate indicated by the index. Alternatively, the decoder may select a motion candidate with the lowest cost value and predict (reconstruct) the current block, based on the motion candidate with the lowest cost value.

To increase the accuracy of a merge candidate, the encoder may generate a bitstream including information about an index indicating one of motion information correction values obtained using the merge mode with MVD (MMVD) method, and the decoder may obtain the motion information correction value through the index obtained by parsing the information about the index included in the bitstream, and use the motion information correction value to predict (reconstruct) a current block. The MMVD method is a method for selecting one of multiple motion difference value candidates, and is somewhat less accurate than an existing method for transmitting a motion information difference value accurately, but has an advantage of significantly reducing the bit rate. To further increase the accuracy, the decoder may obtain second corrected motion information by additionally applying at least one of the TM, BM, merge mode with MVD (MMVD), TM based on merge mode with MVD (MMVD), optical flow-based TM, and multi-pass DMVR methods to first corrected motion information that is corrected based on the motion information correction value obtained using the MMVD method. Alternatively, the encoder may apply at least one method among the TM, BM, merge mode with MVD (MMVD), TM based on MMVD, optical flow-based TM, and multi-pass DMVR methods to correct motion information, and then generate a bitstream that additionally includes information about a motion information correction value obtained by applying the at least one method. Furthermore, there may be indication information indicating whether the information about the correction value is included in the bitstream. Furthermore, when a correction method is performed recursively, the encoder may generate a bitstream including information about which correction method is used, and information about the correction method application order. The decoder may parse the indication information included in the bitstream to identify whether the information about the correction value is present. Furthermore, the decoder may parse the information about which correction method is used and information about the correction method application order, included in the bitstream, and may use the parsed information to correct motion information of the current block. When the information about the correction value is present, the decoder may correct the motion information of the current block, based on the information about the correction value. When the information about the correction value is present, the decoder may not parse the information about the correction value, and the correction value may not be applied to the motion information of the current block. The correction value may have the same meaning as the difference value.

When the encoder encodes motion information of a current block in an AMVP mode, the encoder may generate a bitstream including a difference value of the motion information. The decoder may use the difference value of the motion information included in the bitstream to generate a prediction block for the current block. Since the difference value of the motion information is included in the bitstream, there is a problem of an increased bit rate. To solve this problem, the method described above may also be applied to an AMVP candidate list That is, each or all of one or more candidates in a motion information candidate list obtained using AMVP may be corrected based on at least one among TM, BM, merge mode with MVD (MMVD), TM based on merge mode with MVD (MMVD), optical flow-based TM, and multi-pass DMVR. In this case, a motion information candidate having the smallest cost value, based on TM, may be a final motion information candidate. Alternatively, the motion information candidate list may be reordered based on a cost value of each of the motion information candidates in the motion information candidate list based on TM. In the encoder, an index to a final motion information candidate to be used as a motion prediction value for the current block within the reordered motion information candidate list may be signaled and included in the bitstream, and the decoder may parse the index, select the final motion information candidate for the current block, and use the final motion information candidate as the motion prediction value. Since corrected motion information is used, there is an effect of reducing the bit rate for the difference value of the motion information included in an actual bitstream. In addition, there may be indication information that indicates whether information about the difference value is included in the bitstream. The decoder may parse the instruction information included in the bitstream to identify whether there is the information about the difference value. When there is the information about the difference value, the decoder may correct the motion information of the current block, based on the information about the difference value. Specifically, the decoder may obtain the motion information of the current block by adding the prediction value of the motion information of the current block (the motion prediction value) and the difference value. On the other hand, when there is no information about the correction value, the decoder may not parse the information about the difference value, and the difference value may be inferred to be (0, 0). That is, the motion information of the current block may be obtained without applying the difference value or may be obtained based on the difference value of (0, 0). The difference value (0, 0) may imply motion in the (horizontal and vertical) directions, respectively, and the information about the difference value may include information indicating the absolute values and sign values of the horizontal and vertical components of the difference value.

Furthermore, each or all of the one or more motion information candidates in the motion information candidate list obtained using AMVP may be corrected based on at least one among TM, BM, merge mode with MVD (MMVD), TM based on merge mode with MVD (MMVD), optical flow-based TM, and multi-pass DMVR. In this case, motion information corresponding to the smallest cost value, among the corrected motion information candidates, may be an optimal motion candidate. Alternatively, the encoder may reorder the motion information candidates based on the cost value to generate a bitstream including index information indicating which motion candidate is used as the optimal motion candidate. The decoder may parse the index information to identify the optimal motion information candidate. The optimal motion information candidate may be corrected based on at least one of TM, BM, merge mode with MVD (MMVD), TM based on merge mode with MVD (MMVD), optical flow-based TM, and multi-pass DMVR, and the correction may be repeated recursively. As the correction is repeated recursively, an initial search range may change, and the encoding efficiency may be improved.

The motion prediction value may be corrected by applying at least one among TM, BM, merge mode with MVD (MMVD), TM based on merge mode with MVD (MMVD), optical flow-based TM, and multi-pass DMVR to the motion prediction value of the current block. The video signal processing device may obtain information about the MVD or MMVD method from the bitstream to additionally correct the corrected motion prediction value. Meanwhile, the MVD or MMVD method may be performed first, followed by a correction method using at least one of TM, BM, merge mode with MVD (MMVD), TM based on merge mode with MVD (MMVD), optical flow-based TM, and multi-pass DMVR. Alternatively, the encoder may use MVD to generate a bitstream including a correction value for the initial motion information. The decoder may perform the above-described motion correction method, based on the correction value for the initial motion information included in the bitstream. In other words, initial motion information correction performance may vary depending on the value of the initial motion information and the search range for correction of the initial motion information. That is, when a motion correction method is applied using even slightly more accurate initial motion information, the initial motion information may be corrected to more accurate motion information.

The following describes a method for applying motion vector difference (MVD), template matching (TM), bilateral matching (BM), merge mode with MVD (MMVD), TM based on merge mode with MVD (MMVD), optical flow-based TM, multi-pass DMVR, etc.

Based on the encoding mode (prediction mode) of a current block, a motion correction method to be used may be determined. For example, when a current block is encoded in a GPM mode, motion information may first be corrected using an MV difference value obtained using MMVD, and the motion information may be corrected again by performing at least one of TM, BM, and optical flow-based TM methods on the corrected motion information. For example, the current block is encoded in an AMVP mode, the video signal processing device may correct motion information by using an MV difference value obtained using the MMVD in a merge mode, and additionally correct the corrected motion information by performing at least one of the TM, BM, and optical flow-based TM methods on the corrected motion information. In this case, MVD in the AMVP mode may not be applied.

For example, when neighboring blocks adjacent to a current block have identical or similar motion information, correction of the MV difference value may not be performed, and at least one of the TM, BM, and optical flow-based TM methods may be performed to correct motion information. This is because the motion of the current block is likely to be similar to the motion of the neighboring blocks. On the other hand, when the distributions of motion information of neighboring blocks adjacent to a current block are not similar to each other, the video signal processing device may correct motion information using an MV difference value obtained using MVD or MMVD, and may additionally correct the corrected motion information by performing at least one of the TM, BM, and optical flow-based TM methods on the corrected motion information. This is because the motion of the current block may be different from the motion of the neighboring blocks. A neighboring block in this specification may mean a neighboring block of the current block.

For example, a motion correction method (e.g., motion vector difference (MVD), template matching (TM), bilateral matching (BM), optical flow-based TM, multi-pass DMVR, etc.) may be selected based on at least one among the size of a current block, whether the current block is a luma or chroma component block, quantization parameter information of the current block, motion resolution information of the current block, whether a difference signal is present in the current block, and the sum or number of absolute values of non-zero quantization indices in the difference signal in the current block. When the size of the current block is larger than or equal to a predetermined size or when the motion resolution of the current block is 1/16 pixel, the TM method may not be selected. This is because the TM method has a high complexity. When the current block is a chroma component block, the TM method is not performed on motion information of the chroma block, and motion information corrected by the TM method in a luma component block of the current block may be used as the motion information of the chroma block. For example, the motion information corrected by the TM method in the luma component block of the current block may be scaled according to the resolution difference between a luma block and a chroma block and used for a chroma block of the current block.

For example, based on the characteristics of the current block, the motion correction method (e.g., motion vector difference (MVD), template matching (TM), bilateral matching (BM), merge mode with MVD (MMVD), TM based on merge mode with MVD (MMVD), optical flow-based TM, multi-pass DMVR, etc.) may be selected. This is because each motion correction method has a trade-off between complexity and accuracy. For example, TM has the highest performance but has high complexity and cannot perform parallel processing, BM has lower performance than TM but can perform parallel processing, and optical flow has lower complexity and can perform parallel processing, but has the disadvantage of lower performance. In this case, the selected motion correction method may be signaled separately. For example, the decoder may determine a motion correction method by a syntax element included in a bitstream. The syntax element may be signaled at an SPS level, a PPS level, a picture level, a slice level, or a coding unit (CU) level.

FIG. 29 illustrates the order in which a TM method according to an embodiment of the present disclosure is performed.

Referring to FIG. 29, the decoder may obtain initial motion information (initial MV, reference index) derived from neighboring blocks. Based on the initial motion information, the decoder may configure a search range within a reference video. The decoder may select several candidate positions within the search range according to a predefined search pattern. The decoder may construct a template for a current block by using neighboring blocks of the current block, and may construct, based on the candidate positions, a template for a reference block (video) having the same size as the template for the current block. The decoder may obtain a cost value between the template for the current block and the reference block (video) template. When there are first and second templates which are different from each other, the cost value between the templates may indicate the similarity between the templates. Specifically, the video signal processing device may calculate one or more cost values between one or more blocks included in the first template and one or more blocks included in the second template corresponding to the one or more blocks included in the first template, respectively. The sum of the one or more cost values may be the cost value between the first template and the second template. The cost value may be obtained using the sum of absolute differences (SAD) or the mean-removed SAD (MRSAD). The decoder may obtain cost values of all candidate positions within the search range, and use information of a motion candidate at a position corresponding to the minimum cost value as final motion information (the improved motion information in FIG. 29). In the present specification, the meaning of obtaining a cost value may be the same as the meaning of calculating a cost value by the decoder.

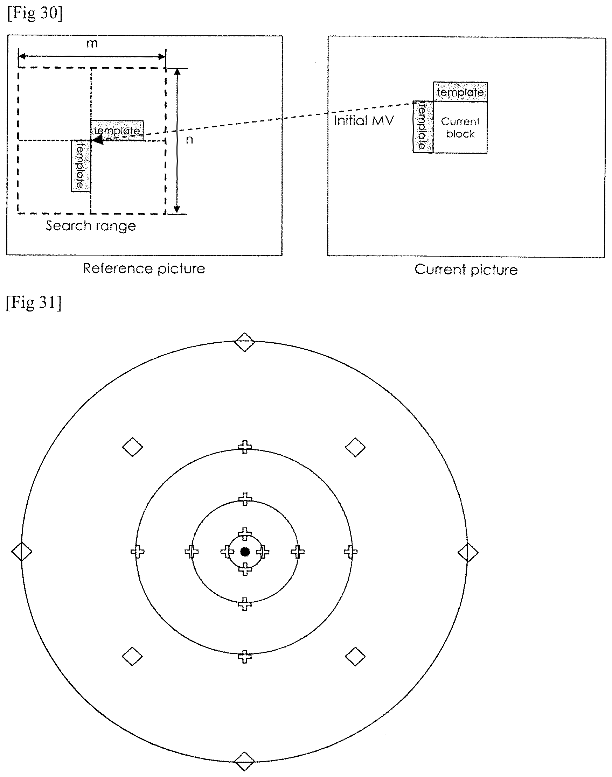

FIG. 30 illustrates a method for configuring a search range for a TM method, based on initial motion information, according to an embodiment of the present disclosure.

Referring to FIG. 30, in order to find a reference block corresponding to a current block in a reference picture, the decoder may configure the position of a reference block as a position moved by initial motion information (initial MV) relative to the top-left position of the current block. The decoder may configure a search range to a predetermined (m x n) size relative to the top-left position of the reference block. In this case, m x n may be 16 x 16. For example, the search range may range from -8 to 8 in the horizontal direction and from -8 to 8 in the vertical direction, relative to the position of the initial motion information. Specifically, the position indicated by the initial motion information may be expressed in the form of coordinates (x, y) in the horizontal and vertical directions. In this case, the horizontal coordinate of the search range may range from x-8 to x+8, and the vertical coordinate may be range from y-8 to y+8. The search range may be configured differently depending on the characteristics of a video. Information about the size of the search range may be included in SPS, PPS, picture/tile/slice header, etc. of a bitstream. The decoder may parse the information about the search range from the bitstream to identify the size of the search range and configure the search range. Furthermore, the search range may be configured based on at least one among the size of the current block, the horizontal or vertical size of the current block, AMVR information of the current block, information about whether OBMC or MHP is applied to the current block, and the like. For example, when a current block has a size of 16 x 16 or larger, the search range may be configured to be 20 x 20. Alternatively, when the AMVR of the current block is greater than a 1-integer pixel unit, the search range may be configured to be 20 x 20. When the AMVR of the current block is equal to or less than the 1-integer pixel unit, the search range may be configured to be 16 x 16. Subsequently, the decoder may use blocks adjacent to the current block to construct a left template of the current block and an above template of the current block. Furthermore, the decoder constructs a left template of the reference block and an above template of the reference block, based on the configured position of the reference block, in the reference picture. The left template of the current block and the left template of the reference block may have the same size, and the above template of the current block and the above template of the reference block may have the same size.

FIG. 31 illustrates the position of a motion candidate which is searched for within a search range according to an embodiment of the present disclosure.

Referring to FIG. 31, a position of a motion candidate that is searched for within a search range for a TM method may be configured relative to the position of initial motion information (the center point in FIG. 31). The position where the motion candidate is searched for may vary depending on a search pattern. The search pattern may be a diamond pattern, a cross pattern, or the like. In FIG. 31, "◇" may indicate a position where a motion candidate is searched for according to a diamond pattern, and "+" may indicate a position where a motion candidate is searched for according to a cross pattern. The interval of the search pattern (or search interval) may be configured based on at least one among the size of a current block, whether the current block is a luma component block or a chroma component block, the resolution of motion information of the current block, the degree of difference between POC values of the current block and a reference block, and the motion characteristics of neighboring blocks of the current block. That is, the interval of the search pattern may be configured to become wider, narrower, or equidistant as the distance from the initial motion information increases. For example, when the size of the current block is larger than a predetermined value, the current block is likely to be a block for the motion of a background or a large object, and thus the interval of the search pattern may be configured to become wider as the distance from the initial motion information increases. The predetermined value may be the case in which the size of a block is 32x32. Furthermore, when the size of the current block is smaller than the predetermined value, the current block is likely to be a block for a motion corresponding to an object boundary, and therefore, in order to search for various motions, the interval of the search pattern may be configured to be narrower as the distance from the initial motion information increases. Information about the interval of the search pattern may be included in any one of the SPS, PPS, picture header, and slice header of a bitstream. The decoder may parse the information about the interval of the search pattern to configure the pattern interval of the current block.

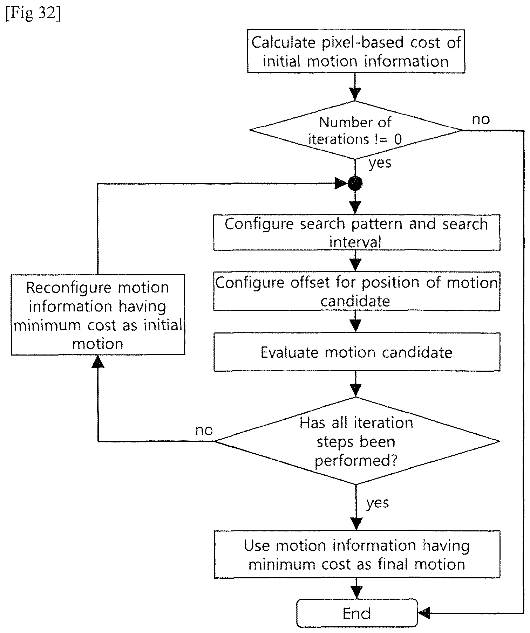

FIG. 32 illustrates a process of searching for the position of a motion candidate according to an embodiment of the present disclosure.

Specifically, FIG. 32 is a flowchart illustrating a process of searching for a position where a motion candidate for a TM method is searched for. Referring to FIG. 32, the decoder may obtain (calculate) a pixel-based cost value of initial motion information. When the number of iterations of the search is "0," the decoder may terminate the TM method without performing the TM method. Otherwise (i.e., if the number of iterations of the search is not "0"), the decoder may perform the TM method. In this case, the number of iterations may be a predetermined integer value greater than or equal to 1.

An initial search process may be performed recursively and repeatedly. A motion candidate corrected in a current search step may be input as initial motion information in the next search process. A search pattern, a search interval, and the number of iterations in each step may vary depending on the motion resolution of a current block. For example, in the first search step, the number of iterations may be set to "375," an initial search pattern may be set to "diamond," and an initial search interval may be set to "6" when the motion resolution is a 4-integer pixel unit, and "4" when the motion resolution is not the 4-integer pixel unit. In the second search process, the number of iterations may be set to "1," the search pattern is set to "cross," and the search interval may be set to "6" when the motion resolution is a 4-integer pixel unit, and "4" when the motion resolution is not the 4-integer pixel unit. In the third search process, the number of iterations may be set to "1," the search pattern may be set to "cross," and the search interval may be set to "5" when the motion resolution is a 4-integer pixel unit, and "3" when the motion resolution is not the 4-integer pixel unit. In the fourth search process, the number of iterations may be set to "1," the search pattern may be set to "cross," and the search interval may be set to "4" when the motion resolution is a 4-integer pixel unit, and "2" when the motion resolution is not the 4-integer pixel unit. In the fifth search process, the number of iterations may be set to "1," the search pattern may be set to "cross," and the search interval may be set to "3" when the motion resolution is a 4-integer pixel unit, and "1" when the motion resolution is not the 4-integer pixel unit. Whether to perform the search process corresponding to each step may be determined based on the motion resolution of the current block. For example, when the motion resolution of the current block is a 4-integer pixel unit or 1-integer pixel unit, only the first and second search processes may be performed, and the third, fourth, and fifth search processes may not be performed. Furthermore, when the motion resolution of the current block is a 1/2-pixel unit, only the first, second, and third search processes may be performed, and the fourth and fifth search steps may not be performed. Furthermore, when the motion resolution of the current block is a 1/4-pixel unit, only the first, second, third, and fourth search processes may be performed, and the fifth search process may not be performed.

In the search processes described above, the number of iterations, the initial search pattern, and the initial search interval may be determined before the process illustrated in FIG. 32 is performed.

Next, the search pattern and the search interval may be reset. The search pattern and the search interval may be determined based on at least one among the size of the current block, whether the current block is a luma component block or a chroma component block, the current motion resolution, the number of iterations, the distribution of cost values of motion candidate positions calculated in the previous iteration, and whether OBMC or MHP is applied to the current block. The following describes a method for setting a search pattern and a search interval

The search interval may be determined by motion information resolution of the current block. The motion information resolution may be a unit of a 1-integer pixel, a 4-integer pixel, a 1/2 pixel, a 1/4 pixel, or a 1/16 pixel. When the motion information resolution is a 1/4 pixel, the initial search interval may be set to 6, and in other cases, the initial search interval may be set to 4.

The search pattern may be determined as a diamond pattern or a cross pattern. The search interval may be adjusted by decreasing or increasing by a predetermined interval from the initial search interval. For example, the search pattern and the search interval may vary depending on the iteration step. The iteration step may indicate how many times the resetting of the search pattern and the search interval is repeated when the number of iterations is not 0. That is, the search pattern and the search interval may vary depending on which iteration step is being executed. For example, in a first iteration step, in relation to the search pattern and the search interval, an evaluation of motion candidate positions may be performed based on a diamond search pattern and an initial search interval. In a second step, new candidate positions may be selected using a cross pattern and the initial search interval, based on an optimal motion candidate found in the first step. Then, an evaluation of the new candidate positions may be performed. In a step after the third step, new candidate positions may be selected using a cross pattern and a search interval reduced by 1 from the initial search interval, based on an optimal motion candidate found in the previous step. Then, an evaluation of the new candidate positions may be performed. In a step after the third step, new candidate positions may be selected using a cross pattern and a search interval reduced by 1 compared to the previous step, based on an optimal motion candidates found in the previous step, and an evaluation of the new candidate positions may be performed.

The search pattern and the search interval may be set based on the motion resolution of the current block. The number of iterations and the size of a template may also be set based on the motion resolution of the current block. For example, when the motion resolution is not a 1/4-pixel unit, the number of iterations may be set to a value of 2 or greater. That is, when the motion resolution of the current block is high (the motion is not precise), a search process may be performed additionally, thereby correcting motion information. When the motion resolution is a 1/4-pixel unit, the search pattern may be configured as a diamond pattern to find the accurate motion.

The search pattern and the search interval may be set based on the color component of the current block. The search pattern and the search interval of a chroma component may be set wider than the search pattern and the search interval of a luma component. This is because the chroma component (signal) has higher spatial correlation than a luma component (signal). Alternatively, to improve performance, the search pattern and the search interval of the chroma component may be set shorter than the search pattern and the search interval of the luma component.

The search pattern and the search interval may be set based on the size of the current block. When the size of the current block is equal to or greater than a predetermined value, a cross pattern may be used as the search pattern, and the search interval may be set wider than the initial search interval. For example, the search interval may be "7." Alternatively, to improve performance, when the size of the current block is greater than the predetermined number, a diamond pattern may be used as the search pattern, and the search interval may be set shorter than the initial search interval. For example, the search interval may be "5." The size of the current block may be 16 x 16, 32 x 32, and the search pattern and the search interval may be set based on the sum of the horizontal size and the vertical size of the current block. Furthermore, the size of a template may be set based on the size of the current block. When the size of the current block is equal to or greater than a predetermined value, the size of the template may be set to a predetermined size. When the size of the current block is equal to or greater than the predetermined value, the size of the template may be set to a size smaller than the existing size thereof.

Next, the decoder may use the search pattern and the search interval to set correction values (offset) for the positions of motion candidates to be searched for, and perform an evaluation of the found motion candidates. In the present specification, the evaluation may refer to obtaining a cost value. The positions at which the motion candidates are searched for may vary depending on the search pattern. For example, when the search pattern is a cross pattern, the correction values are (0, 1), (1, 0), (0, -1), and (-1, 0), and when the search pattern is a diamond pattern, the correction values are (0, 2), (1, 1), (2, 0), (1, -1), (0, -2), (-1, -1), (-2, 0), and (-1, 1). The correction value (x, y) represents (horizontal, vertical), where x is a correction value in the horizontal direction and y is a correction value in the vertical direction.

The method described with reference to FIG. 32 may be performed recursively by a predetermined number of iterations. For example, when the number of iterations is 1, the method may be performed more than once. When the decoder has searched for motion candidates and has evaluated all of the found motion candidates, the decoder may use, as final motion information, motion information of a motion candidate corresponding to the smallest cost value.

An initial motion candidate in FIG. 32 may be reconfigured based on the smallest cost value in the previous iteration step. Based on a motion candidate corresponding to the smallest cost value in a first step, the initial motion candidate for the next step may be reconfigured. For example, when the motion candidate corresponding to the smallest cost value in the first step is a motion candidate positioned at the top left, the decoder may, in the next iteration step, evaluate a motion candidate adjacent to the motion candidate positioned at the top left.

The process of performing the search, described with reference to FIG. 32, may proceed differently depending on whether the current block is a coding unit (block) or a sub-block (sub-coding block).

When the current block is a coding block and when an AMVP mode is applied to the current block, an L0 motion candidate list for L0 prediction and an L1 motion candidate list for L1 prediction of the current block may be derived. A search process may be performed on some or all of motion candidates in the derived candidate lists to derive corrected motion information. On the other hand, when the current block is a coding block and a merge mode is applied to the current block, one motion candidate list for L0 and L1 prediction of the current block may be derived. A search process may be performed on some or all of motion candidates in the one derived motion candidate list. As described in the present specification, L0 may refer to L0 prediction and L1 may refer to L1 prediction.

L0 unidirectional prediction, L1 unidirectional prediction, or bidirectional prediction may be applied to the current block. Which of the L0 unidirectional prediction, the L1 unidirectional prediction, or the bidirectional prediction is applied to the current block may be indicated by reference direction indication information. The reference direction indication information may be reconfigured based on a cost value. For example, the reference direction indication information and motion information, corresponding to the smallest cost value, among a cost value of a prediction block generated using initial motion information of L0, a cost value of a prediction block generated using initial motion information of L1, a cost value of a prediction block generated by performing bidirectional prediction through the initial motion information of L0 and L1 and then weighted-averaging the two prediction blocks, a cost value of a prediction block generated using corrected motion information of L0, a cost value of a prediction block generated using corrected motion information of L1, and a cost value of a prediction block generated by performing bidirectional prediction through the corrected motion of L0 and L1 and weight-averaging the two prediction blocks, may be reconfigured in the current block.

In AMVP mode, the L0 and L1 motion information candidate lists may be derived independently of each other. Scaled L0 motion information may be included in the L1 motion information candidate list. When reference pictures of L0 and L1 motion information are different and are reference pictures in different directions relative to a current picture to be encoded, linearity may exist between the L0 motion information and L1 motion information. The L1 motion information may be predicted through the distance between the L0 motion information and the reference picture. The L1 motion information predicted through the L0 motion information (the scaled L0 motion information) may be included in the L1 motion candidate list.

The search process using TM may be applied to L0 and L1 motion candidates independently. A corrected motion information candidate found in L0 during the search process using TM may be used to correct L1 motion information candidates. For example, based on the distance between the corrected motion candidate found in L0 and the reference picture, L1 motion information may be predicted, and the predicted L1 motion information may be included in the L1 motion candidate list.

The current coding block may be partitioned into multiple sub-blocks. Initial motion information in each sub-block may be reset to corrected motion information as search is performed. The respective template of sub-blocks may be different, and a pixel of an adjacent sub-block may be used as a template. However, since the decoder can search for the next sub-block only when the adjacent sub-block has been reconstructed, the process of performing the search may not be processed in parallel for each sub-block. To solve this problem, the search process may be performed only for a sub-block that is positioned on the boundary of the current block. Alternatively, for a sub-block that is positioned on the boundary of the current block, the decoder may derive corrected motion information by using a TM method, and for a sub-block that is not positioned on the boundary of the current block, the decoder may derive corrected motion information by using at least one of BM, optical flow-based TM, and multi-pass DMVR methods.

When the current block is processed as a coding block, the decoder may use the initial motion information of L0 and L1 to calculate the cost value of the entire current block, and derive corrected motion information, based on the calculated cost value. In this case, the motion of a portion of the bottom-right area within the block that is processed as the coding block may be slightly different from the overall motion of the coding block. Depending on how the template is constructed, the process of performing the search may vary, and the corrected motion information may also vary. Therefore, even when the current block is processed as a coding block, the corrected motion information may be derived on a sub-block basis, based on the cost value of a template constructed based on sub-blocks.

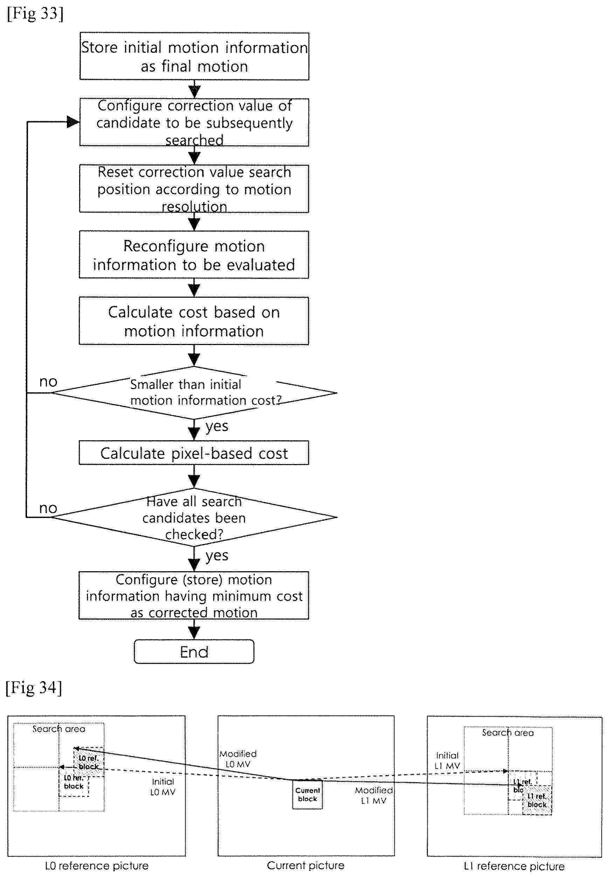

FIG. 33 illustrates a process for evaluating a search candidate according to an embodiment of the present disclosure.

Specifically, FIG. 33 is a flowchart illustrating a process for evaluating search candidates by using correction values for candidate positions selected based on the search pattern and the search interval described with reference to FIG. 32. The decoder may store initial motion information as final motion information. The decoder may then perform the process described later for correction values for all of the search candidates.

The decoder may select one from correction values for candidate positions to be searched for. The correction value may be reset to be appropriate for the motion resolution to be used in a current block. The decoder may add the reset correction value to the initial motion information to reconstruct motion information to be evaluated. A cost value may be obtained based on the reconstructed motion information. The cost value obtained based on the motion information may be calculated by summing a difference value between the absolute values of horizontal components and a difference value between the absolute values of the vertical direction components of the initial motion information and the reconstructed motion information, and multiplying the sum by a predetermined weight value. The predetermined weighting value may be "4." The decoder may calculate a pixel-based cost value of the reconstructed motion information only when the cost value obtained based on the motion information is less than a cost value of the initial motion information, obtained based on a pixel.

The decoder may evaluate correction values for all search candidates and configure motion information corresponding to the smallest cost value as final motion information.

In a template-based motion correction method, such as TM, motion correction performance may vary depending on how similar the motion of a template is to the motion of the current block. In other words, the motion characteristics of the template and the current block may be different, and in the case of motion corrected using a template with different characteristics, motion correction performance may be efficient under the template, but motion correction performance may be not efficient for the current block. To address this, a pixel-based cost value of initial motion information may be recalculated and used for comparison with the search candidates. This has the effect of increasing the importance of the initial motion information. That is, the pixel-based cost value of the initial motion information may be recalculated using at least one among the size of the current block, the quantization parameter of the current block, and the like. For example, the pixel-based cost value of the initial motion information may be reset using a calculation that subtracts a value obtained by multiplying the size of the current block by a predetermined weight. Based on the reset cost value, a comparison may be made between the search candidates. The predetermined weight may be an integer greater than or equal to 1.

The cost value obtained based on the motion information may vary depending on the size of a correction value. That is, as the correction value decreases, the cost value may decrease. Since the motion information corresponding to the smallest cost value is configured as the final motion information, the evaluation may be performed only for a neighboring motion candidate in a position indicated by initial motion information with a smaller correction value. However, a motion candidate with a larger correction value may be an optimal motion candidate. Therefore, to select an optimal motion candidate by evaluating various motion candidates, the cost value may be obtained using a method described later. The cost value may be obtained using the difference between motion information values of neighboring blocks, quantization parameters, the size of the current block, and the like.

Whether to apply a pixel-based cost value may be obtained using the distribution of motion information in a neighboring block. To evaluate the various motion candidates, the decoder may obtain whether to apply a pixel-based cost value by using a difference value between the corrected motion information and the motion information of the neighboring block. For example, the decoder may compare the difference value between the corrected motion information and the motion information of the neighboring block with a predetermined value and determine whether to apply a pixel-based cost value, based on the comparison result. Specifically, when the difference value between the corrected motion information and the motion information of the neighboring block is greater than (or less than, or equal to) the predetermined value, the decoder may obtain a pixel-based cost value. The neighboring block may be a neighboring block that is adjacent to the current block, or a temporal neighboring block that is at the same (or corresponding) position as the current block in a collocated picture.

The cost value may be obtained based on the size of the current block. For example, the above-described weight for obtaining the cost value may be set based on the size of the current block. The weight may be set inversely proportional to the size of the current block. That is, as the size of the current block increases, the weight may be set lower. This is for the purpose of evaluating a wider range of motion candidates in order to select a suitable motion candidate. On the other hand, the weight may be set proportional to the size of the current block. That is, as the size of the current block increases, the weight may be set higher. This is for the purpose of reducing complexity. For example, the size of the current block may be 16x16 or 32x32, and may be set as the sum of the horizontal and vertical sizes of the current block. The weight may be an integer value such as 1, 2, 3, 4, 5, or 6. Also, as the weight increases, the cost value increases, so when the weight is equal to or greater than a certain value, the decoder may not perform an evaluation to obtain the cost value.

Hereinafter, a method for correcting motion information by using DMVR will be described.

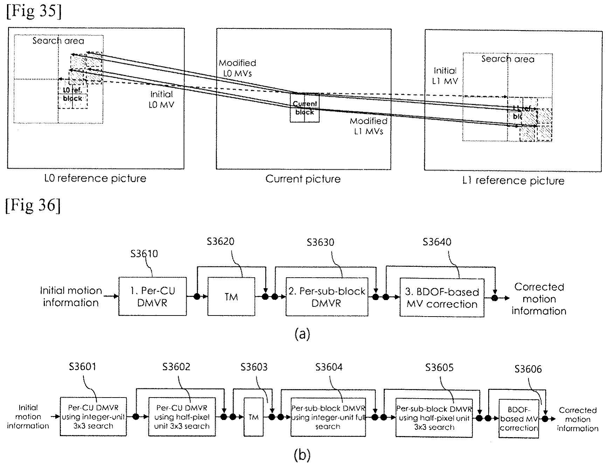

FIGS. 34 and 35 illustrate a method for correcting motion information by using DMVR according to an embodiment of the present disclosure.

DMVR is a method for obtaining corrected motion information of a current block by using a bilateral matching (BM) method. The bilateral matching (BM) method is a method that corrects initial motion information by finding the most similar part between the surrounding search area of an L0 reference block and the surrounding search area of an L1 reference block in a block having bilateral motion, and uses the corrected motion information for the prediction of the current block. The size of a search area may be set to a predetermined (m x n) size based on a specific point in the reference block. For example, the specific point may be the top-left position of the reference block or the center position of the reference block, and the predetermined size may be 16 x 16. The most similar part may be a point that corresponds to the smallest cost value, obtained by calculating a cost value per pixel between blocks. The cost value may be calculated using the sum of absolute differences (SAD) or mean-removed SAD (MRSAD) method. Information about which method is used to calculate the cost value may be included in at least one of the SPS, PPS, picture header, and slice header of a bitstream. The decoder may calculate the cost value, based on the method configured by parsing the information. Depending on the search area, the cost value may vary, and the corrected motion information may also vary. The decoder may partition the current block into multiple sub-blocks and correct motion information by using DMVR with respect to each sub-block. This is because the motion information of smaller blocks is more accurate than that of larger blocks. In this case, DMVR may not be performed on the larger blocks, but only on the smaller partitioned blocks (e.g., sub-blocks). Referring to FIG. 35, one block may be partitioned into multiple (e.g., four) sub-blocks. The decoder may obtain corrected motion information by using DMVR for each of the partitioned sub-blocks. Alternatively, the decoder may use a multi-DMVR method, which uses corrected motion information found via DMVR in a larger block to derive more accurate motion information via DMVR in smaller partitioned blocks.

The multi-DMVR method will be described below.

FIG. 36 illustrates a process of performing multi-DMVR according to an embodiment of the present disclosure.

FIG. 36A illustrates the general process of performing multi-DMVR, and FIG. 36B illustrates the general process of multi-DMVR in more detail.

Referring to FIG. 36A, multi-DMVR may obtain one or more pieces of corrected motion information by performing DMVR on a coding unit (block) basis, based on initial motion information (S3610). When TM is applied to a current coding block. the decoder may perform TM by using the one or more pieces of corrected motion information obtained in step S3610 (S3620). When corrected motion information of the current coding block, determined by performing TM, has changed from bidirectional to unidirectional, the DMVR process cannot be performed. Therefore, steps after S3620 (S3630 and S3640) are not performed, and the motion of a current block is finally determined to be unidirectional. When, as a result of performing TM, the corrected motion information of the current coding block is bidirectional, the decoder may perform DMVR on a sub-block basis to obtain corrected motion information on a sub-block basis for each sub-block (S3630). Then, in step S3640, the decoder may recorrect, based on BDOF, the corrected motion information obtained on a sub-block basis, and finally obtain the motion information corrected based on the BDOF.

Referring to FIG. 36B, step S3610 in FIG. 36A may be subdivided into step S3601 of performing DMVR on a coding unit (block) basis by using integer-unit search and step S3602 of performing DMVR on a coding unit (block) basis by using half-pixel unit search. In step S3610, the decoder may use a 3x3 square search to calculate the corrected motion information and pixel-based cost value of the current coding unit (block). In this case, the motion resolution may be set in integer units in step S3601 and in half(1/2)-pixel units in step S3602. In step S3601, the decoder may obtain corrected motion information by using initial motion information and an integer-unit correction value

Hereinafter, step S3630 in FIG. 36A will be described in more detail.

In step S3630, the decoder may partition the current coding block into multiple sub-blocks, and then steps S3604 and S3605 in FIG. 36B may be performed for each sub-block. The size of sub-blocks may be up to 16 x 16.

The decoder may configure the corrected motion information obtained in step S3620 as initial motion information for steps S3604 and S3605. The decoder may perform a full search in integer units by using the initial motion information, and obtain optimal motion information of the current sub-block and a cost value of the optimal motion information (S3604). After step S3604, the decoder may perform a 3x3 square search on a half(1/2)-pixel basis. The motion information obtained in step S3604 may be used as reference motion information in step S3605. That is, a new motion candidate may be obtained based on the information obtained in step S3604, and the decoder may evaluate the new motion candidate (S3605). The decoder may evaluate the new motion candidate and store final motion information in the current sub-block. Steps S3604 and S3605 may be repeated for all sub-blocks. The DMVR process for each sub-block has the advantage that there is no dependency between sub-blocks, so all sub-blocks may perform DMVR in parallel.

The encoder may generate a bitstream that includes information indicating whether template matching (TM) in S3620 and S3603 is performed (applied). The decoder may parse the information indicating whether template matching is applied to configure whether template matching is applied to the current block.

Whether template matching is applied may be determined at the current block or CU level. For example, when template matching is applied to the current block and motion information of the current block is bidirectional motion, template matching may be performed on each of L0 motion information and L1 motion information. Otherwise, template matching may not be performed on both the L0 motion information and the L1 motion information.

Whether template matching is applied may be determined for each of the directions of the motion information of the current block. For example, when template matching has been applied to an L0 motion direction of the current block but has not been applied to an L1 motion direction, template matching may be applied to the L0 motion information of the current block but may not be applied to the L1 motion information. Alternatively, the encoder and the decoder may implicitly apply template matching only to the L0 motion direction of the current block, and in the L1 motion direction, the L1 motion information may be corrected based on the distance between corrected L0 motion information and a reference picture. Furthermore, a context model for signaling whether a template is applied to the L1 motion direction may be determined based on at least one among the size of the current block, the aspect ratio of the current block, the magnitude of a difference value of the motion information, and whether a template is applied to the L0 motion direction.

The video signal processing device may reconstruct a motion information candidate list, based on cost values of motion information candidates in the motion information candidate list and information about whether TM is applied to the motion information candidates. The motion information candidate list may include a motion information candidate with the minimum cost value to which TM is applied, and a motion information candidate having the minimum cost value to which TM is not applied. The order within the motion information candidate list may be such that the motion information candidate to which TM has been applied is placed first, and the motion information candidate to which TM has not been applied is placed second. Alternatively, the reverse order may also be possible. That is, the motion candidate list may be constructed based on whether TM is applied. In this case, the information about whether TM is applied and information about an optimal motion information candidate may be integrated, and index information about which motion information candidate in the integrated motion information candidate list has been used and whether TM has been applied may be included in a bitstream. The decoder may parse the index information to determine a motion information candidate for the current block.

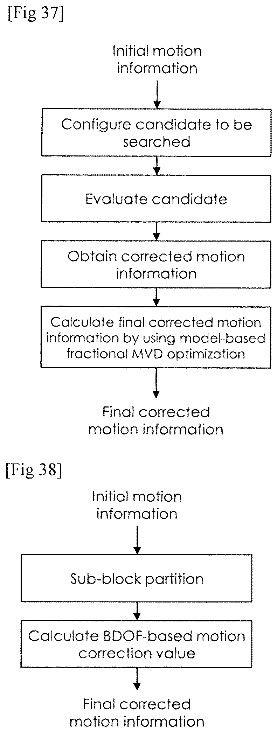

FIG. 37 illustrates a search method for obtaining a cost value related to corrected motion information of a coding block according to an embodiment of the present disclosure.

Referring to FIG. 37, the decoder may obtain initial motion information and, based on the obtained initial motion information, configure motion candidates to be searched for. The decoder may obtain corrected motion information based on cost values obtained by evaluating the configured motion candidates. The decoder may obtain final corrected motion information by using a model-based fractional MVD optimization according to the motion information resolution of the current block. The corrected motion information obtained in steps S3601, S3602, S3604, S3605, and S3606 in FIG. 36B may be obtained via the methods described with reference to FIGS. 37 and 38.

FIG. 38 illustrates a method for performing motion information correction based on BDOF according to an embodiment of the present disclosure.

The BDOF-based motion information correction in FIG. 38 specifically refers to the BDOF-based motion information correction in steps S3640 and S3606 in FIG. 36.

Referring to FIG. 38, the decoder may partition a current block into sub-blocks, and then calculate a BDOF-based motion information correction value, based on the motion information corrected in the previous step, to obtain final corrected motion information. BDOF may be used to correct a prediction block by estimating the amount of change of pixels from a reference block of a block configured with bidirectional motion. The motion information derived from the BDOF may be used to correct the motion of the current block. When the current block is encoded in at least one mode among affine, LIC, OBMC, sub-block MC, CIIP, SMVD, BCW with different weight, and MMVD, BDOF-based motion correction may not be performed. On the other hand, BDOF-based motion correction may be performed when any one of the following conditions are met. The conditions for performing the BDOF-based motion correction may include the cases in which: i) the motion of the current block in a merge mode is bidirectional; ii) the distances between reference pictures and the current picture are the same; iii) no weighted prediction between the reference blocks is applied; iv) the size of the current block is equal to or larger than a predetermined size; and v) OBMC is applied to the current block. The predetermined size may be either the horizontal or vertical size of the block. For example, a block may have a horizontal size of "8" and a vertical size of "8." Furthermore, the BDOF-based motion correction may be performed on a sub-block basis, and the size of a sub-block may be up to 16x16.

Applying the method of any in FIGS. 36 to 38 has the advantage of increasing the prediction efficiency of motion information of the current block, and reducing the bit rate for a motion difference value signaled from the bitstream. As the prediction efficiency of the motion information increases, there may be many cases where the motion information difference value is (0, 0). In such cases, the encoder may select, as a merge mode, a final encoding mode for the current block. Meanwhile, the merge mode uses one motion candidate list, so L0 and L1 are tied to each other, while an AMVP mode processes motion candidate lists of L0 and L1 independently of each other. Therefore, the TM performance of AMVP may be more effective because. That is, the encoder may select the AMVP mode in which the difference value of the motion information is (0, 0). In this case, the difference value of the motion information may or may not be transmitted additionally. Information about whether the difference value is additionally transmitted may be included in a bitstream and signaled. That is, information indicating whether the difference value of the motion information is transmitted and information about the difference value of the motion information may be included in the bitstream and signaled. The decoder may parse the information indicating whether the difference value of the motion information is transmitted, to determine whether there is a difference value for the current block. As a result of the parsing of the information indicating whether the difference value of the motion information is transmitted, when there is a difference value for the current block, the decoder may calculate the motion of the current block by adding the difference value, obtained by parsing the information about the difference value for the current block to a motion prediction value of the current block. As a result of the parsing of the information indicating whether the difference value of the motion information is transmitted, when there is no difference value for the current block, the decoder may not parse the information about the difference value for the current block. In this case, the difference value may be inferred to be (0, 0). That is, the motion of the current block may be calculated without a difference value, or may be calculated using a difference value of (0, 0).

When the AMVP mode in which the difference value of the motion information is small or (0, 0) occurs frequently, the difference values for motion information in the horizontal and vertical directions may not be signaled separately, but may be integrated in one information and signaled. The difference value (0, 0) in the horizontal and vertical directions may be signaled as a single flag information. In other words, when the encoder encodes the difference value of the motion information, the encoder may use both a method for separating the horizontal and vertical directions and performing signaling with separate codewords and a method for integrating the horizontal and vertical directions into a single codeword and performing signaling. For example, when difference values of actual motion information are equal to or less than a predetermined difference value, the difference values of the actual motion information in the horizontal and vertical directions may be integrated as a single codeword and signaled. When difference values of the actual motion information are larger than the predetermined difference value, the difference values of the actual motion information in the horizontal and vertical directions may be separated and signaled with separate codewords. In this case, the predetermined difference value may be an integer.

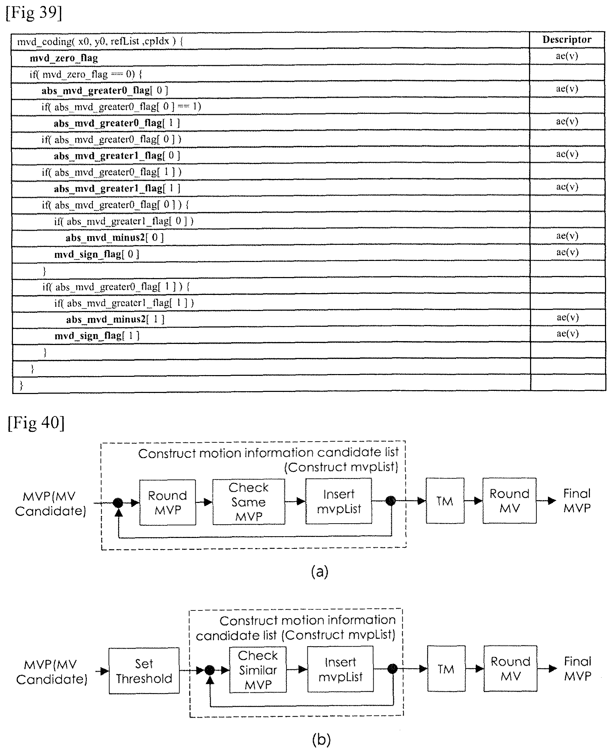

FIG. 39 illustrates a method for signaling a motion information difference value according to an embodiment of the present disclosure.

Referring to FIG. 39, the decoder may parse a syntax element, mvd_zero_flag, which indicates whether the motion information difference value is (0, 0). When the value of mvd_zero_flag is 1, the motion information difference value of a current block is set to (0, 0), and a subsequent parsing process may be omitted. The value of the mvd_zero_flag equal to 0 indicates that the motion information difference value of the current block is not (0, 0). The motion information difference value equal to (0, 0) may imply that there is no motion information difference value of the current block. That is, mvd_zero_flag may be a syntax element indicating whether there is a motion information difference value of the current block. When mvd_zero_flag has a value of 0, the decoder may parse abs_ mvd_greater0_flag[compIdx], a syntax element that indicates the magnitude of the horizontal and vertical vectors of a block's MVD. compIdx is the index of each component and may have a value of 0 or 1. A value of compIdx equal to 0 indicates an x component (i.e., horizontal direction) and a value of compIdx equal to 1 indicates a y component (i.e., vertical direction). A value of abs_mvd_greater0_flag[ 0 ] equal to 0 may indicate that the horizontal motion is zero, and when the horizontal motion is 0, the vertical motion has to be greater than or equal to 1. Therefore, when the value of abs_mvd_greater0_flag[ 0 ] is 0, the value of abs_mvd_greater0_flag[ 1 ] may be inferred to be 1 without being parsed. When the value of abs_mvd_greater0_flag[ 0 ] is 1, the vertical motion may be 0 or 1. Therefore, when the value of abs_mvd_greater0_flag[ 0 ] is 1, the decoder may parse abs_mvd_greater0_flag[ 1 ]. On the other hand, when mvd_zero_flag is not parsed, the value of mvd_zero_flag may be inferred to be 0. A syntax element indicating whether the parsing process illustrated in FIG. 39 is performed may be included in at least one of SPS, PPS, and a picture header, wherein a syntax element signaled in the SPS may be described as sps_mvd_zero_enabled_flag, a syntax element signaled in the PPS may be described as ppsmvd_zero_enabled_flag, and a syntax element signaled in the picture header may be described as ph_mvd_zero_enabled_flag. sps_mvd_zero_enabled_flag, pps_mvd_zero_enabled_flag, and ph_mvd_zero_enabled_flag may be syntax elements that indicate whether to parse the value of mvd_zero_flag. When the value of mvd_zero_flag is configured not to be parsed by at least one of sps_mvd_zero_enabled_flag, pps_mvd_zero_enabled_flag, and ph_mvd_zero_enabled_flag, the value of mvd_zero_flag may be configured to be the same as the value of the syntax element signaled in the SPS, PPS, or picture header.

When motion difference values are coded by an MMVD method in a merged mode, the motion difference values may be coded by the MMVD method in the merged mode by using the index of a table including predefined distances and direction information, either horizontal or vertical. When TM is used, the distribution of the motion difference values may have a shape that the motion difference values are more centered on 0. Therefore, a table may be constructed by integrating the distance information and the direction information. The distance information and the direction information may be signaled based on one index of one integrated table. In other words, in encoding the difference value of the motion information, both a method for separating the distance information and the direction information and signaling the information with respective indices and a method for signaling the distance information and the direction information with only one index may be used. For example, when the motion difference value is less than or equal to a predetermined value, the distance information and the direction information may be signaled with only one index, and when the motion difference value is greater than the predetermined value, the distance information and the direction information may be separated and signaled with respective indices. In this case, the predetermined value may be an integer such as 1, 2, 3, 4, ....

In general, an AMVP mode may be effective in a part, such as at an object boundary, where new motion is occurring. A merge mode has a feature of making the current block's motion information identical to that of neighboring blocks, and thus, may be effective in a part with similar motion, such as a background or the inside of an object. Due to the accuracy of a template, the motion correction method using TM may be used to correct a motion candidate in the step of constructing a motion candidate list for the AMVP mode. The motion correction method using DMVR is a bilateral matching (BM)-based method. Therefore, in the DMVR method, L0 and L1 reference blocks that are similar to the current block may be used to correct the motion information of the current block. Therefore, the DMVR method may be used to more accurately correct the motion information of the current block in a motion compensation step.

The DMVR method may also be used for blocks encoded in the AMVP mode in addition to the merge mode. Whether the DMVR method is applied may be determined based on at least one among the size of the current block, the magnitude of the motion difference value, AMVR information (resolution information for the motion information), and the amount of error signal in the current block. For example, when the current block is encoded in the AMVP mode and the AMVR of the current block is not a 1/4- or 1/16-pixel unit, the DMVR method or the MP-DMVR method may be applied in the motion compensation step.

When the current block is encoded in the AMVP mode, a TM method may be performed implicitly. Since the performance of the TM method varies depending on the accuracy of a template, whether to apply the TM method may be selectively determined. Whether to apply the TM method may be determined based on at least one among the size of the current block, AMVR information of the current block, a motion information candidate list for the current block, quantization parameters of the current block, and the amount of error signal in the current block. For example, when the AMVR information of the current block is not a 1/4- or 1/16-pixel unit (or when the AMVR information is in a 1/4- or 1/16-pixel unit), the TM method may be implicitly applied. Alternatively, when the AMVR information in the current block is not a 1/4- or 1/16-pixel unit (or when the AMVR information is in a 1/4- or 1/16-pixel unit), information indicating whether TM is applied may be included in a bitstream and signaled.

The DMVR method may be applied when the encoding mode of the current block is a merge mode, and OBMC may be performed in the motion compensation step. Whether OBMC is performed may be determined based on information about whether the encoding mode of the current block is an AMVP mode or a merge mode, and information about whether additional motion information in an MHP mode is encoded in an AMVP mode or encoded in a merge mode. When the current block has been encoded in the merge mode and the additional motion information in the AMVP mode is used via an MHP method, OBMC may not be performed.

When the MHP method is used for the current block and the additional motion information is in an AMVP mode, AMVR of the additional motion information may be implicitly set based on information about whether the current block's encoding mode is an AMVP or a merge. When the encoding mode of the current block is the AMVP mode, the AMVR of the additional motion information may be implicitly set to the AMVR mode of the current block.

When the encoding mode of the current block is the AMVP mode, the AMVR of additional motion information may be implicitly set to a 1/4-pixel unit in order to provide more accurate motion information. When the encoding mode of the current block is a merge mode, the AMVR of additional motion information may be implicitly set to a 1/4-pixel unit.

When the MHP method is used for the current block and the additional motion information is in an AMVP mode, the TM method may not be performed to reduce complexity. Conversely, when the MHP method is used for the current block and the additional motion information is in AMVP mode, the TM method may be performed to improve performance.

In the present specification, the wording "implicitly set" may imply that the encoder does not generate a bitstream containing information, and the decoder sets the information to a predetermined value without parsing the information.

To find an optimal candidate among multiple candidates, a template-based algorithm may be used. Here, the candidates may refer to a coding mode of the current block, a motion information candidate of the current block, a sign for a motion difference value of the current block, a sign value of a difference signal, etc. For the template-based algorithm, cost values of all candidates may be calculated using a template, and a candidate corresponding to the minimum cost value may be selected, or all candidates may be reordered based on the cost values. Since the optimal candidate may be selected based on the cost values, the encoding efficiency may vary depending on how well the template reflects the characteristics of the current block. That is, since the encoding efficiency varies depending on a method for constructing a template, a method for constructing an optimal template may also be important. Therefore, the optimal template and the optimal candidate may be determined based on the cost values by using various templates for each candidate. Various types of templates may be configured by varying the size of the template or by varying a position where the template is constructed. For example, three types of templates may be constructed. Specifically, a template may include only a block adjacent to the left of the current block, may include only a block adjacent to the top of the current block, or may include both a block adjacent to the left of the current block and a block adjacent to the top of the current block. Information indicating the type of a template may be included in a bitstream and signaled. That is, the decoder may parse the information indicating the type of the template to configure the template.

The video signal processing device may calculate a cost value by using various types of templates for each motion information candidate, and may perform the TM method based on a template and a motion candidate corresponding to the minimum cost value. The following describes a TM method performed in constructing a motion information candidate list.

The video signal processing device may construct a motion candidate list for the current block. The video signal processing device may configure the three types of templates described above. Based on each of the three types of templates, the video signal processing device may calculate cost values of motion information candidates in the motion information candidate list. Based on the calculated cost values, the motion information candidates may be reordered. For example, the video signal processing device may reorder the motion information candidates in ascending order of cost values, or may reorder the motion information candidates in descending order of cost values. The video signal processing device may determine a template type corresponding to a motion information candidate having the minimum cost value among the motion information candidates, and perform TM. Motion information that is corrected by performing TM may be selected as a final motion information candidate.

Only one of the three types of templates may be used based on at least one among the size of the current block, the magnitude of a motion difference value, AMVR information, the amount of error signal in the current block, the degree of change in pixel of a neighboring block adjacent to the current block, whether an OBMC or MHP mode is applied to the current block, and whether the left or top boundary of the current block is adjacent to a picture/slice/tile boundary. This is for the purpose of reducing complexity. For example, when the degree of change in pixel of a neighboring block adjacent to the current block is gradual, only a template including only a block adjacent to the left of the current block may be used. For example, when the top boundary of the current block is adjacent to the picture boundary, only a template including only a block adjacent to the left of the current block may be used. In this case, information about what type of template is used may not be included in a bitstream and may not be signaled. When the top boundary of the current block is adjacent to the picture boundary, the decoder may infer a template type as a predetermined type (i.e., a template including only a block adjacent to the left of the current block). That is, the template type may be implicitly inferred without explicit signaling.

When AMVR is performed on the current block, the motion resolution of the current block may be changed according to AMVR information. For example, when the AMVR information causes the motion resolution to be set to a 1-pixel unit, the values of 1/2- and 1/4-pixel units more precise than the 1-integer pixel unit in the motion information of the current block are rounded up (or rounded or rounded down) to the 1-integer pixel unit, and only motion information in the 1-integer pixel unit remains. Optimal motion information of the current block may not be explicitly signaled, but may be predicted and encoded. That is, the difference value between a motion prediction value (a motion information candidate) derived from the current block's neighboring block and the optimal motion information of the current block may be included in a bitstream and signaled. When AMVR is performed on the current block, the optimal motion information of the current block is expressed in AMVR resolution, so the motion prediction value derived from neighboring block must also be changed according to the AMVR resolution. Since the motion prediction value and the optimal motion information of the current block are expressed in the same AMVR resolution, the motion difference value may also be expressed in the same AMVR resolution as the current block's AMVR resolution.

When motion information candidate list is constructed for the current block to which AMVR has been applied, all of motion information candidates within the motion information candidate list may be changed according to the AMVR resolution. When the TM method using the motion candidate list changed according to the AMVR resolution is performed, at least one among the search range, the search interval, the search pattern, the number of iterations, and the size of a template of the following may be changed depending on the AMVR resolution. For example, when the AMVR resolution is a 1-integer pixel unit, the video signal processing device may perform TM that searches for a motion information candidates only for a position of at least 1-integer pixel unit. The video signal processing device may not search for a motion information candidates with respect to 1/2-, 1/4-, and 1/16-pixel units. Meanwhile, the video signal processing device may perform TM for all positions of motion candidates to be searched for regardless of the AMVR resolution. That is, even when the AMVR resolution is a 1-integer pixel unit, the video signal processing device may perform search for TM not only for a 1-integer pixel unit but also for a 1/2-pixel unit, a 1/4-pixel unit, ..., etc. Furthermore, since TM may be performed regardless of the AMVR resolution, a final corrected motion information candidate may be rounded up, rounded, or rounded down. That is, search conditions (e.g., search interval, etc.) for TM may determine whether rounding is applied.

When the TM method is performed, the position of a motion information candidate for initial search may be derived from the motion information candidate list for the current block. In this case, the AMVR resolution of the motion information candidate may be 1/4 or 1/16 depending on the encoding mode of the current block. When the encoding mode of the current block is an affine mode, the AMVR resolution may be a 1/16- pixel unit. When the encoding mode of the current block is not the affine mode, the AMVR resolution may be a 1/4-pixel unit. When TM with an AMVR resolution of a 1-integer pixel unit is performed, the AMVR resolution of a motion information candidate in the motion information candidate list may be a 1/4- or 1/16-pixel unit. In this case, the 1/4- or 1/16-pixel unit may be rounded up, rounded, or rounded down to a 1-integer pixel unit, and the video signal processing device may perform TM. In this case, since TM is performed in the 1-integer pixel unit, the result of performing TM may also be in a 1-integer pixel unit.

As the motion resolution become more precise, the image quality of a motion-compensated block may improve. That is, the image quality of a block motion-compensated in a 1/4-pixel unit rather than a 1-integer pixel unit is higher. This is an effect of the interpolation used to calculate a 1/4-pixel sample from an integer pixel, and is because a weighted average value, obtained by referencing multiple neighboring integer pixels is used to obtain a 1/4 pixel. When the video signal processing device performs TM in which the AMVR resolution is a 1-integer pixel unit, the performance of motion correction may be increased by using a motion candidate having a 1/4 or 1/16 motion resolution before rounding. In this case, the motion resolution of an initial motion information candidate before TM is performed may be 1/4 or 1/16. The position of a motion information candidate to be searched for may be a position shifted by a 1-integer pixel relative to the position of the initial motion information candidate. For example, when the position of an initial motion information candidate having a motion resolution of 1/4 is (10.25, 5.75) and the cross pattern is applied, the positions of motion information candidates to be newly searched for may be (11.25, 5.75), (9.25, 5.75), (10.25, 6.75), and (10.25, 4.75). The video signal processing device may calculate a cost value of each of the four motion information candidates to be newly searched for. In this case, when the motion information candidate corresponding to the smallest cost value is (10.25, 6.75), the video signal processing device may perform rounding in a 1-integer pixel unit to obtain a corrected motion information candidate of (10, 7). Whether rounding is applied to a motion information candidate may be determined based on block, tile, slice picture, or SPS units. Based on each unit, whether rounding is applied may be determined by a separate syntax element, and the syntax element may be included in a bitstream and signaled. That is, the decoder may parse the syntax element to determine whether to apply rounding to the motion information candidate.

The motion candidate list may be configured using at least one of spatial or temporal motion information of a neighboring block and history-based motion information. To prevent the motion candidate list from including duplicate motion information, motion candidates to be included in the list are included in the motion candidate list only when the motion candidates are not duplicates after a redundancy check is performed. In this case, to reduce the complexity of the redundancy check, the redundancy check may be performed only on motion candidates of a predefined neighboring block. If the AMVR resolution is a 1-integer pixel unit, the motion candidates of the neighboring block may be rounded to a 1-integer pixel unit, and then the redundancy check may be performed. Performing TM, based on whether this rounding is applied, may be applied in various ways as follows.

FIG. 40 illustrates a method for performing TM based on motion information candidates according to an embodiment of the present disclosure.

In FIG. 40, MVP is information derived from neighboring blocks of a current block, and may be expressed as an MV candidate.

FIG. 40A illustrates a method of performing TM, based on motion information candidates to which rounding has been applied. Referring to FIG. 40A, a-1) the video signal processing device may first, a-1-i) derive motion information candidates from neighboring blocks of the current block. The video signal processing device may then construct a motion information candidate list for the current block. a-1-ii) The video signal processing device may perform a rounding process on the motion information candidates in accordance with the AMVR resolution of the current block. Since rounding has been applied to the motion information candidates, there may be more identical motion information candidates than before rounding. a-1-iii) The video signal processing device may determine the sameness between the motion information candidates, and then determine, based on the sameness, whether to add the motion information candidates to the motion information candidate list. For example, when motion information candidates are identical, the video signal processing device may only add one of the two identical motion information candidates to the list. On the other hand, when motion information candidates are not identical, the video signal processing device may add all of the two candidates to the list. The video signal processing device may repeat steps a-1-i) to a-1-iii) for the neighboring blocks of the current block. a-2) The video signal processing device may calculate TM-based cost valued for the motion information candidates in the motion information candidate list, and may reorder the motion information candidates, based on the calculated cost valued. a-3) The video signal processing device may perform TM on a candidate corresponding to the smallest cost value in the motion information candidate list. a-4) The video signal processing device may identify whether to perform rounding on a corrected motion information candidate. Whether rounding is performed may be determined based on whether rounding is applied to a motion information candidate input to TM or based on the search interval when performing TM. For example, when rounding was not applied to the motion information candidate input to TM, the rounding process may be applied after TM is performed. Alternatively, when rounding is applied to the motion information candidate input to TM and the search interval at the time of performing TM is less than the AMVR resolution of the current block, the rounding process may be performed after performing TM. a-5) The video signal processing device may obtain final motion information through the process of a-4).

FIG. 40B illustrates a method for performing TM based on motion information candidates to which rounding has not been applied. Referring to FIG. 40B, b-1) the video signal processing device may construct a motion information candidate list for a current block. b-1-i) The video signal processing device may set a threshold for determining the similarity between motion information candidates in the motion information candidate list. b-1-ii) The video signal processing device may set the threshold to 1 when AMVR is not applied to the current block. On the other hand, when the video signal processing device is configured to apply AMVR to the current block, the video signal processing device may use a new threshold by changing the threshold, 1, which is set when AMVR is not applied. That is, the video signal processing device may set the threshold differently depending on the AMVR resolution. For example, when the AMVR resolution is a 4-integer pixel unit, the video signal processing device may set the threshold to "1<<5." When the AMVR resolution is a 1-integer pixel unit, the video signal processing device may set the threshold to "1<<3." When the AMVR resolution is a 1/2-pixel unit, the video signal processing device may set the threshold to "1<<2." In the present specification, "<<" is a left shift operation, and "X<<Y" implies that X is multiplied by 2 raised to the power of Y. The threshold (i.e., 1) that is set when AMVR is not applied to the current block may be variously changed. For example, the threshold may be changed to an integer greater than or equal to 1. b-1-iii) The video signal processing device may derive motion information candidates from neighboring blocks of the current block. B-1-iv) The video signal processing device may determine the similarity between the candidates, based on a motion information threshold, and then determine, based on the similarity, whether to add the motion information candidates to the motion information candidate list. For example, when the similarity between motion information candidates is within the threshold, the video signal processing device may determine that the corresponding motion information candidates are similar to each other, and add only one of the two compared motion candidates to the motion information candidate list. On the other hand, when the video signal processing device determines that the two compared motion information candidates are not similar to each other (i.e., the similarity is greater than the threshold), the video signal processing device may add all of the two motion information candidates to the motion information candidate list. The video signal processing device may repeat steps b-1-iii) and b-1-iv) for the neighboring blocks of the current block. b-2) The video signal processing device may reorder the motion information candidates in the motion information candidate list, based on TM cost values of the motion information candidates. b-3) The video signal processing device may perform TM on a candidate corresponding to the smallest cost value among the candidates in the motion information candidate list. b-4) After performing TM in b-3), the video signal processing device may perform rounding on a corrected motion information candidate.

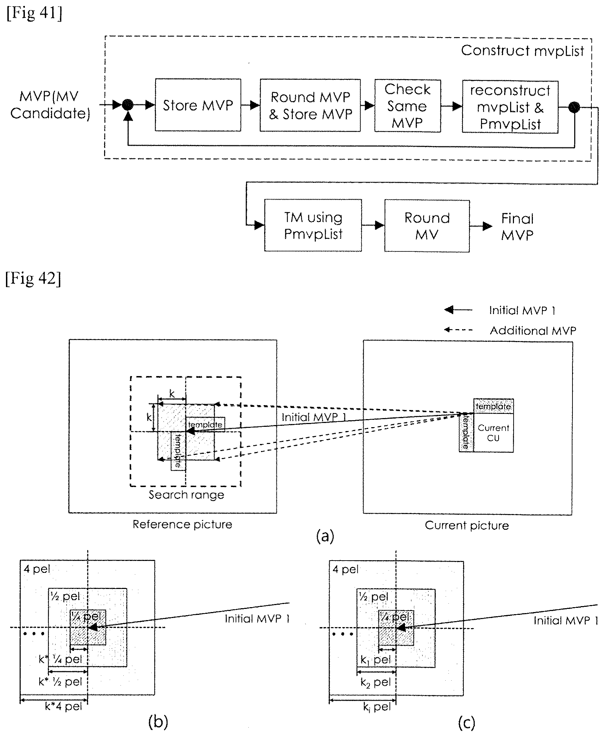

FIG. 41 illustrates a method for performing TM based on motion information candidates according to an embodiment of the present disclosure.

FIG. 41 relates to a method for storing a motion information candidate before rounding is applied, and using, for TM, the motion information candidate before rounding is applied.

Referring to FIG. 41, the video signal processing device may construct a motion information candidate list and a temporary list (a motion information candidate list to which rounding has not been applied, PmvpList) for a current block. The motion information candidate list and the temporary list may include similar motion information candidates, differing only in whether rounding is applied. 1) The video signal processing device may derive motion information candidates from neighboring blocks of the current block. The video signal processing device may store the derived motion information candidates in the temporary list. The video signal processing device may round the motion information candidates in accordance with the AMVR resolution of the current block and store the motion information candidates in the list. The video signal processing device may determine the sameness between the motion information candidates, and then may reconstruct the motion information candidate list and the temporary list, based on the sameness. The sameness may be compared between a motion information candidates in the motion information candidate list and a motion information candidate in the temporary list. For example, when motion information candidates are identical, the video signal processing device may remove one of the two motion information candidates being compared for sameness from the corresponding list. When the motion information candidates are not identical, the video signal processing device may maintain the motion information candidate list and the temporary list. The video signal processing device may repeat the process of 1) for the neighboring blocks of the current block. 2) The video signal processing device may reorder the motion information candidates in the temporary list, based on TM cost values of the motion information candidates in the temporary list (the motion information candidates before being rounded). 3) The video signal processing device may perform TM on a candidate corresponding to the smallest cost value among the motion information candidates in the temporary list. 4) After performing TM, the video signal processing device may perform rounding on a corrected motion information candidate. 5) The video signal processing device may select the corrected motion information candidate as a final motion information candidate.

A merge mode may be effective when the current block is similar to the motion of neighboring blocks, while an AMVP mode may be effective on blocks where new motion appear. Therefore, a TM method using neighboring blocks in the AMVP mode may be ineffective on certain blocks. Accordingly, whether TM is performed may be determined based on at least one among the size of the current block, the aspect ratio of the current block, encoding mode information of the current block, the AMVR resolution information of the current block, the amount of error signal, the position of the last transform coefficient in the error signal, the difference value between motion information of a spatial neighboring block and motion information of a temporal neighboring block, a TM-based cost value, and information about whether OBMC or MHP is applied to the current block.

The video signal processing device may determine whether to perform TM by comparing the difference value between the motion information of the spatial neighboring block and the motion information of the temporal neighboring block with a predetermined value. For example, when the difference value between the motion information of the spatial neighboring block and the motion information of the temporal neighboring block is greater than the predetermined value, the current block is likely to be a new motion, and therefore, TM may not be performed. In this case, the predetermined value may be an integer greater than or equal to 1. Alternatively, when the difference value between the motion information of the spatial neighboring block and the motion information of the temporal neighboring block is greater than the predetermined value, the TM process may be performed.

The video signal processing device may construct a motion information candidate list by using at least one of motion information candidates to which TM has been applied and motion information candidates to which TM has not been applied. Alternatively, the video signal processing device may construct a motion information candidate list by using at least one of motion information candidates to which TM is to be applied and motion information candidates to which TM is not to be applied. Index information of an optimal motion information candidate in the constructed motion information candidate list may be included in a bitstream and signaled. The decoder may parse the index information to select the optimal motion information candidate in the motion information candidate list. Whether the motion information candidate is a motion information candidate to which TM is to be applied may be determined based on at least one among a cost value, whether a relevant motion information candidate has been derived from a spatial neighboring block or a temporal neighboring block, and a difference value between motion candidates. For example, TM may be applied to a motion information candidate having the smallest cost value among the motion information candidates in the motion information candidate list, and TM may not be applied to a motion information candidate having the largest cost value. Alternatively, the motion information candidate list may include a motion information candidate with the smallest cost value among the motion information candidates in the motion information candidate list and motion information obtained by applying TM to the motion information candidate with the smallest cost value. In this case, the motion information candidate to which TM has been applied may be placed first in the list and a motion information candidate to which TM has not been applied may be placed second in the list, and vice versa. Alternatively, the motion information candidate to which TM has not been applied may be one among the motion information candidate with the smallest cost value, and the motion information candidate derived from the temporal neighboring block. The motion information candidate list may be constructed in the order of the motion information candidate to which TM has been applied, the motion information candidate with the smallest cost value, and the motion candidate derived from the temporal neighboring block. That is, the motion information candidate list may be constructed based on whether TM is applied. This has the advantage of integrating and signaling whether TM is applied and the optimal motion information candidate. In this case, index information about which motion information candidate in the motion information candidate list is used may be included in a bitstream and signaled. The decoder may parse the index information to configure a motion information candidate for the current block. Alternatively, TM may be applied to a motion information candidate derived from a spatial neighboring block, but TM may not be applied to a motion information candidate derived from a temporal neighboring block.

Based on the template-based cost value, whether TM is performed may be determined. Based on the template-based cost value and whether TM is performed, the motion information candidate list may be determined. i) The video signal processing device may construct a motion information candidate list for the current block. ii) The video signal processing device may calculate template-based cost values by using motion information candidates in the motion information candidate list. iii) The video signal processing device may reorder the motion information candidates in the motion information candidate list, based on the template-based cost values calculated in ii). iv) The video signal processing device may select a candidate having the smallest cost value and a candidate having the largest cost value from among the motion information candidates in the motion information candidate list. In this case, each candidate may be selected based on a specific threshold. For example, a motion information candidate having a cost value greater than the specific threshold may be excluded, and a candidate having the smallest cost value and a candidate having the largest cost value may be selected among motion information candidates having cost values within the threshold. v) The video signal processing device may perform motion correction using TM on the candidate having the smallest cost value. vi) the motion information candidate list may be constructed to include the corrected motion information candidate and the motion information candidate having the largest cost value.

The motion information candidate list may include two or more motion information candidates, including a motion information candidate having a motion corrected based on TM, and a motion information candidate for which TM has not been performed. To select a final motion information candidate for the current block, a candidate in the motion information candidate list may be randomly selected, and index information regarding the randomly selected candidate may be included in a bitstream and signaled. The decoder may parse the index information to determine the motion information candidate for the current block.

TM may be performed only on a motion information candidate having the smallest cost value in the motion information candidate list. In this case, a search range is configured based on the motion information candidate having the smallest cost value, and a corrected motion information candidate may be obtained within the search range. When the search range is fixed, this may be efficient in terms of complexity but inefficient in terms of TM performance. Therefore, there is a need for a method to improve TM performance by dynamically changing the search range or further widening the search range. Hereinafter, a method for changing the fixed search range will be described.

The video signal processing device may reconstruct the motion information candidate list to select motion information candidates. By reconfiguring the motion information candidate list to select motion information candidates, a search range more effective than the existing fixed search range may be selected. For example, the video signal processing device may use the motion information candidates in the motion information candidate list to generate an additional motion information candidate. The video signal processing device may add the additionally generated motion information candidate to the motion information candidate list. The video signal processing device may generate the additional motion information candidate by adding or subtracting a predetermined number to or from the existing motion information candidate. The predetermined number is an integer equal to or greater than 1. That is, the video signal processing device may reconstruct the existing motion information candidate list to construct an expanded motion information candidate list, and then select an optimal motion information candidate, based on a cost value.

FIG. 42 illustrates a method for generating an additional motion information candidate according to an embodiment of the present disclosure.

Referring to FIG. 42A, the video signal processing device may generate four new motion information candidates (dashed arrows) by using one motion information candidate (solid arrow, initial MVP 1) in a motion information candidate list. New motion information candidates may be generated for all motion information candidates in the motion information candidate list. Alternatively, a new motion information candidate may be generated for only a motion information candidate that are determined based on at least one among the size of a current block, the aspect ratio of the current block, encoding mode information of the current block, AMVR resolution information of the current block, the amount of error signal, and the position of the last transform coefficient in the error signal. For example, when there are two motion information candidates in the motion information candidate list, the video signal processing device may select an optimal motion information candidate, based on cost values of a total of ten motion information candidates, including newly generated motion information candidates (where there are four newly generated motion information candidates for each motion information candidate). The video signal processing device may generate a new motion information candidate by adding or subtracting a predetermined number K to or from horizontal and vertical components of motion information candidates in the list in the direction (+, +), (+, -), (-, +), or (-, -). In addition, the video signal processing device may generate a new motion candidate by performing addition or subtraction in a form such as (+, 0), (-, 0), (0, +), or (0, -). In this case, the predetermined number K may be an integer equal to or greater than 1, and may be 4. Referring to FIG. 42B, the predetermined number k may be determined based on the AMVR resolution. When the AMVR resolution of the current block is 1/16 pixel, the predetermined number K may be set to "K/16." When the AMVR resolution of the current block is 1/4 pixel, the predetermined number K may be set to "K/4." When the AMVR resolution of the current block is 1/2 pixel, the predetermined number K may be set to "K/2." When the AMVR resolution of the current block is a 1-integer pixel, the predetermined number K may remain unchanged. When the AMVR resolution of the current block is a 4-integer pixel, the predetermined number K may be set to "K*4." In this case, the predetermined number K may be described as an initial offset distance. Referring to FIG. 42C, the initial offset distance K may be determined based on the AMVR resolution of the current block. When the AMVR resolution of the current block is 1/16 pixel, the initial offset distance may be set to "K₀." When the AMVR resolution of the current block is 1/4 pixel, the initial offset distance may be set to "K₁." When the AMVR resolution of the current block is 1/2 pixel, the initial offset distance can be set to "K₂." When the AMVR resolution of the current block is 1-integer pixel, the initial offset distance may be set to "K₃." When the AMVR resolution of the current block is 4-integer pixel, the initial offset distance may be set to "K₄." Also, depending on the AMVR resolution of the current block, the initial offset distance may be reset to an actual offset distance. When the AMVR resolution of the current block is 1/16 pixel, the initial offset distance "K₀" may be reset to "K₀*1/16." When the AMVR resolution of the current block is 1/4 pixel, the initial offset distance "K₁" may be reset to "K₁*1/4." When the AMVR resolution of the current block is 1/2 pixel, the initial offset distance "K2" may be reset to "K₂*1/2." When the AMVR resolution of the current block is 1-integer pixel, the initial offset distance "K₃" may be reset to "K₃*1." When the AMVR resolution of the current block is 4-integer pixel, the initial offset distance "K₄" may be reset to "K₄*4." Here, "K₀," "K₁," "K₂," ... "Kᵢ" are predetermined values, which may be integers greater than or equal to 1, and may be equal to or different from each other. Furthermore, "K₀," "K₁," "K₂," ... "Kᵢ" may be set based on at least one among the size of the current block, the aspect ratio of the current block, encoding mode information of the current block, a quantization parameter, AMVR resolution information of the current block, the amount of error signal, the position of the last transform coefficient in the error signal, and information about whether OBMC or MHP is applied to the current block. Furthermore, information about the initial offset distance K may be included in at least one of the SPS, PPS, picture/tile/slice, coding block (or unit), and block of a bitstream and signaled. The decoder may parse the information about the initial offset distance K to set the initial offset distance K.

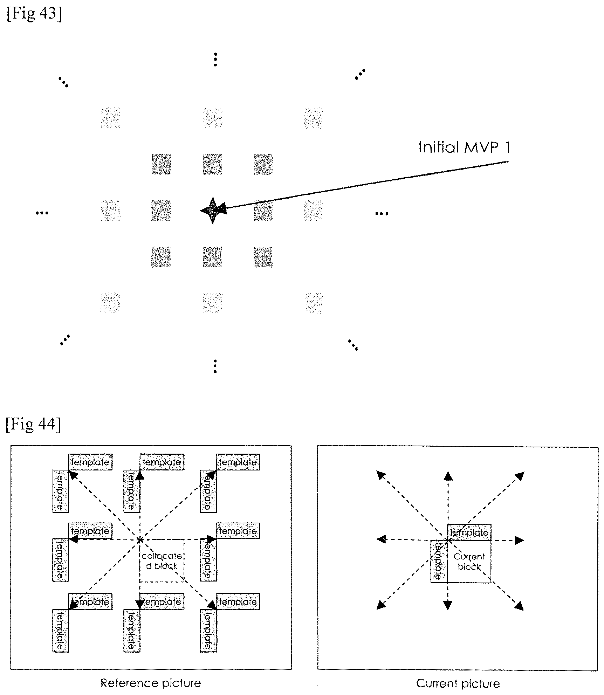

FIGS. 43 and 44 illustrate a method for generating an additional motion information candidate according to an embodiment of the present disclosure.

Referring to FIG. 43, also, when a predetermined number K is "1, 2, 3, 4, ..., i," the video signal processing device may generate eight new motion information candidates by adding or subtracting in the directions (+, +), (+, -), (-, +), (-, -), (+, 0), (-, 0), (0, +), and (0, -), relative to one motion information candidate (solid line MV, initial MVP 1) for every K. Referring to FIG. 44, new motion information candidates and templates based on the new motion information candidates are shown at positions spaced by the predetermined number (K) in eight directions ((+, +), (+, -), (-, +), (-, -), (+, 0), (-, 0), (0, +), and (0, -)), relative to the position of the current block. Furthermore, a collocated block in a reference picture corresponding to the current block in FIG. 44, may be a block at a position indicated by a predetermined motion information candidate. Furthermore, the collocated block in the reference picture corresponding to the current block in FIG. 44 may be a block at the same position in the reference picture as the current block. Furthermore, the collocated block in the reference picture corresponding to the current block in FIG. 44 may be a block at a position indicated by motion information of a neighboring block (e.g., a left block or an above block) of the current block. The predetermined number K may be an integer equal to or greater than 1, and may be 4. The predetermined number K may be determined based on at least one among the size of the current block, the aspect ratio of the current block, encoding mode information of the current block, a quantization parameter, AMVR resolution information of the current block, the number of transform coefficients in error signal, the position of the last transform coefficient in the error signal, and whether OBMC or MHP is applied to the current block.

The video signal processing device may add a new motion information candidate to an existing motion information candidate list to select an optimal motion information candidate based on TM cost values. The video signal processing device may determine a motion information positioned at the predetermined distance K from the position of the current block as a new motion information candidate, and add the new motion information candidate to the motion information candidate list. Here, a method for generating the new motion candidate may be the method described with reference to FIGS. 42 to 44. In an embodiment, the predetermined number may be set differently depending on the AMVR resolution, and K set based on the AMVR resolution may be set in the same way as described in FIG. 42.

The video signal processing device may perform first TM by using all motion information candidates in an initially constructed motion information candidate list, and then select an optimal motion information candidate based on a TM cost value. The video signal processing device may perform second TM on the selected optimal motion information candidate to obtain a corrected motion information candidate. The video signal processing device may perform first, second, third, ...Nth TM. Here, whether to perform the Nth TM may be determined based on at least one among the size of the current block, the aspect ratio of the current block, encoding mode information of the current block, AMVR resolution information of the current block, the amount of error signal, the position of the last transform coefficient in the error signal, and whether OBMC or MHP is applied to the current block.

The video signal processing device may perform first TM by using all the motion information candidates in the initially constructed motion information candidate list, but may perform new TM that has lower complexity than the existing TM method. Next, the video signal processing device may select an optimal motion information candidate, based on cost values of motion information candidates corrected through the first TM. Next, the video signal processing device may perform second TM on the selected optimal motion candidate to obtain an additionally corrected motion information candidate. In this case, the second TM (new TM) may be a method that performs only part of the existing TM process. Furthermore, the second TM may perform the entire existing TM process. The video signal processing device may perform the second TM to obtain the additionally corrected motion information candidate.

The video signal processing device may perform first TM by using all motion information candidates in the initially configured motion information candidate list, but may perform TM having lower complexity than an existing TM method. Next, the video signal processing device may select an optimal motion information candidate, based on cost values of motion information candidates corrected by performing the first TM. The video signal processing device may perform second TM on the selected optimal motion information candidate. In this case, the second TM may also be TM having a lower complexity than the existing TM. The video signal processing device may perform the second TM to obtain an additionally corrected motion information candidate. In this case, the first TM may be a method of performing up to a specific process within the existing TM processes, and the second TM may be a method of performing processes subsequent to the method performed in the first TM.

The search range may be configured based on at least one among the size of the current block, the aspect ratio of the current block, encoding mode information of the current block, AMVR resolution information of the current block, the amount of error signal, the position of the last transform coefficient in the error signal, and whether OBMC or MHP is applied to the current block. For example, when the AMVR resolution of the current block is 1-integer pixel, the video signal processing device may configure or reconfigure the search range by extending an existing search range by a predetermined number. The predetermined number may be an integer greater than or equal to 1. The extended search range may be an equally extended range in the horizontal or vertical direction. Alternatively, the search range may extend in the horizontal direction only, in the vertical direction only, or in both the horizontal and vertical directions. For example, when the search range is extended by 4 in the horizontal direction only, the existing search range of (-X, -Y) to (X, Y) may be expanded to (-X-4, -Y) to (X+4, Y).

TM may have a search range configured based on an initial motion information candidate. Thus, the search range when TM is performed once again based on the corrected motion information candidate as described in FIGS. 42 to 44 may be configured based on the corrected motion information candidate. That is, TM may be performed in a new search range, and a newly corrected motion information candidate may be obtained. Whether the TM method is repeated recursively may be determined based on at least one among the size of the current block, the aspect ratio of the current block, encoding mode information of the current block, AMVR resolution information of the current block, the amount of error signal, and the position of the last transform coefficient in the error signal. For example, when AMVR has been applied to the current block or when the AMVR resolution is greater than or equal to a predetermined value, TM may be performed again using a motion information candidate corrected in the previous TM step. Here, the predetermined value may be a decimal or integer in the range of 1/2, 1, 2, ....

When TM is performed recursively, the complexity may increase. To address this, the video signal processing device may select the smallest candidate among cost values of new motion information candidates generated by adding or subtracting a predetermined number relative to a motion information candidate corrected in the previous TM step. The predetermined number may be a decimal or integer of 1/2, 1, 2, .... For example, when the value of the motion information candidate corrected in the previous TM step is (10, -5), the video signal processing device may add or subtract a value of 1 to obtain new candidates (11, -5), (9, -5), (10, -6), and (10, -4). The video signal processing device may determine that the candidate having the smallest cost value, among the corrected motion candidate and the new candidates, is an optimal corrected motion information candidate. In this case, the predetermined number may be set differently depending on the AMVR resolution. The predetermined number may be set to "1<<4" when the AMVR resolution of the current block is 1-integer pixel, and may be set to "1 <<6" when the AMVR resolution of the current block is 4-integer pixel. Meanwhile, TM may be performed recursively when the corrected motion information candidate is positioned at or near the boundary of the search area. The wording "near the boundary" may refer to "within a predetermined value from the boundary of the search area," and the predetermined value may be an integer greater than or equal to 1.

The TM method improves the encoding efficiency by searching for an optimal motion information candidate, but there is a problem of increased complexity. To address this complexity problem, the video signal processing device may not search for all motion information candidates at a specific search step, but may terminate the search process when a predetermined condition is met. The predetermined condition may be a condition based on at least one among the size of the current block, the cost value of an optimal motion information candidate corrected in the previous step, AMVR resolution information of the current block, and whether OBMC or MHP is applied to the current block. For example, the video signal processing device may compare the cost value of a specific motion information candidate in the current step with the cost value of the optimal motion information candidate corrected in a previous step to determine whether to terminate the search. When the cost value of the specific motion information candidate in the current step is less than the cost value of the optimal motion information candidate corrected in the previous step, the video signal processing device may terminate the search. In the opposite case, the video signal processing device may continue the search. Also, in the case of a video captured with a fixed camera, there may be more horizontal motion than vertical motion. In this case, the video signal processing device may first perform the search in the horizontal detection. Alternatively, the search order may be a predefined order. Information about the order of performing search may be included in the SPS, PPS, picture/tile/slice header, etc. of a bitstream and signaled. The decoder may parse the information about the order of performing search to determine the order of performing search. The order of performing search may be determined based on at least one among the size of the current block, the horizontal or vertical size of the current block, and AMVR information of the current block. For example, when the size of the current block is 16x16 or larger, the search order may prioritize the vertical direction. Alternatively, when the AMVR information of the current block is greater than a 1-integer pixel unit, the search order may prioritize the horizontal direction. Alternatively, the search order may be predefined.

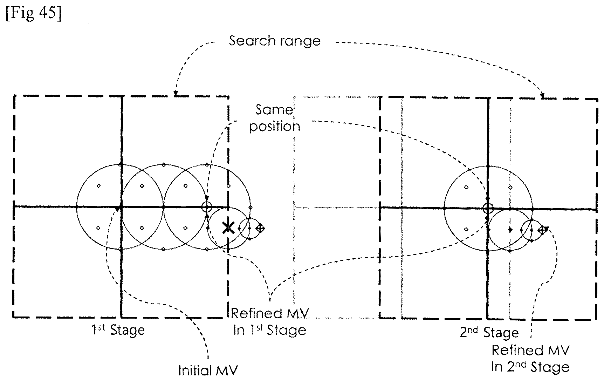

FIGS. 45 to 48 illustrate TM that is recursively performed according to an embodiment of the present disclosure.

Referring to FIG. 45, the video signal processing device may perform first TM and perform second TM, based on a corrected motion information. In this case, the search range of the second TM may be based on the corrected motion information, so the search area may differ and the encoding efficiency may be improved. However, a complexity problem may arise because TM is performed twice. Hereinafter, a method for addressing this complexity will be described.

Whether recursive TM is performed, whether TM is performed up to which step during recursive TM, the search range, the search interval, the search pattern, the number of iterations, the search order, and the size of a template may be determined based on at least one among the size of a current block, the horizontal or vertical size of the current block, AMVR information of the current block, information about how many times recursive TM is performed, a difference in the horizontal or vertical magnitude between an initial motion information candidate and a corrected motion information candidate in a previous TM step, and whether OBMC or MHP is applied to the current block. For example, when picture order counts (POCs) of reference pictures are all less than or equal to the POC of the current picture, the size of the current block is less than or equal to 128, and the AMVR resolution information of the current block is a 1/16-, 1/4-, 1/2-, or 1-pixel unit, TM described in the present specification may be performed.

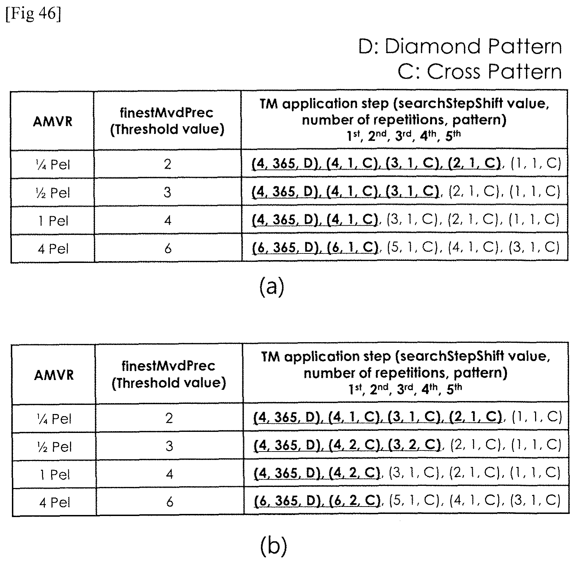

FIG. 46 illustrates whether a search at each TM application step is performed based on the AMVR resolution and threshold value (finestMvdPrec) of a current block, a search interval (searchStepShift), the number of iterations, and a search pattern according to an embodiment of the present disclosure, and illustrates a case in which the search inside TM is repeated five times according to the search interval, the number of iterations, and the search pattern. Whether the search at each TM application step is performed is underlined, and the search may be performed using "(search interval, the number of iterations, search pattern)" in the underlined part. In FIG. 46, no search is performed for a part without an underline. Search may not be performed when the search interval at each search step is less than a threshold value (finestMvdPrec), and search may be performed only when the search interval is greater than or equal to the threshold value. The threshold value may be set differently depending on the AMVR resolution of the current block. The search pattern may vary, and there may be a diamond pattern or a cross pattern. The search is performed starting from the largest search interval. For example, referring to FIG. 46A, when the AMVR of the current block is a 4-integer pixel unit, the threshold value may be 6. In this case, the video signal processing device may perform recursive TM twice. In this case, the search interval of the first TM may be 6, the search may be repeated 365 times, and the search may be performed in a diamond pattern. In the second TM, the search interval may be 6, the search may be repeated once, and the search may be performed in a cross pattern. Hereinafter, a description will be made of a method for mitigating the increase in complexity when recursive TM is repeated.

Referring to FIG. 46B, when performing TM, the video signal processing device may determine the number of iterations of a specific search step, based on at least one among the size of a current block, the horizontal or vertical size of the current block, and AMVR information of the current block. When the AMVR resolution of the current block is 1/2-, 1-, or 4-pixel units, the number of iterations in the second search process may change from "1" to "2," and the video signal processing device may perform one more search. Alternatively, when the AMVR resolution of the current block is 1/2-, 1-, or 4-pixel units, only the number of iterations of the last search process is changed from "1" to "2," and the video signal processing device may perform one more search.

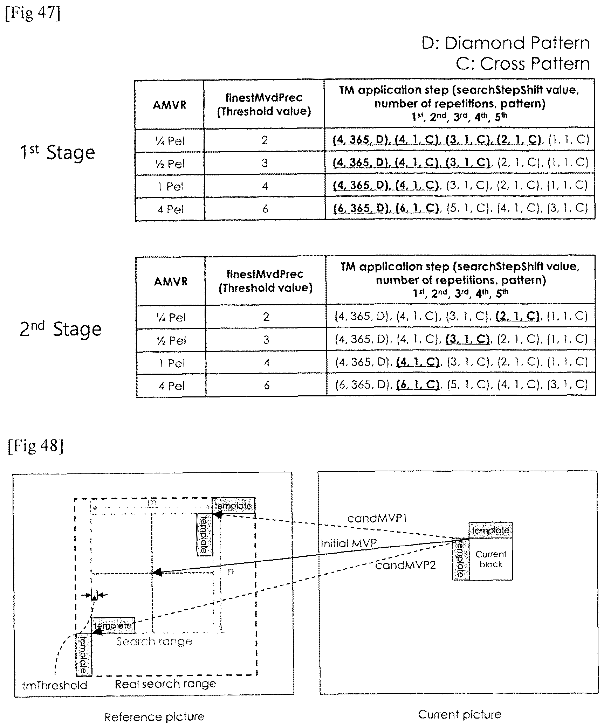

Whether search at each TM application step is performed, the search range, the search interval, the search pattern, the number of iterations, the search order, and the size of a template may be configured differently depending on how many times recursive TM is performed. Referring to FIG. 47, when recursive TM is performed, the video signal processing device may perform the last search process one more time in the second TM. The search range of the second TM may be configured based on a motion information candidate corrected in the previous TM. Thus, the video signal processing device may perform, in the second TM, search that could not be performed in the previous TM due to search range constraints. Furthermore, the search range of the second TM may be configured to be smaller (or larger) than the search range of the first TM by a predetermined number. For example, when the search range of the first TM was (-X, -Y) to (X, Y), the search range of the second TM may be (-X+2, - Y+2) to (X-2, Y-2). Reducing the search range has the effect of reducing complexity. In this case, the predetermined number may be an integer greater than or equal to 1.

Whether to perform TM, whether to perform recursive TM, whether to perform a TM-applied step-by-step search, the search range, the search interval, the search pattern, the number of iterations, the search order, and the size of a template may be determined based on at least one among the horizontal or vertical magnitude difference between an initial motion information candidate and a corrected motion information candidate in a previous TM step, the magnitude of a motion difference value in the current block, and whether OBMC is applied to the current block. For example, when at least one of the horizontal magnitude difference and the vertical magnitude difference between the initial motion information candidate and the corrected motion information candidate in the previous TM step is greater than a predetermined value, recursive TM may be performed. Otherwise, TM may not be performed. In this case, the predetermined value may be an integer greater than or equal to 1. As a result, when a motion candidate to be searched for in the previous TM step exceeds a fixed search range, the motion information candidate may be corrected by redefining the search range and performing TM again. Alternatively, when at least one of the horizontal magnitude difference and the vertical magnitude difference between the initial motion candidate and the corrected motion candidate in the previous TM step is equal to a predetermined value, recursive TM may be performed. Otherwise, TM may not be performed. In this case, the predetermined value may be the distance from the center of the search range to the boundary of the search range. Alternatively, if at least one of difference values (D-DiffHor or D-Diff_Ver) between the distance (D) from the center of the search range to the boundary of the search range and the horizontal magnitude difference (Diff Hor) and the vertical magnitude difference (Diff Ver) between the initial motion information candidate and the corrected motion information candidate in the previous TM step are less than or equal to a predetermined value, recursive TM may be performed. In this case, the predetermined value may be an integer, and may be, for example, "tmThreshold" in FIG. 29. This may be effective when the corrected motion information candidate is positioned at or near the boundary of a fixed search range, as illustrated in FIG. 48, and further search is not possible due to search range constraint. In other words, the motion information candidate may be additionally corrected by updating the search range and performing second TM again, relative to the motion information candidate corrected in the first TM.

The encoding performance of the TM method varies depending on the accuracy of a template, and thus whether TM is applied may be configured for each type of motion information (L0, L1, MHP, etc.). Information about whether TM is applied may be included in the SPS, PPS, picture/tile/slice header of a bitstream and signaled. Furthermore, whether to signal the information about whether TM is applied may be determined based on at least one among the size of the current block, the horizontal or vertical size of the current block, AMVR information of the current block, the magnitude of the motion difference value of the current block, and whether OBMC or MHP is applied to the current block. Whether TM is applied may be configured for each of CTU, CU, and PU.

When the size of the current block is greater than or equal to a predetermined value, the information about whether TM is applied may be included in a bitstream and signaled. The decoder may parse the information to determine whether TM is applied to the current block. When the size of the current block is less than the predetermined value, the information about whether TM is applied may not be included in the bitstream. When the information about whether TM is applied is not included in the bitstream, the decoder may assume that TM is not applied to the current block or may assume that TM is applied to the current block. When the difference value of the motion information in an L0 direction is within a predetermined magnitude or within a predetermined range, information about whether TM is applied may be included in a bitstream and signaled. The decoder may parse the information about whether TM is applied to determine whether TM is applied for the motion of the current block in the L0 direction. The predetermined value may be 0, a negative integer, or a positive integer.

When the difference value of the motion information of the current block in the L0 direction is within a predetermined magnitude or within a predetermined range, TM may or may not be applied for the motion of the current block in the L0 direction. The predetermined magnitude may be 0, a negative integer, or a positive integer. The predetermined range may be configured based on the predetermined magnitude, and may be, for example, the range of -3 to +3. Whether TM is applied to the motion of the current block in the L1 direction may be configured independently of whether TM is applied to the motion in the L0 direction. When an MHP mode is applied to the current block, additional motion information may be signaled. Whether TM is applied for the additional motion information may be configured independently of whether TM is applied for the motion in the L0 or L1 direction. Alternatively, whether TM is applied to motion of the current block in a L1 direction, and whether TM is applied to the additional motion information (MHP) may be configured based on at least one of whether TM is applied to the motion in the L0 direction and a difference value of motion information in the L0 direction. For example, when the difference value of motion information of the current block in the L0 direction is within a predetermined magnitude or within a predetermined range, TM may or may not be applied to the motion of the current block in the L1 direction.

The methods described in the present specification may be used to correct a motion information candidate when the encoding mode is AMVP, Merge, AMVPMerge, MHP, DMVR, Multipass-DMVR, CIIP, GPM, Affine, SMVD, IBC, and the like. Whether the methods described in the present specification are used may be determined based on at least one among the size of the current block, the aspect ratio of the current block, encoding mode information of the current block, a quantization parameter, AMVR resolution information of the current block, the number of transform coefficients in an error signal, the position of the last transform coefficient in the error signal, and whether OBMC or MHP is applied to the current block.

A luma block and a chroma block may have a partition structure of a single tree type or a dual tree type. When the current block's partition structure is a single tree, the luma block and the chroma block may have the same partition structure. When the current block is encoded as a single tree, the partition structure, encoding mode information, motion information, etc. of the luma block and chroma block of the current block may be the same. Even when the current block is encoded as a single tree, information related to error signals of the lumina block and chroma block of the current block may be different. When the partition structure of the current block is a dual tree, the luma block and the chroma block of the current block may have different partition structures. When the current block is encoded as a dual tree, at least one among the partition structure, encoding mode information, motion information, etc. of the luma block and the chroma block of the current block may be different.

There may be a close correlation between a lumina block and a chroma block corresponding to the luma block of the current block. When the current block is encoded or decoded using a dual tree, the video signal processing device may use partition information of the luma block, encoding mode information, motion information, and the like to encode or decode the corresponding chroma block.

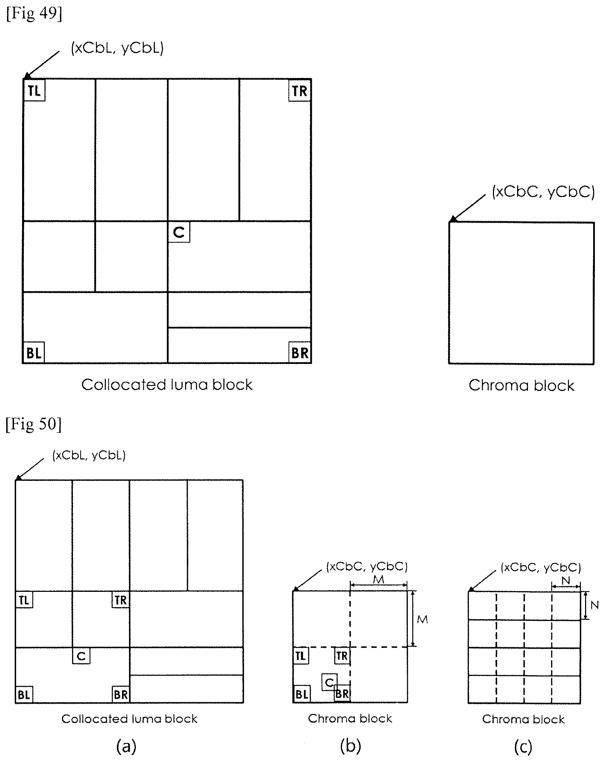

FIGS. 49 to 51 illustrate a chroma block and a luma block corresponding to the chroma block according to an embodiment of the present disclosure.

The video signal processing device may derive motion information of a chroma block, based on motion information of a luma block corresponding to the chroma block. The luma block corresponding to the chroma block may be described as a co-located luma block. Referring to FIG. 49, the position of the top-left pixel of a luma block may be (xCbL, yCbL), and the position of the top-left pixel of a chroma block may be (xCbC, yCbC). The motion information may include a motion vector. In the present specification, the luma block for deriving the motion information of the chroma block may be a block encoded in an IBC mode or an intra-TMP mode.

The video signal processing device may use motion information of a luma block corresponding to a chroma block to derive (configure) motion information of the chroma block. The video signal processing device may use the motion information derived from the luma block to generate a prediction block for the chroma block. When the video format is 4:4:4, the luma block and the chroma block have the same size, so motion information derived from the luma block may be used as is (identically) for the chroma block. When the video format is 4:2:2 or 4:2:0 rather than 4:4:4, the luma block and the chroma block have different sizes, so the video signal processing device may scale the motion information derived from the luma block, and use the scaled motion information as motion information for the chroma block. In this case, the motion information derived from the luma block may be scaled according to a size ratio between the luma block and the chroma block. The video signal processing device may use the scaled motion information to generate a prediction block for the chroma block. For example, when the video format is 4:2:0, the video signal processing device may obtain scaled motion information by scaling a motion vector in the motion information derived from the luma block. For example, the video signal processing device may obtain scaled motion information by dividing a vertical or horizontal component of a motion vector derived from the luma block by 2 (or a vertical or horizontal component of the motion vector >> 1). The X >> Y operation is a right-shift operation, and outputs the quotient of X divided by 2 raised to the power of Y.

When the current block is encoded in a dual tree structure, the partition structures of a chroma block and a luma block in the current block may be different from each other. There may be multiple luma blocks corresponding to one chroma block, and the motion information of each luma block may be different. That is, the compression performance may vary depending on which luma block's motion information, among the multiple luma blocks, the video signal processing device uses to derive motion information of the chroma block. The following describes a method by which the video signal processing device effectively derives motion information of a chroma block.

The video signal processing device may identify whether a luma block corresponding to one chroma block is partitioned. In this case, based on partition information of the luma block, the video signal processing device may identify whether the luma block is partitioned. The video signal processing device may identify whether the luma block is partitioned, based on whether motion information at specific positions of the luma block is identical. Referring to FIG. 30, the specific positions may be the top left pixel (TL), top right pixel (TR), center pixel (C), bottom left pixel (BL), and bottom right pixel (BR) of the luma block. For example, when TL, TR, C, BL, and BR of the luma block have the same motion information, the video signal processing device may infer that the luma block is not partitioned. Alternatively, when at least one piece of motion information of the TL, TR, C, BL, and BR of the luma block is different, the video signal processing device may infer that the luma block is partitioned into two or more blocks.

The method for deriving motion information of a chroma block may vary depending on whether a luma block is partitioned. When the luma block is not partitioned, the video signal processing device may use motion information of the luma block corresponding to a specific position of a chroma block as motion information for the chroma block. The following describes a method by which the video signal processing device derives motion information of a chroma block when a luma block is partitioned.

When there are multiple luma blocks corresponding to one chroma block, the video signal processing device may use motion information of the multiple luma blocks to construct a motion candidate list. The video signal processing device may determine, based on a cost, one piece of motion information included in the motion candidate list is motion information of the chroma block. The video signal processing device may construct a base template by using reconstructed neighboring pixels adjacent to the chroma block. The video signal processing device may construct a reference template by using neighboring pixels in a reference picture at a position indicated by each motion candidate in the motion candidate list. The video signal processing device may reconstruct the motion candidate list by calculating a cost of each of motion candidates included in the motion candidate list by using the SAD (or MR-SAD) between the base template and the reference template, and reordering the motion candidates in ascending order. The video signal processing device may determine that a motion candidate having the lowest cost, among the reordered motion candidates, is motion information of the chroma block. The encoder may generate a bitstream including a syntax element (or index) which indicates the motion information of the chroma block among the motion candidates included in the reordered motion candidate list. The decoder may determine the motion information of the chroma block from the reconstructed motion candidate list by parsing the syntax elements indicating the motion information of the chroma block in the bitstream. Furthermore, to obtain more accurate motion information, the encoder may generate a bitstream that includes information about a difference value between an optimal motion information and the motion information of the chroma block in the reconstructed motion candidate list. The decoder may determine final motion information of the chroma block by adding the motion information of the chroma block, determined by parsing the syntax element indicating the motion information of the chroma block in the bitstream, and the difference value, determined by parsing the information about the difference value.

Referring to FIG. 50, a chroma block may be partitioned into multiple sub-blocks. The video signal processing device may derive motion information of the multiple sub-blocks from a luma block. Whether the chroma block is partitioned into the multiple sub-blocks may be the same as the above-described method for determining whether the luma block is partitioned. The following describes a method for partitioning a chroma block when a luma block is divided.

When motion information of TL and TR in the luma block is similar, motion information of BL and BR is similar, and motion information of TL and BL is different, the video signal processing device may partition the chroma block into two sub-blocks in the horizontal direction

When motion information of TL and BL in the luma block is similar, motion information of TR and BR is similar, and motion information of TL and TR is different, the video signal processing device may partition the chroma block into two sub-blocks in the vertical direction.

When motion information of TL, BL, TR, and BR of the luma block is different, or at least three pieces of motion information are different, the video signal processing device may partition the chroma block into four sub-blocks in the horizontal and vertical directions, as illustrated in FIG. 50B.

The video signal processing device may determine whether the motion information is similar or different, by using at least one among the case where reference pictures of the motion information are different, the case where resolutions of the motion information are different, the case where predicted directions of the motion information are different, the case where reference direction indication information of the motion information is different, the case where predicted directions of the motion information are different, the case where a difference between horizontal components of two pieces of motion information is greater than a predetermined value, and the case where a difference between vertical components of two pieces of motion information is greater than a predetermined value. Specifically, when the difference between horizontal components of two pieces of motion information is greater than a predetermined value, the video signal processing device may determine that the two pieces of motion information are different from each other. More specifically, when the difference between horizontal components of two pieces of motion information is equal to or less than a predetermined value and when the difference between vertical components of the two pieces of motion information is equal to or less than a predetermined value, the video signal processing device may determine that two motions are similar to each other.

A chroma block may be partitioned into multiple sub-blocks independently of motion information of a luma block. As illustrated in FIG. 50B, a chroma block may be partitioned into four sub-blocks in the horizontal and vertical directions. Furthermore, as illustrated in FIG. 50C, a chroma block may be partitioned into sub-blocks of a predetermined size (N x N) in the horizontal and vertical directions. Here, N is an integer greater than or equal to 1, and may be 1, 2, 4, etc. When N is 1, motion information of the chroma block may vary on a per-pixel basis. The video signal processing device may determine motion information of each pixel in a chroma block by deriving motion information of each pixel in a luma block corresponding to each pixel in the chroma block.

When a chroma block is partitioned into multiple sub-blocks, the video signal processing device may determine motion information of each sub-block by using motion information of a luma block corresponding to a specific position of each sub-block. In this case, the specific position may be TL, BL, C, TR, or BR, as illustrated in FIG. 50B. Alternatively, the specific position may be a predetermined position. Referring to FIG. 50B, TL of any one of sub-blocks of a chroma block may correspond to TL of a luma block corresponding to the chroma block. TR of the sub-block in the chroma block may correspond to TR of the luma block corresponding to the chroma block. C of the sub-block of the chroma block may correspond to C of the luma block corresponding to the chroma block. BL of the sub-block of the chroma block may correspond to BL of the luma block corresponding to the chroma block. BR of the sub-block of the chroma block may correspond to BR of the luma block corresponding to the chroma block. Furthermore, the video signal processing device may scan motion information of the luma block corresponding to a specific position of each sub-block according to a predetermined order, and use motion information, which is first found as valid motion information, as motion information of the sub-block. The predetermined scan order may be C, BR, BL, TR, and TL. The valid motion information may be motion information of the specific position encoded in an IBC mode, a RRIBC mode, or an intra-TMP mode.

The encoder may derive motion information of each sub-block in the chroma block from motion information of the luma block, and generate a bitstream including a syntax element indicating the derived motion information of each sub-block. The decoder may determine the motion information of each sub-block by parsing the syntax element indicating the motion information of each sub-block in the bitstream. The syntax element indicating the motion information of each sub-block may be information about the C, BR, BL, TR, and TL positions. Alternatively, the syntax element indicating the motion information of each sub-block may be information indicating optimal motion information in a motion list for the sub-block derived from the motion information of the luma block corresponding to a chroma sub-block. Furthermore, to obtain more accurate motion information, the encoder may generate a bitstream including information about a difference value between the optimal motion information of each sub-block and the derived motion information of each sub-block. The decoder may determine final motion information of each sub-block by adding the motion information of each sub-block, determined by parsing the syntax element indicating the motion information of each sub-block in the bitstream, and the difference value, which is determined by parsing the information about the difference value. The difference value may include a difference value between horizontal components and a difference value between vertical components. The difference value between the horizontal components and the difference value between the vertical components may be any one of +1, 0, and -1. The information about the difference value may be an index indicating one of +1, 0, and -1. Alternatively, the difference value may be one of (X, 0), (0, Y), and (X, Y), and X and Y may be integers.

The video signal processing device may use the bilateral matching (BM) method to correct the motion information of each sub-block of the chroma block derived from the luma block.

The following describes a method by which the video signal processing device derives a block vector of a chroma block from a luma block.

The video signal processing device may determine whether a current chroma block is encodable in an IBC mode. In this case, whether the current chroma block is encodable in the IBC mode may be determined based on at least one among whether a current block is a block encoded in a dual tree mode, whether the encoding mode of the luma block is an IBC or intra-TMP mode, and whether there is a block vector of a luma block. When the current block is in the dual tree mode and when a luma block corresponding to the current chroma block is encoded in an IBC encoding mode or intra-TMP mode, the current chroma block may be encoded in the IBC mode. This is because there is a block vector in the luma block corresponding to the current chroma block.

After determining whether the block vector of the luma block corresponding to the current chroma block is a block vector available for a chroma block, the video signal processing device may determine whether the current chroma block is encodable in the IBC mode. The video signal processing device may derive a block vector of the luma block corresponding to the current chroma block. When the RRIBC has been applied to the luma block, the video signal processing device may change the block vector of the luma block to an RRIBC block vector, based on the type of RRIBC. The video signal processing device may derive (generate) a block vector of the chroma block by scaling the block vector of the luma block (or the changed RRIBC block vector) according to a size ratio between the luma block and the chroma block. The video signal processing device may determine whether the block vector of the luma block is a block vector available for the chroma block, based on whether the derived block vector of the chroma block is outside the boundary of a picture, whether a block predicted using the block vector of the chroma block is outside the boundary of the picture, whether an area indicated by the block vector of the chroma block is within a reference picture area used in the IBC mode, and whether the area indicated by the block vector of the chroma block is outside the boundaries of the current slice and tile. When the derived block vector of the chroma block is outside the boundary of the picture, the area indicated by the block vector of the chroma block is outside the reference picture area used in the IBC mode, or the area indicated by the block vector of the chroma block is outside the boundaries of the current slice and tile, the block vector of the luma block may be a block vector that is not available for the chroma block. In this case, IBC mode may not be applied to the chroma block.

The video signal processing device may scan the block vector of the luma block in the order of C, TL, TR, BL, and BR illustrated in FIG. 49, and then derive the block vector of the chroma block by using a block vector at the position that is first found to be a valid block vector. On the other hand, there may be cases where there is no block vector at a luma block position corresponding to the current chroma block, and the partition structures of the luma block and the chroma block is different. In this case, block vectors at positions outside the luma block as well as inside the luma block corresponding to the chroma block may be used to derive a block vector of the chroma block. Referring to FIG. 32, the dashed area in a luma block may be a luma block corresponding to a chroma block. The video signal processing device may also use block vectors at positions outside the corresponding luma block to derive the block vector of the chroma block. That is, in FIG. 32, the video signal processing device may scan block vectors of the luma block in the order of C, C', TL, TL', TR, TR', BL, BL', BR, and BR', and then use a block vector, which is first found to be a valid block vector, to derive a block vector of the chroma block. Furthermore, the video signal processing device may scan whether the block vectors, including block vectors at positions outside the corresponding luma block illustrated in FIG. 32, are valid, and construct an initial block vector candidate list that includes valid block vectors.

The video signal processing device may correct the block vector (or the changed RRIBC block vector) of the luma block corresponding to the current chroma block by using a template constructed from neighboring blocks of the current block. Whether the correction using the template is performed may be determined based on whether the neighboring blocks of the current block are available.

When an above neighboring block and a left neighboring block of the current block are not available, the correction using the template may not be performed. Therefore, the video signal processing device may use the block vector of the luma block (or the changed RRIBC block vector) corresponding to the derived current chroma block as the block vector of the chroma block as is.

When neighboring blocks of the current block are available, the correction using the template may be performed. The video signal processing device may generate a block vector candidate list including the block vector (or the changed RRIBC block vector) of the luma block corresponding to the derived current chroma block. The video signal processing device may generate a block vector of the chroma block by scaling the block vector (or the changed RRIBC block vector) of the luma block corresponding to the derived current chroma block according to a size ratio between the luma block and the chroma block, and may then add the generated block vector of the chroma block to the initial block vector candidate list. Furthermore, the video signal processing device may generate a new block vector by adding, in the vertical and/or horizontal direction, a predetermined offset value to the block vector (or the changed RRIBC block vector) of the luma block corresponding to the derived current chroma block. The offset value may be an integer value, and may be -2, -1, 1, 2, etc. The video signal processing device may generate an extended block vector candidate list by adding the new offset-based derived block vector to the initial block vector candidate list.

In this case, the new block vector may vary depending on the RRIBC type of the current block. When the RRIBC type of the current block is horizontal, a block vector in the vertical direction may be "0" and only a component in the horizontal direction may be present. Therefore, the video signal processing device may generate new block vectors by applying an offset value to a block vector in the horizontal direction, and determine an optimal block vector, based on a template cost. When the RRIBC type of the current block is the horizontal direction, a block vector in the horizontal direction may be relatively accurate, so the video signal processing device may obtain a new block vector by using a predetermined offset value other than "0" for a block vector in the vertical direction. The video signal processing device may scale the newly generated block vector according to a size ratio between the luma block and the chroma block to generate a block vector of the chroma block. The video signal processing device may determine whether the newly generated block vector of the chroma block is an available block vector, based on whether the newly generated block vector of the chroma block exists in the block vector candidate list, whether the newly generated block vector of the chroma block is outside the picture boundary, whether a block predicted using the newly generated block vector of the chroma block is outside the picture boundary, whether an area indicated by the newly generated block vector of the chroma block is within the reference picture area used in the IBC mode, or whether the area indicated by the newly generated block vector of the chroma block is outside the boundaries of the current slice and tile. When the newly generated block vector of the chroma block does not exist in the block vector candidate list, when the newly generated block vector of the chroma block is outside the picture boundary, when the block predicted using the newly generated block vector of the chroma block is outside the picture boundary, when the area indicated by the newly generated block vector of the chroma block does not exist within the reference picture area used in the IBC mode, or when the area indicated by the newly generated block vector of the chroma block is outside the boundaries of the current slice and tile, the newly generated block vector of the chroma block may be an unavailable block vector, and in the opposite case, the newly generated block vector may be an available block vector. When the newly generated block vector of the chroma block is available, the video signal processing device may add the newly generated block vector of the chroma block to the block vector candidate list. When the newly generated block vector of the chroma block is not available, the video signal processing device may not add the newly generated block vector of the chroma block to the block vector candidate list.

The video signal processing device may construct a base template by using neighboring samples adjacent to the current block, and may construct a reference template by using block vector candidates in the block vector candidate list (or the extended block vector candidate list). The reference template may include a top reference template and a left reference template. The top reference template may be a block having a width of the current block and a height of a predetermined size, and the left reference template may be a block having a height of the current block and a width of a predetermined template size. The predetermined template size is a positive integer, which may be 1, 2, or 3.

The following describes a method for constructing a reference template, based on a block vector candidate in the block vector candidate list. The block vector candidate in the block vector candidate list may be configured based on the top left position of the current block. Therefore, when the top reference template and the left reference template are constructed, a block vector shifted by the position of the base template and the reference template may be used. Specifically, the top reference template may be constructed using a vector in which a vertical shift vector, shifted by the position of the template in the vertical direction, is added to the block vector candidate in the block vector candidate list. The left reference template may be constructed using a vector in which a horizontal shift vector, shifted by the position of the template in the horizontal direction, is added to the block vector candidate in the block vector candidate list. When a block vector of a luma block is an RRIBC block vector, the left and top templates may be constructed based on the RRIBC type.

The video signal processing device may construct a corresponding reference template for each block vector candidate in the block vector candidate list, and then calculate a cost between the base template and the reference template. The video signal processing device may reorder the block vector candidates based on the cost to construct a reordered block vector candidate list, and determine an optimal block vector candidate in the reordered block vector candidate list. The block vector candidates may be reordered in ascending order of cost. The encoder may generate a bitstream including information (an index) indicating the optimal block vector candidate in the reordered block vector candidate list. The decoder may parse the information indicating the optimal block vector candidate to determine the optimal block vector candidate of the current chroma block. Furthermore, the video signal processing device may use a block vector candidate having the minimum cost as the block vector for the current chroma block without reordering the block vector candidates.

The video signal processing device may use the block vector of the current chroma block to generate a prediction block for the current block, and add the residual (error) block and the prediction block to reconstruct the current block. When the block vector of the luma block is an RRIBC block vector, the video signal processing device may flip the reconstructed block in the vertical or horizontal direction, depending on the type of RRIBC, to generate a final reconstructed block.

When the video signal processing device derives a first-order or second-order transformation matrix (a matrix set, a kernel set), if the chroma block is encoded in an IBC mode, an intra-prediction directional mode may be derived based on any one of a planar mode, a DC mode, and a mode derived from DIMD, and the transformation matrix may be derived based on the derived intra-prediction directional mode.

When the current chroma block is encoded in an IBC mode, the video signal processing device may determine whether to generate a prediction block for the current block through weighted-averaging of predicted blocks (or blocks predicted by CCLM, MMLM, CCCM, or GLM) for the current chroma block by using an intra-prediction directional mode (or a predetermined intra-prediction mode) of a neighboring block adjacent to the current block. The encoder may compare the cases where weighted averaging is applied and not applied to select the case with higher encoding efficiency, and generate a bitstream including information about the case with higher encoding efficiency. The decoder may parse the information about the case with higher encoding efficiency to determine whether weighted averaging is applied, and generate a prediction block for the current block. The predetermined intra-prediction mode may be one of a planar mode, a DC mode, and a DIMD mode derived from the current luma block.

The encoder may generate a bitstream that includes information indicating whether the current chroma block has been encoded in the IBC mode. The decoder may parse the information indicating whether the current chroma block has been encoded in the IBC mode to determine whether to reconstruct the current chroma block in the IBC mode. When the information indicating whether the current chroma block has been encoded in the IBC mode is included (signaled) in the bitstream, the bit rate may increase. Accordingly, the video signal processing device may infer that the current chroma block has been encoded in the IBC mode, based on whether the intra-prediction mode of the current chroma block is a DM mode, whether the IBC mode is available for the current chroma block, whether the current block is encoded as a dual tree, whether a luma block corresponding to the current chroma block is encoded in an IBC encoding mode or intra-TMP mode, whether a block vector of a chroma block, derived from the luma block, is a zero vector (0,0), and the like. For example, when the intra-prediction mode of the current chroma block is the DM mode and the current block is encoded as a dual tree, and the luma block corresponding to the current chroma block is encoded in the IBC encoding mode or intra-TMP mode, and the block vector of the chroma block, derived from the luma block, is not the zero vector (0,0), the decoder may infer (set) that the current chroma block has been encoded in the IBC mode.

An RRIBC mode may be applied to a block encoded in an IBC mode. The RRIBC mode may employ two types: vertical flip and horizontal flip. When RRIBC is applied to a block, the reconstructed block may be flipped depending on the RRIBC type of the current block. The encoder may flip an original block to be encoded before finding a part of a reference picture that is most similar to the original block to be encoded. That is, the encoder may use the flipped original block to find a part of the reference picture that is most similar to the flipped original block. An unflipped block may be used as a prediction block for the current block, and the residual block may also be an unflipped block. The decoder may flip a final reconstructed block, based on the RRIBC type of the current block.

When the current block has been encoded in an AMVP-based IBC mode, the encoder may generate a bitstream that includes information indicating whether the RRIBC mode is applied to the current block and information indicating an RRIBC type. The decoder may parse the information indicating whether the RRIBC mode is applied to the current block and the information indicating the RRIBC type to determine whether the RRIBC mode is applied to the current block and to determine the RRIBC type. Since the RRIBC mode uses symmetry in the horizontal or vertical direction, the difference value of a block vector may exist in only one of the horizontal and vertical directions. That is, when the RRIBC type of the current block is horizontal, there may be only a block vector difference value in the horizontal direction and no block vector difference value in the vertical direction. Therefore, when the RRIBC type of the current block is horizontal, only the block vector difference value in the horizontal direction may be parsed, and the block vector difference value in the vertical direction may not be parsed. In this case, the block vector in the vertical direction may be "0."

Meanwhile, even in a horizontally symmetric video, there may be a difference in the vertical direction. Therefore, when the RRIBC type of the current block is horizontal, the encoder may generate a bitstream that includes information indicating a block vector difference value in the vertical direction as well as a block vector difference value in the horizontal direction. That is, based on the RRIBC type of the current block or the AMVR resolution of the current block, the decoder may determine whether to parse the information indicating the block vector difference value in the vertical direction. For example, when the AMVR resolution of the current block is 4 sample units, there may be no block vector difference value in the vertical direction. That is, when the RRIBC type of the current block is horizontal and when the AMVR resolution is 4 sample units, the decoder may set the block vector difference value in the vertical direction to "0" without parsing the information representing the block vector difference value in the vertical direction. When the RRIBC type of the current block is horizontal and when the AMVR resolution is 1 sample unit, there may be a block vector difference value in the vertical direction. In this case, the block vector difference value in the vertical direction may be an integer value within a predetermined range, and the predetermined range may vary depending on the AMVR resolution of the current block. For example, the block vector difference value in the vertical direction may be -1, 0, or 1. Also, when the RRIBC type of the current block is horizontal, the range of the block vector difference value in the vertical direction may be smaller than the range of the block vector difference value in the horizontal direction. Furthermore, when the RRIBC type of the current block is vertical, the range of block vector difference value in the horizontal direction may be smaller than the range of block vector difference value in the vertical direction. Specifically, when the RRIBC type of the current block is vertical, during entropy coding, the maximum value of a symbol for the absolute value of a block vector difference in the horizontal direction may be smaller than the maximum value of a symbol for the absolute value of a block vector difference in the vertical direction. When the RRIBC type of the current block is vertical, during entropy decoding, the maximum value of the symbol for the absolute value of the block vector difference in the horizontal direction may be smaller than the maximum value of the symbol for the absolute value of the block vector difference in the vertical direction.

When the current block is encoded in a merge-based IBC mode, information indicating whether the RRIBC mode is applied to the current block and information indicating the RRIBC type may not be included in the bitstream. When the current block is encoded in the merge-based IBC mode, the decoder may determine RRIBC information of the current block, based on RRIBC information (whether the RRIBC mode is applied and an RRIBC type) of neighboring blocks of the current block.

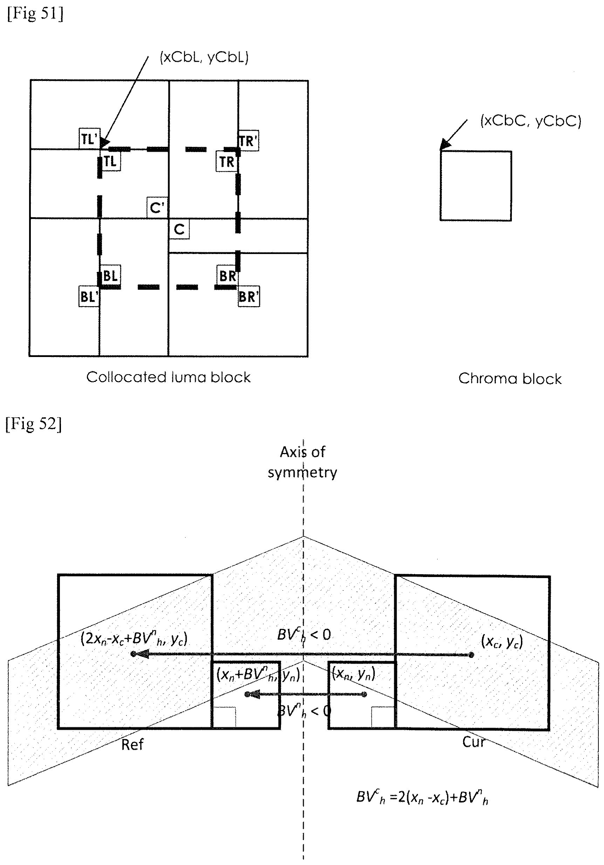

FIG. 52 is a diagram illustrating a method for predicting a current block by using RRIBC in the horizontal direction.

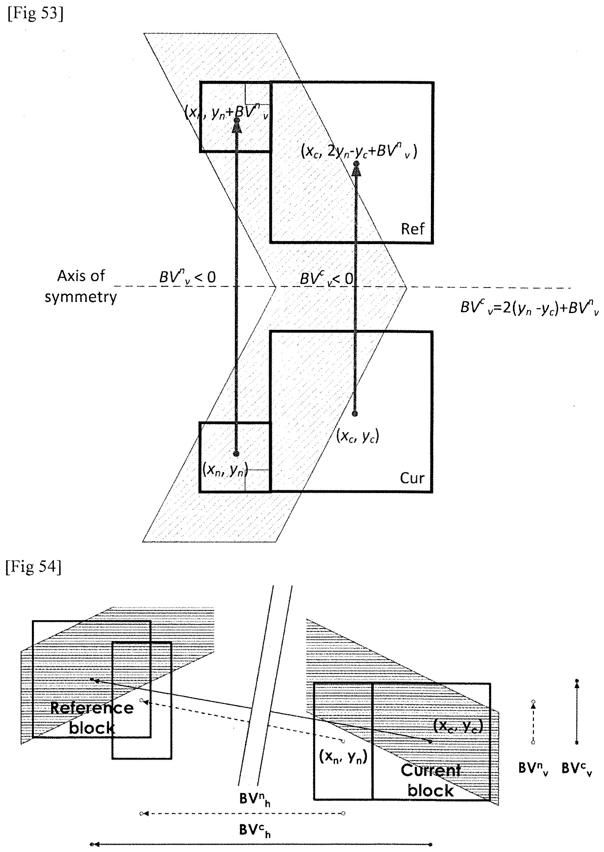

FIG. 53 is a diagram illustrating a method for predicting a current block by using RRIBC in the vertical direction.

(Xₙ, Yₙ)in FIGS. 52 and 53 represents the center position of a neighboring block, and (X_{c}, y_{c}) represents the center position of a current block. BVⁿₕ and BVⁿᵥ represent horizontal and vertical block vectors of neighboring blocks, respectively, and BV^{c}ₙ and BV^{c}ᵥ represent horizontal and vertical block vectors of the current block, respectively. As illustrated in FIG. 53, when the RRIBC type of the current block is a horizontal direction, BV^{c}ₙ may be calculated as 2*(Xₙ - X_{c})+ BVⁿₕ, and as illustrated in FIG. 53, when the RRIBC type of the current block is a vertical direction, BV^{c}ᵥ, may be calculated as 2*(yₙ - y_{c}) + BVⁿᵥ. In this case, since BVⁿₕ and BVⁿᵥ use restored blocks, the signs of BVⁿₕ and BVⁿₕ may only be negative.

When the current block is encoded with RRIBC, the video signal processing device may construct a block vector candidate list to determine an optimal block vector. In this case, the video signal processing device may construct the block vector candidate list, based on the RRIBC type of the current block. For example, when the RRIBC type of the current block is horizontal, the video signal processing device may construct the block vector candidate list by using only a neighboring block of the current block encoded with horizontal RRIBC. Furthermore, the video signal processing device may construct the block vector candidate list regardless of the RRIBC type of the current block. For example, when the RRIBC type of the current block is horizontal, the block vector candidate list may be constructed using not only the neighboring block of the current block encoded with horizontal RRIBC, but also a neighboring block of the current block encoded with vertical RRIBC and/or a block encoded with normal motion and/or a block encoded with a block vector.

When the video signal processing device predicts the current block by using typical motion, the video signal processing device may construct a motion candidate list based on whether a neighboring block of the current block is encoded in an IBC mode or RRIBC mode. When the neighboring block of the current block is encoded in the RRIBC mode, the video signal processing device may additionally consider the RRIBC type to construct the motion candidate list. For example, when the video signal processing device constructs the motion candidate list for the current block, if the encoding mode of a neighboring block of the current block is an RRIBC mode and if the RRIBC type is vertical or horizontal, a block vector of the neighboring block may not be included in the motion candidate list. Alternatively, when the video signal processing device predicts the current block by using general motion, the video signal processing device may construct the motion candidate list independently of the encoding mode of a neighboring block of the current block. That is, the video signal processing device may construct the motion candidate list regardless of whether a neighboring block of the current block is encoded in an IBC mode or RRIBC mode. For example, when constructing the motion candidate list for the current block, the video signal processing device may include a block vector of the neighboring block in the motion candidate list, even when the encoding mode of the neighboring block of the current block is the IBC mode and the RRIBC type is vertical or horizontal.

The RRIBC encoding method is effective for videos with symmetrical characteristics. The symmetrical characteristics may refer to complete horizontal (or vertical) symmetry, wherein the current block and a reference block are equidistant from one central axis therebetween. The vertical (or horizontal) direction (symmetry axis) of the current block may be on the same line as the vertical (or horizontal) direction (symmetry axis) of the reference block. In this case, a block vector in the vertical (or horizontal) direction may be set to "0," and a block vector in the horizontal direction may be set to a predetermined negative value other than "0." The current block and the reference block may be symmetrically configured, with a difference in distance from one central axis between the current block and the reference block, and the current block and the reference block may be positioned on different vertical lines. In this case, the block vector in the vertical direction may be set to a predetermined negative value other than "0." That is, the video signal processing device may encode or decode the current block by using a symmetric block having block vector values that are predetermined negative values, other than "0," in both the horizontal and vertical directions.

FIG. 54 illustrates a case in which a current block and a reference block are positioned on different vertical lines according to an embodiment of the present disclosure.

Specifically, FIG. 54 illustrates the case where a current block and a reference block are positioned on different vertical lines when the current block is encoded in an RRIBC mode of horizontal direction type.

Referring to FIG. 54, when generating a prediction block for the current block, the video signal processing device may use a horizontal direction-type RRIBC block encoding mode having a block vector component in the vertical direction. In this time, when a block adjacent to the current block is a horizontal direction-type RRIBC block, a block vector of the neighboring block may be similar to a block vector of the current block. Therefore, the encoder may encode the block vector of the current block by using the block vector of the neighboring block. That is, the encoder may use the block vector of the neighboring block as a prediction value to generate a bitstream including information about a difference value between a prediction value and an optimal block vector of the current block. The decoder may parse the information about the difference value, and then add the difference value to a block vector prediction value derived from the neighboring block to obtain the block vector of the current block. In deriving the block vector prediction value for the current block, the video signal processing device may construct a block vector candidate list by using block vectors derived from neighboring blocks of the current block and predefined block vector candidates, and then use an optimal block vector candidate as the block vector prediction value. The encoder may generate a bitstream including an index that indicates the optimal block vector candidate in the block vector candidate list. The decoder may parse the index indicating the optimal block vector candidate, and then use a block vector candidate indicated by the index in the block vector candidate list to obtain the block vector of the current block.

The video signal processing device may perform a validity determination process when adding a block vector candidate to the block vector candidate list. The validity determination may be made based on whether there is a block vector candidate in the block vector candidate list, whether the block vector candidate is outside the picture boundary, whether a block predicted using the block vector is outside the picture boundary, whether an area indicated by the block vector exists within a reference picture area used in an IBC mode, whether the block vector candidate is outside the boundaries of the current slice and tile, and the like. When a block vector candidate does not exist in the block vector candidate list, the block vector candidate is outside the picture boundary, a block predicted by using the block vector is outside the picture boundary, an area indicated by the block vector does not exist within the reference picture area used in the IBC mode, or the area indicated by the block vector is outside the boundaries of the current slice and tile, the block vector candidate may be determined to be invalid, and the video signal processing device may not include the block vector candidate in the block vector candidate list.

The video signal processing device may construct a block vector candidate list including at least one among a block vector derived from a spatial neighboring block, a block vector derived from a temporal neighboring block, a history-based block vector, a block vector using an average value, a predetermined block vector, and a zero (0,0) block vector.

The video signal processing device (e.g., an encoder and a decoder) may determine whether a new block vector candidate exists in the block vector candidate list, and determine whether to add the new block vector candidate to the motion vector candidate list. In this case, the determination of whether the new block vector candidate exists in the block vector candidate list may be determined based on whether the block vector candidates in the block vector candidate list and the new block vector candidate are identical or similar. If the block vector candidates in the block vector candidate list and the new block vector candidate are identical or similar, the video signal processing device may determine that the new block vector candidate is duplicated and may not add the new block vector candidate to the block vector candidate list. The video signal processing device may determine the identity based on whether the horizontal and vertical components (x, y) of the block vector candidates in the block vector candidate list and the new block vector candidate are identical, and the video signal processing device may determine the similarity based on whether the difference between the horizontal and vertical components (x, y) of the block vector candidates in the block vector candidate list and the new block vector candidate is within an arbitrary value. The arbitrary value may be determined based on at least one of whether the current block applies TM or DMVR, the horizontal or vertical size of the current block, the block resolution of the current block, whether the reconstruction-reordered IBC (RRIBC) mode is applied to the current block, and whether the zeroComp mode is applied to the current block, and for example, the arbitrary value may be 1, 2, 4, etc. In addition, if at least one or more of whether the block vector candidate applies LIC, the resolution of the block vector, whether the block vector uses half-pixel compensation, the RRIBC mode of the block vector candidate, and the BCW information of the block vector candidate are different, the video signal processing device may determine that the block vector candidates in the block vector candidate list and the new block vector candidate are not the same or similar, and may add the new block vector candidate to the block vector candidate list.

The neighboring block used in the process of configuring the block vector candidate list may be a neighboring block spatially adjacent to the current block. In addition, the neighboring block may be a neighboring block that is not spatially adjacent to the current block but is far away. In addition, the neighboring block may be a temporal neighboring block corresponding to the current block from another reference picture that is not the same as the POC of the current picture. Here, the block vector candidate derived to the temporal neighboring block may be described as a temporal block vector predictor (TBVP). When configuring the block vector candidate list, the information derived from the neighboring block may be at least one of a block vector, RRIBC type information, information on whether LIC is performed, information on whether the block is encoded in GPM mode, information on whether the block vector is an IntraTMP block vector or an IBC block vector, information on MHP, and BCW information. For example, when the temporal neighboring block is a block encoded in the RRIBC mode of the horizontal direction type, the video signal processing device may configure the block vector candidate for the current block to the block vector of the block encoded in the RRIBC mode of the horizontal direction type. In addition, when the video signal processing device configures the block vector candidate list for the current block, the video signal processing device may reconfigure the encoding information of the neighboring block based on at least one of information on the type of RRIBC mode of the neighbor block, information on whether LIC of the neighboring block is performed, information on whether the neighboring block is a block encoded with GPM, information on whether the neighboring block is a block encoded in CIIP (or IBC-CIIP block) mode, information on whether the neighboring block is a block encoded in IntraTMP mode or a block encoded in IBC mode, information on whether the neighboring block is a spatially derived block or a temporally derived block, information on the MHP of the neighboring block, BCW information of the neighboring block, whether TM is applied to the current block, whether the current block is in a encoding mode that signals block vector difference (BVD), information on whether the current block is a block encoded in intra TMP mode or a block encoded in IBC mode, and whether the current block is encoded in at least one of RRIBC, GPM, LIC, and CIIP encoding modes. In addition, the video signal processing device may store the block vector candidate based on the reconfigured encoding information, and may add the block vector candidate to the block vector candidate list. For example, if the neighboring block is a block encoded in the IBC mode, the current block may not use TM, and the current block is not a block vector having BVD, the video signal processing device may store the RRIBC type of the neighboring block as a block vector candidate, and may add the block vector candidate to the block vector candidate list. Otherwise, the video signal processing device may not use the RRIBC type of the surrounding blocks, may reconfigure the RRIBC type of the block vector candidate to be included in the block vector candidate list to not use RRIBC, and may add the block vector candidate to the block vector candidate list. In addition, the video signal processing device may store the information on whether LIC is applied to the neighboring block as a block vector candidate if the neighboring block is an IBC block and the neighboring block does not use RRIBC, and may add the block vector candidate to the block vector candidate list. Otherwise (if the neighboring block is not an IBC block or the neighboring block uses RRIBC), the video signal processing device may configure the block vector candidate to be included in the block vector candidate list not to apply LIC, regardless of the information on whether LIC is applied to the neighboring block, and may add the block vector candidate to the block vector candidate list.

Whether the video signal processing device adds the temporal neighboring block to the block vector candidate list may vary depending on the RRIBC type of the temporal neighboring block. For example, when the current block is encoded in the AMVP mode and the neighboring block of the current block is encoded in the RRIBC mode, the video signal processing device may not use the block vector of the neighboring block of the current block as a block vector candidate and may not add the block vector of the neighboring block of the current block to the block vector candidate list. In addition, when the current block is encoded in the AMVP mode, the video signal processing device may use the block vector of the neighboring block of the current block as a block vector candidate only when the neighboring block of the current block is not encoded in the RRIBC mode and may add the block vector of the neighboring block of the current block to the block vector candidate list. In this case, since the temporal neighboring block may be a block in the same or similar position as the current block, the video signal processing device may add the block vector of the neighboring block to the block vector candidate list. Alternatively, the video signal processing device may change the RRIBC block vector of the temporal neighboring block by using at least one of the position, height, and width of the neighboring block and the position, height, and width of the current block, and then add the changed RRIBC block vector to the block vector candidate list.

In addition, when the video signal processing device configures the block vector candidate list for the current block, the video signal processing device may determine whether to use the encoding information of the neighboring block based on at least one of information on the type of RRIBC mode of the neighbor block, information on whether LIC of the neighboring block is performed, information on whether the neighboring block is a block encoded with GPM, information on whether the neighboring block is a block encoded in CIIP (or IBC-CIIP block) mode, information on whether the neighboring block is a block encoded in IntraTMP mode or a block encoded in IBC mode, information on the MHP of the neighboring block, BCW information of the neighboring block, whether TM is applied to the current block, information on whether the neighboring block of the current block is a spatially derived block or a temporally derived block, whether the current block is in an encoding mode that signals block vector difference (BVD), information on whether the current block is a block encoded in intra TMP mode or a block encoded in IBC mode, and whether the current block is encoded in at least one of RRIBC, GPM, LIC, and CIIP encoding modes, and the video signal processing device may determine whether to include the block vector of the neighboring block of the current block in the block vector candidate list. For example, when the current block is encoded in AMVP mode, the current block is not encoded in RRIBC mode, the current block does not use TM, the current block is not a block vector having BVD (or merge mode with block vector differences (MBVD)), the neighboring block is a block encoded in IBC mode, and the RRIBC type of the neighboring block is in the horizontal direction, the video signal processing device may not store the block vector candidate of the neighboring block in the block vector candidate list of the current block. That is, when the current block is in AMVP encoding mode, the video signal processing device may identify the RRIBC mode type of the current block in advance, and thus may add the block vector candidate of the neighboring block to the block vector candidate list according to the RRIBC mode type of the neighboring block. In addition, the video signal processing device may change (or reconfigure) the block vector candidate of the neighboring block of the current block, and add the changed block vector candidate to the block vector candidate list, or may not use the changed block vector candidate as the block vector candidate and not add the changed block vector candidate to the block vector candidate list. The video signal processing device may determine whether to include the block vector of the neighboring block in the block vector candidate list for the current block according to the RRIBC mode type of the neighboring block. In addition, the configuration of the block vector candidate list for the current block may be determined according to the RRIBC mode type of the neighboring block.

When the neighboring block is encoded in RRIBC mode, the video signal processing device may change the block vector of the neighboring block to fit the RRIBC type, then use the changed block vector as a block vector candidate for the current block, and add the changed block vector to the block vector candidate list. When the neighboring block is encoded in RRIBC mode, the video signal processing device may change the block vector of the neighboring block based on the position of the current block, then use the changed block vector as a block vector candidate for the current block, and add the changed block vector to the block vector candidate list. When the current block is encoded in AMVP mode and the neighboring block is encoded in RRIBC mode, the video signal processing device may change the block vector of the neighboring block to fit the RRIBC type only when the RRIBC type of the current block and the RRIBC type of the neighboring block are the same, then use the changed block vector as a block vector candidate for the current block, and add the changed block vector to the block vector candidate list. When the current block is encoded in AMVP mode and the neighboring block is encoded in RRIBC mode, the video signal processing device may change the block vector of the neighboring block based on the position of the current block only when the RRIBC type of the current block and the RRIBC type of the neighboring blocks are the same, then use the changed block vector as a block vector candidate for the current block, and add the changed block vector to the block vector candidate list. When the current block is encoded in AMVP mode and the neighboring block is encoded in RRIBC mode, the video signal processing device may not use the block vector of the neighboring block as a block vector candidate, and may not add the block vector of the neighboring block to the block vector candidate list. When the current block is in the merge mode, the video signal processing device may change the block vector of the neighboring block to fit the RRIBC type regardless of whether the RRIBC type of the current block and the RRIBC types of the neighboring blocks are the same, then use the changed block vector as a block vector candidate for the current block, and add the changed block vector to the block vector candidate list. When the current block is in the merge mode, the video signal processing device may change the block vector of the neighboring block based on the position of the current block regardless of whether the RRIBC type of the current block and the RRIBC type of the neighboring block are the same, then use the changed block vector as a block vector candidate for the current block, and add the changed block vector to the block vector candidate list. When the current block is encoded in the merge mode, the block vector is corrected by applying TM, and the neighboring block is encoded in RRIBC mode, the video signal processing device may change the block vector of the neighboring block based on the position of the current block and use the changed block vector as a block vector candidate for the current block, and add the changed block vector to the block vector candidate list. In this case, the RRIBC type information of the neighboring block may be maintained as it is. In addition, the mode may be changed to a mode in which RRIBC type information of the neighboring block is not used. When the current block is encoded in the merge mode, the current block is in block vector mode with BVD (or MBVD, and the neighboring block is encoded in RRIBC mode, the video signal processing device may change the block vector of the neighboring block based on the position of the current block and use the changed block vector as a block vector candidate for the current block, and add the changed block vector to the block vector candidate list. In this case, the RRIBC type information of the neighboring block may be maintained as it is. In addition, when the current block is encoded in the merge mode, the current block is in block vector mode with BVD (or MBVD, and the neighboring block is encoded in RRIBC mode, the video signal processing device may change the block vector of the neighboring block based on the position of the current block, then change the mode to a mode in which RRIBC type information of the neighboring block is not used, and add the changed block vector to the block vector candidate list.

When the current block is encoded in the AMVP mode and the RRIBC mode is applied, the video signal processing device may use the RRIBC block vector candidate list for the predefined AMVP mode. In addition, when the current block is encoded in the AMVP mode and the mode (zeroComp) in which one of the horizontal or vertical components of the block vector is configured as "0" is applied, the video signal processing device may use the block vector candidate list for the predefined AMVP mode. In this case, the RRIBC block vector candidate list for the predefined AMVP mode or the block vector candidate list for the zeroComp mode may include a predefined number of block vector candidates and may include predefined block vector candidates. In this case, the predefined number may be an integer of 2. In addition, the predefined block vector candidate may be configured differently depending on the RRIBC type or zeroComp type. When the RRIBC type is horizontal direction or the vertical direction component of the zeroComp type is "0", the predefined block vector candidate may be either (-Width, 0) or (-PosX,0). In this case, since the RRIBC type is the horizontal direction, the vertical component may be configured to "0". Here, Width is the width of the current block, and PosX may be the value of the horizontal component at the upper left pixel position value of the current block within the picture. When the RRIBC type is vertical direction or the horizontal direction component of the zeroComp type is "0", the predefined block vector candidate may be either (0, -Height) or (0, -PosY). In this case, since the RRIBC type is the vertical direction, the horizontal component may be configured to "0". Here, Height is the height of the current block, and PosX may be the value of the vertical component at the upper left pixel position value of the current block within the picture.

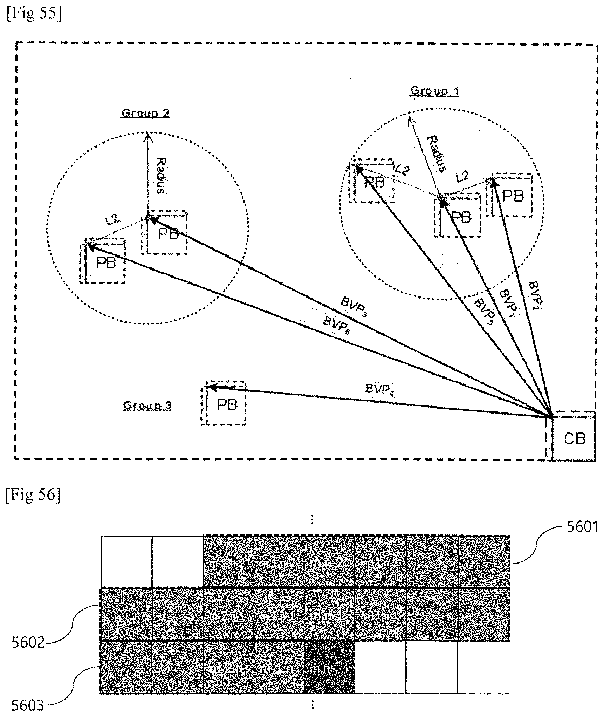

FIG. 56 is a diagram illustrating a reference area memory of a video signal processing device according to an embodiment of the disclosure.

The IBC reference area memory used to derive the IBC prediction block by the video signal processing device may be restricted to an arbitrary area depending on the maximum CTU size. When the horizontal or vertical size of the maximum CTU is 128, the IBC reference area memory of the video signal processing device may be configured as illustrated in FIG. 56. FIG. 56 illustrates CTUs that may be used as the IBC reference area memory based on the current CTU (m, n), and each block represents a CTU. The CTUs that may be used as the IBC reference area memory may be i) CTUs 5601 from the (m-2, n-2) CTU, which is two previous CTU lines based on the vertical position of the current CTU, to the right picture (or sub-picture, slice, tile) boundary, ii) CTUs 5602 from the left picture (or sub-picture, slice, tile) boundary to the right picture (or sub-picture, slice, tile) boundary in one previous CTU line based on the vertical position of the current CTU, and iii) CTUs 5603 from the left picture (or sub-picture, slice, tile) boundary to the (m-1, n) CTU in the same vertical line as the current CTU, and the restored area in the current (m, n) CTU. When the maximum CTU horizontal or vertical size is 256, the CTUs that may be used as the IBC reference area memory are 1) CTUs from the (m-1, n-1) CTU, which is one previous CTU line based on the vertical position of the current CTU, to the right picture (or sub-picture, slice, tile) boundary, and 2) CTUs from the left picture (or sub-picture, slice, tile) boundary to (m-1, n) CTU in the same vertical line as the current CTU, and the restored area in the current (m, n) CTU. Since the IBC reference area memory is limited, the video signal processing device may change PosX and PosY based on the position of the current CTU to be located within the IBC reference area memory. Since the IBC reference area memory varies depending on the maximum CTU size, the predefined block vector candidates may also vary depending on the maximum CTU size. That is, when the horizontal or vertical size of the maximum CTU is 128 and the horizontal position of the current CTU is less than "K", PosX may be used as is. Otherwise, when the horizontal position of the current CTU is equal to or greater than "K", -PosX position may exceed the IBC reference area memory, so -PosX may be changed to -(128 * K + (PosX & 127)) to be located within the IBC reference area memory. Here, "PosX & 127" may be a formula that calculates the distance from the left boundary of the current CTU to the horizontal position of the current block. In the IBC reference area memory area, the horizontal position may be used from the left boundary to the right boundary of the picture, so the video signal processing device may not change PosX. In addition, when the horizontal or vertical size of the maximum CTU is 128 and the vertical position of the current CTU is less than "K", PosY may be used as it is. Otherwise, when the vertical position of the current CTU is equal to or greater than "K", -PosY position may exceed the IBC reference area memory, so -PosY may be changed to - (128 * (K-1) + (PosY & 127)) to be located within the IBC reference area memory. Here, "PosY & 127" may be a formula that calculates the distance from the upper boundary of the current CTU to the vertical position of the current block. Here, K may be an integer, for example, "3". In addition, when the horizontal or vertical size of the maximum CTU is 256 and the horizontal position of the current CTU is less than "L", PosX may be used as it is. Otherwise, when the horizontal position of the current CTU is equal to or greater than "L", -PosX position may exceed the IBC reference area memory, so -PosX may be changed to "-(256 * (L-1) + (PosX & 255))" to be located within the IBC reference area memory. Here, "PosX & 255" may be a formula that calculates the distance from the left boundary of the current CTU to the horizontal position of the current block. In the IBC reference area memory area, the horizontal position may be used from the left boundary to the right boundary of the picture, so the video signal processing device may not change PosX. In addition, when the horizontal or vertical size of the maximum CTU is 256 and the vertical position of the current CTU is less than "L", PosY may be used as it is. Otherwise, when the vertical position of the current CTU is equal to or greater than "L", -PosY position may exceed the IBC reference area memory, so -PosY may be changed to - (256 * (L-1) + (PosY & 255)) to be located within the IBC reference area memory. Here, "PosY & 255" may be a formula that calculates the distance from the upper boundary of the current CTU to the vertical position of the current block. Here, L may be an integer, for example, "2". In the disclosure, PosX may be a value of a horizontal component from the upper left pixel position value of the current block within the picture, and PosY may be a value of a vertical component from the upper left pixel position value of the current block within the picture.

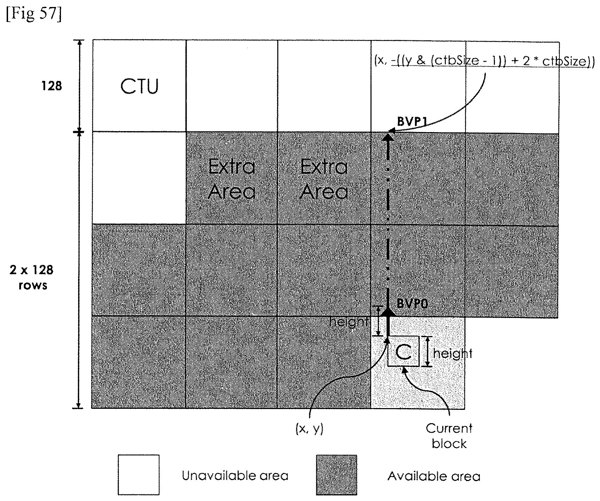

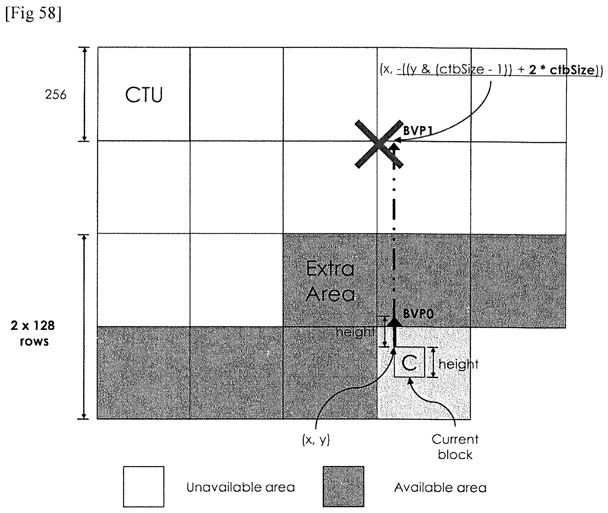

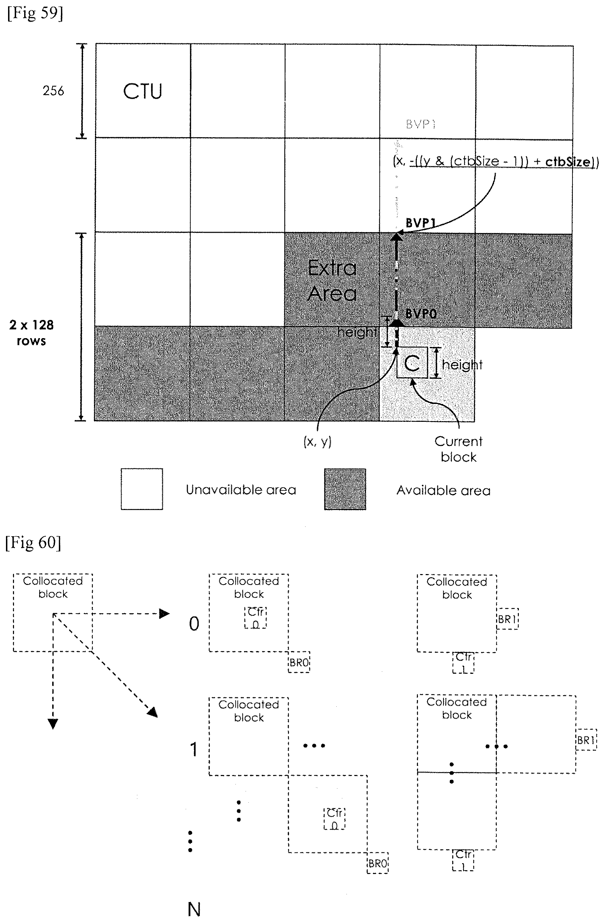

Meanwhile, the IBC reference area memory may be the same regardless of the size of the maximum CTU. In this case, the IBC reference area memory may be the width of the picture/slice/tile x arbitrary height ((N+1) x 128 lines) + the extra CTU area (refer to the extra area of FIGS. 57 to 59). The extra CTU area may vary depending on the size of the maximum CTU. For example, when the maximum CTU size is 128, the extra CTU area may be 2 previously restored CTUs, and when the maximum CTU size is 256, the extra CTU area may be 1 previously restored CTU. Here, N may be an integer and may be "2". When N is "2" and the maximum CTU size is 128, the IBC reference area memory may be the width of the picture/slice/tile x arbitrary height (3 x 128 lines) + the extra CTU area, which may be the previously restored 2 lines of CTUs + 2 CTUs ((m-2,n-2) CTU and (m-1,n-2) CTU) as illustrated in FIG. 56. When N is "2" and the maximum CTU size is 256, the IBC reference area memory may be the width of the picture/slice/tile x arbitrary height (2 x 256 lines) + the extra CTU area, which may be the previously restored 2 lines of CTUs + 1 CTU (the CTU located at the upper left of the current CTU, extra area) as illustrated in FIGS. 58 and 59.

FIGS. 57 to 59 are diagrams illustrating block vector candidates according to an embodiment of the disclosure.

FIG. 57 illustrates a predefined block vector candidate in the vertical direction when the horizontal or vertical size of the maximum CTU is 128 and N is "2". FIGS. 58 and 59 illustrate predefined block vector candidates in the vertical direction when the horizontal or vertical size of the maximum CTU is 128 and N is "2".

As described above, when the RRIBC type is vertical direction or the horizontal direction component of the zeroComp type is "0", the predefined block vector candidate may be either (0, -Height) or (0, -PosY). In this case, since the RRIBC type is the vertical direction, the horizontal component may be configured to "0". Here, Height is the height of the current block, and PosX may be the value of the vertical component at the upper left pixel position value of the current block within the picture.

In FIGS. 57 and 58, BVP0 is (0, -Height), and BVP1 is (0, -PosY). In this case, since BVP1 indicates outside the IBC reference area memory, the video signal processing device may change BVP1 to be located within the IBC reference area memory. For example, referring to FIG. 57, the video signal processing device may change -PosY of BVP1 to "-(128 * N + (PosY & 127))". Here, "PosY & 127" may be a formula for calculating the relative distance from the upper boundary of the current CTU to the vertical position of the current block. Referring to FIG. 58, even when -PosY is changed using the conversion formula "-(128 * N + (PosY & 127))" when the maximum CTU size is 128, it still points outside the IBC reference area memory. Therefore, a conversion formula according to the maximum CTU size is required to be located within the IBC reference area memory. Therefore, referring to FIG. 40, the video signal processing device may change -PosY to "-(256 + (PosY & 255))" to fit the maximum CTU size so that BVP1 is located within the IBC reference area memory. Here, "PosY & 255" may be a formula for calculating the relative distance from the upper boundary of the current CTU to the vertical position of the current block.

Hereinafter, a method of changing the RRIBC block vector of the neighboring block based on the position of the current block is described. When the neighboring block is encoded in an RRIBC mode, the video signal processing device may change a block vector of a neighboring block and use the changed block vector as a block vector candidate for the current block. For example, the video signal processing device may derive an RRIBC block vector for the current block by using the horizontal and vertical sizes of the neighboring block, the horizontal and vertical sizes of the current block, the horizontal and vertical values of the center position of the neighboring block or the current block, and an RRIBC block vector of the neighboring block. Specifically, when the RRIBC type of the neighboring block is horizontal, the RRIBC block vector for the current block may be generated based on a value obtained by adding a horizontal value of an RRIBC block vector of the neighboring block to the product of a predetermine multiple and the sum of half the horizontal length of the neighboring block and half the horizontal length of the current block. The predetermined multiple may be an integer, and may be -3, -2, -1, 0, 1, 2, 3, or the like. The predetermined multiple may vary depending on the horizontal or vertical size of the neighboring block or the current block, and the AMVR resolution of the neighboring block or the current block. For example, when the AMVR resolution of the current block is a 4-integer pixel, the predetermined multiple may be set to 4. Here, the value of the RRIBC block vector in the vertical direction may be an integer, and may be -3, -2, -1, 0, 1, 2, 3, or the like.

Even when a video has symmetric characteristics, the video may not be a perfect symmetrical form. The RRIBC block vector generated by the above method may not be accurate. Accordingly, the video signal processing device may generate various RRIBC block vectors by using at least one among the horizontal and vertical sizes of a neighboring block, the horizontal and vertical sizes of the current block, an RRIBC block vector of the neighboring block, and the AMVR resolution of the neighboring block or the current block. The video signal processing device may add all of the generated RRIBC block vectors to the block vector candidate list for the current block until the block vector candidate list is filled. Specifically, when the RRIBC type of the neighboring block is horizontal, the video signal processing device may generate an RRIBC block vector for the current block, based on a horizontal value of an RRIBC block vector of a neighboring block, after multiplying the sum of half the horizontal length of the neighboring block and half the horizontal length of the current block by a predetermined multiple. The predetermined multiple may be -3, -2, -1, 0, 1, 2, 3, or the like. The video signal processing device may determine the validity of the generated block vector and, if valid, include the generated block vector in the block vector candidate list, and may repeat this process until the block vector candidate list is filled.

In the method by which the video signal processing device selects a temporal neighboring block, the temporal neighboring block may be a block in a predetermined collocated picture corresponding to predetermined coordinates of the current block, as illustrated in FIG. 7. The predetermined coordinates may be the BR position or Ctr position in FIG. 7. Alternatively, a block vector (or motion vector) of an A1 block adjacent to the left of the current block, or a block indicated by a vector generated using the coordinates of the current block's Ctr position, may be used. Specifically, a neighboring block, which corresponds to a position in the reference picture shifted by a block vector (or motion vector) of the A1 block adjacent to the left of the current block, relative to the Ctr (or BR) position coordinate of the current block, may be used as the temporal neighboring block. The predetermined collocated picture may be a picture that has already been encoded or decoded at a position close to the current picture with respect to POC, and may be configured at the start of encoding or decoding for each picture.

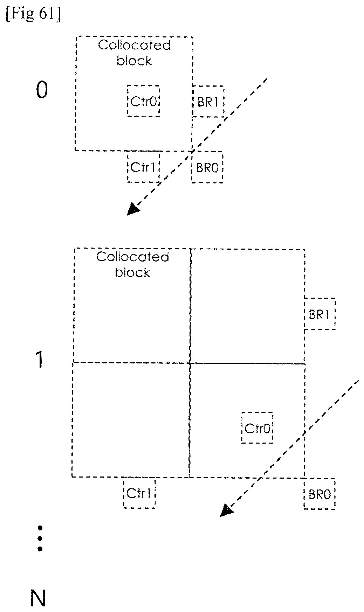

FIGS. 60 and 61 are diagrams illustrating a method for deriving a block vector according to an embodiment of the disclosure.

When deriving a block vector (or motion vector) of a temporal neighboring block, the video signal processing device may derive the block vector (or motion vector) from various predefined positions according to the horizontal and vertical sizes of the current block. In addition, the block vector (or motion vector) of the temporal neighboring block may be derived as many as a predefined number, and for example, the predefined number may be 4. Referring to FIG. 60, the video signal processing device may derive the block vector from the positions BR0, Ctr0, BR1, and Ctrl based on the horizontal and vertical sizes of the current block. If the block vector (or motion vector) of the predefined number is not filled, the video signal processing device may derive the block vector from the positions BR0, Ctr0, BR1, and Ctrl based on the two horizontal and vertical sizes of the current block. The method of deriving a block vector may be repeated until a predefined number of block vectors (or motion vectors) are filled. That is, until a predefined number of block vectors (or motion vectors) are filled, the video signal processing device may derive a block vector based on a size of N times the width and height of the current block. Here, N may be 5. Meanwhile, referring to FIG. 61, the position for deriving a temporal neighboring block may be configured in the anti-diagonal direction. In this case, as described above through FIG. 60, the video signal processing device may derive a block vector.

The video signal processing device may derive multiple block vectors from temporal neighboring blocks, and when adding each block vector to the block vector candidate list, the video signal processing device may determine the identity and similarity between the block vector candidates, and then determine whether to add the block vector candidate list.

In addition, when the block vector derived from the temporal neighboring block is farther away than the position of the current block, the derived block vector may not fit the current block, so the video signal processing device may determine whether to use the block vector as a block vector candidate by determining whether the block vector is within an arbitrary value. For example, the video signal processing device may determine whether to use the block vector derived from the temporal neighboring block as a block vector candidate by using the horizontal and vertical sizes of the neighboring block, the horizontal and vertical sizes of the current block, the horizontal and vertical values for the central position of the neighboring block, or the horizontal and vertical values for the central position of the current block. Specifically, when the absolute value of the difference between the horizontal value for the central position of the neighboring block and the horizontal value for the central position of the current block is greater than the value obtained by multiplying the width of the current block (or the neighboring block) by an arbitrary value, the video signal processing device may not use the block vector derived from the temporal neighboring block as a block vector candidate. Alternatively, when the absolute value of the difference between vertical value for the center position of the neighboring block and the vertical value for the center position of the current block is greater than the value obtained by multiplying the height of the current block (or the neighboring block) by an arbitrary value, the video signal processing device may not use the block vector derived from the temporal neighboring block as a block vector candidate. Here, the arbitrary value may be an integer and may be "3".

Whether the block vector information of the neighboring block may be used as a block vector candidate for the current block or whether the block vector information of the neighboring block is added to the block vector candidate list may vary depending on the horizontal and vertical sizes of the neighboring block, the encoding mode information (IBC, Intra TMP) of the neighboring block, information on whether the neighboring block is a spatially derived block or a temporally derived block, the RRIBC type information of the neighboring block, and information on whether at least one of TM (or DMVR), GPM, LIC, OBMC, MHP, and Affine is applied to the neighboring block. For example, if the neighboring block is a block encoded in the IBC or Intra TMP mode and at least one of TM (or DMVR), GPM, LIC, OBMC, MHP, and Affine is not applied, the block vector information of the neighboring block may be used as a block vector candidate for the current block and may be added to the block vector candidate list. Alternatively, if the current block is encoded in AMVP mode and the RRIBC type of the current block is in the vertical direction, the neighboring block is a block encoded in IBC mode and the RRIBC type of the neighboring block is in the horizontal direction, the block vector information of the neighboring block cannot be used as a block vector candidate for the current block and may not be included in the block vector candidate list. When the RRIBC type of the neighboring block is horizontal or vertical direction, and the block vector information of the neighboring block is available as a block vector candidate for the current block, the video signal processing device may use the RRIBC block vector of the neighboring block as a block vector candidate for the current block without changing the RRIBC block vector of the neighboring block, or may generate a new block vector by adding an arbitrary value to horizontal and vertical components and then use the new block vector as a block vector candidate. Here, the arbitrary value is an integer value determined based on the horizontal and vertical sizes of the neighboring block or the horizontal and vertical sizes of the current block, and may be -3, -2, -1, 0, 1, 2, or 3.

The block vector candidate for the current block may be derived from the block vector of the neighboring block separated by an arbitrary position in the horizontal and vertical directions from the upper left position of the current block. The neighboring block separated by an arbitrary position may be described as a non-adjacent block, and the block vector of the neighboring block separated by an arbitrary position may be described as a non-adjacent block may be described as the block vector of the non-adjacent block. The arbitrary position may vary depending on the horizontal and vertical sizes of the current block or may be configured to an arbitrary integer value. In this case, the arbitrary integer value may be 16, 32, etc. In this case, the arbitrary position may be configured within the limit that does not exceed the IBC reference area memory. Whether a non-adjacent block vector may be used as a block vector candidate or may be added to a block vector candidate list may vary depending on whether the non-adjacent block vector is an RRIBC block vector. For example, when the current block is encoded in AMVP mode, is not in RRIBC mode, and the block vector derived from the non-adjacent neighboring block is an RRIBC block vector, the video signal processing device may not use the block vector derived from the non-adjacent neighboring block as a block vector candidate and may not include the block vector in the block vector candidate list. When the current block is encoded in the merge mode and the block vector derived from the non-adjacent neighboring block is an RRIBC block vector, the video signal processing device may use the block vector derived from the non-adjacent neighboring block as a block vector candidate and may add the block vector to the block vector candidate list.

In addition, the block vector candidate for the current block may be derived from the block vectors stored in a separate memory. The block vectors stored in the separate memory may be called the history based block vector predictor (HBVP), and the HBVP may be obtained from previously used block vectors. Whether the HBVP candidate may be used as a block vector candidate or added to the block vector candidate list may vary depending on whether the HBVP candidate is an RRIBC block vector. Whether the HBVP candidate is added to the block vector candidate list may vary depending on the RRIBC type of the temporal neighboring block. For example, when the current block is encoded in AMVP mode, not RRIBC mode, and the HBVP candidate is an RRIBC block vector, the video signal processing device may not use the HBVP candidate as a block vector candidate and may not include the HBVP candidate in the block vector candidate list. When the current block is encoded in the merge mode and the HBVP candidate is an RRIBC block vector, the video signal processing device may use the HBVP candidate as a block vector candidate. When the current block is encoded in the merge mode and the HBVP candidate is an RRIBC block vector, the video signal processing device may not use the HBVP candidate as a block vector candidate and may not include the HBVP candidate in the block vector candidate list. As another embodiment, regardless of the encoding mode of the current block, when the HBVP candidate is an RRIBC block vector, the video signal processing device may not use the RRIBC block vector as a block vector candidate and may not add the RRIBC block vector to the block vector candidate list.

In addition, the video signal processing device may configure a plurality of HBVP memories according to the RRIBC type and use them to derive a block vector candidate for the current block. The video signal processing device may generate an HBVP composed of only a block vector of a block not encoded in the RRIBC mode, an HBVP composed of only a block vector of a block encoded in the RRIBC mode of the horizontal direction type, and an HBVP composed of only a block vector of a block encoded in the RRIBC mode of the vertical direction type. When the current block is encoded in the AMVP mode and the RRIBC type of the current block is horizontal direction, the video signal processing device may derive a block vector candidate by using an HBVP composed of only a block vector of a block in which the RRIBC mode of the horizontal direction type is used.

When the non-adjacent block vector candidate or the HBVP candidate is an RRIBC block vector, the video signal processing device may derive an RRIBC block vector for the current block by using the horizontal and vertical sizes of the neighboring blocks, the horizontal and vertical sizes of the current block, the horizontal and vertical values for the center position of the neighboring block or the current block, and the RRIBC block vector of the neighboring block. Specifically, when the RRIBC type of the non-adjacent block vector candidate or the HBVP candidate block is horizontal direction, the RRIBC block vector for the current block may be generated by multiplying the horizontal value of the RRIBC block vector of the non-adjacent block vector candidate or the HBVP candidate block by an arbitrary multiple. In this case, the arbitrary multiple may be an integer, and may be -3, -2, - 1, 0, 1, 2, 3, and the like. Here, the arbitrary multiple may vary depending on the horizontal or vertical size of the neighboring block or the current block, and the AMVR resolution of the neighboring block or the current block. For example, when the AMVR resolution of the current block is an integer pixel of 4, the arbitrary multiple may be configured to 4. The value of the RRIBC block vector in the vertical direction may be an arbitrary integer, and may be -3, -2, -1, 0, 1, 2, 3, and the like.

When the non-adjacent block vector candidate or the HBVP candidate is an RRIBC block vector, the video signal processing device may not add the block vector candidate to the block vector candidate list for the current block.

The HBVP method is a method of storing only a block vector in a separate memory, retrieving an HBVP candidate from a block to be encoded next to use the HBVP candidate as a block vector candidate, and adding the same to the block vector candidate list. Since repeated letters or patterns frequently occur in screen content, the video signal processing device may store a part of the image in a separate image memory and use the same as a prediction block for a block to be next encoded. This is similar to the vector quantization technique, which finds a prediction block for the current block in a predefined pattern dictionary and signals only its index, but differs in that the HBVP method signals a block vector value in a separate image memory without signaling the index. In addition, the HBVP method differs from the conventional IBC reference memory method in that the size of the reference memory, the timing of configuring or updating the reference memory are different, and multiple reference memories are used. The encoder may configure multiple reference memories and then generate a bitstream that includes memory information on which reference memory to use. The decoder may use the reference memory determined by parsing the memory information to generate the IBC prediction block of the current block. The first reference memory may be configured based on the neighboring blocks adjacent to the current block. The second reference memory may be configured based on a specific image or character that has been previously restored. Since the size and font of the characters may be different for each screen content image, or the image pattern may be different, additional third and fourth memories may be required. The method of using multiple reference memories may be used not only in IBC but also in the intra TMP mode. The video signal processing device may generate prediction blocks based on multiple (two or more) reference memories rather than one reference memory, and may generate a final prediction block by weighting the prediction blocks according to an arbitrary weight, and may use the prediction block as the prediction block for the current block. The encoder may generate a bitstream including information on whether the current block uses only one reference memory or two or more reference memories, and the decoder may parse the information to generate a prediction block of the current block.

The video signal processing device may generate a new block vector candidate from the block vector candidate in the block vector candidate list of the current block and add the new block vector candidate to the block vector candidate list. The newly added block vector candidate may be described as a pair-wise block vector candidate. Specifically, the video signal processing device may obtain a first block vector candidate and a second block vector candidate from the block vector candidate list and generate a new block vector candidate by calculating the average between the horizontal components and the average between the vertical components of the two block vector candidates. In addition, the video signal processing device may add the new block vector candidate to the block vector candidate list. In this case, the first block vector candidate and the second block vector candidate may be different block vectors. When the current block is encoded in the AMVP mode and the RRIBC mode type is horizontal direction, the video signal processing device may generate a pair-wise block vector candidate by using only block vectors whose RRIBC mode type is horizontal direction in the block vector candidate list. When the current block is encoded in the AMVP mode and the vertical direction of the block vector is configured to "0", the video signal processing device may generate a pair-wise block vector candidate by using only block vectors whose vertical direction is "0" in the block vector candidate list. When the current block is encoded in the merge mode, the video signal processing device may generate a pair-wise block vector candidate by using only block vectors whose RRIBC mode are the same in the block vector candidate list. When the current block is encoded in the merge mode, the video signal processing device may generate a pair-wise block vector candidate by using only block vectors whose vertical (or horizontal) direction is "0" in the block vector candidate list. When the video signal processing device generates a pair-wise block vector candidate for a block encoded in the IBC mode, an RRIBC block vector in the block vector candidate list may not be used to generate the pair-wise block vector. When the video signal processing device generates a pair-wise block vector candidate for a block encoded in the IBC mode, a block vector whose vertical (or horizontal) direction is "0" in the block vector candidate list may not be used to generate a pair-wise block vector, and may not be included in the block vector candidate list. When the video signal processing device generates a pair-wise block vector candidate for a block encoded in the IBC mode, the video signal processing device may use only block vectors whose vertical (or horizontal) direction is "0" in the block vector candidate list to generate a pair-wise block vector, and may add them to the block vector candidate list.

The video signal processing device may generate a new block vector candidate based on the horizontal and vertical sizes of the current block, and the horizontal and vertical coordinates of the current block within the current CTB, and add the newly generated block vector candidate to the block vector candidate list of the current block. Specifically, if the block vector candidate list is not filled with a predefined number, the video signal processing device may sequentially add the predefined block vector candidates to the block vector candidate list, and in this case, the newly added block vector candidate may be configured to not use at least one of the RRIBC mode, the LIC mode, the BCW mode, the OBMC, and the MHP. In addition, the newly added block vector candidate may be configured to use the RRIBC mode and not use the LIC mode. In addition, the newly added block vector candidate may be configured to use the LIC mode. Here, the predefined number is a positive integer, and may be 5, 6, or 28. In addition, the predefined block vector candidates here are composed without positive components, and may be (-cbWidth, -cbHight), (-cbWidth, 0), (0, - cbHight), (-cbWidth - (deltaX >> 1), -(cbHight >> 1)), (-(cbWidth >> 1), -cbHeight - (deltaY >> 1)), (-cbWidth - (deltaX >> 1), -cbHeight - (deltaY >> 1)). Here, cbWidth is the width of the current block, and cbHeight is the height of the current block. In addition, deltaX is ctbSize * (lx() >> log2CtbSize) + cbX - cbWidth, and deltaY may be calculated as ((ly() >> log2CtbSize) == 0)? (cbY - cbHeight) : ((((ly() >> log2CtbSize) == 1) ? 1 : 2) * ctbSize + cbY - cbHeight). Here, ctbSize is the current CTB size, and may be 128 or 256. lx() and ly() represent the upper left coordinate position of the current block based on the current picture, and log2Ctbsize is the value of the log2 of the current CTB size. When the current CTB size is 128, log2Ctbsize is "7". In addition, "(Condition) ? A : B" means that if Condition is true, A is executed, and if Condition is false, B is executed. When deltaX is negative and deltaY is positive, the predefined block vector candidates may be (-cbX, -cbHeight), (0, -cbHeight), (-(cbX >> 1), -cbHeight - (deltaY >> 1)), (-cbX, -cbY), (0, -cbY), (cbWidth, -cbHeight - (deltaY >> 1)). When deltaX is positive and delta Y is negative, the predefined block vector candidates may be (-cbWidth, -cbY), (-cbWidth, 0), (-cbWidth - (deltaX >> 1), -(cbY >> 1)), (-cbX, -cbY), (-cbX, -cbY), (-cbX, 0), (-cbWidth - (deltaX >> 1), cbHeight). When deltaX is negative and deltaY is positive, the predefined block vector candidates may not be added to the block vector candidate list. The predefined block vector candidates may vary based on at least one of the horizontal and vertical sizes of the current block, the RRIBC mode of the current block, and whether the horizontal and vertical components of the block vector of the current block are fixed to "0". For example, when the current block is encoded in the AMVP mode and the RRIBC type of the current block is horizontal direction (or the vertical direction component of the block vector of the current block is fixed to "0"), the video signal processing device may use a block vector candidate whose vertical direction component is composed of "0" as a predefined block vector candidate. In this case, if the block vector candidate list is not filled with a predefined number of blocks, the predefined block vector candidates may be added to the list in order. Here, the block vector candidates whose vertical direction component is composed of "0" may be (-cbWidth, 0), (-cbWidth * 2, 0), (-cbWidth - (deltaX >> 1), 0), (-cbX, 0).

The predefined block vector candidate may be extended by using the RRIBC type. The predefined block vector candidate may be configured with at least one of a candidate that does not use RRIBC, a candidate that uses horizontal direction RRIBC, or a candidate that uses vertical direction RRIBC. In other words, the video signal processing device may configure the predefined block vector candidate as a block vector that does not use RRIBC. Alternatively, the video signal processing device may configure the predefined block vector candidate as a block vector that uses horizontal direction RRIBC type, and may configure the predefined block vector candidate as a block vector that uses vertical direction RRIBC type. In this case, since the block vector that uses horizontal direction RRIBC type has vertical component "0", the block vector may be a block vector candidate that has vertical component "0" among the predefined block vector candidates. That is, the video signal processing device may configure the predefined block vector candidate using the horizontal direction RRIBC type differently according to the width of the current block. For example, the predefined block vector candidate using the horizontal direction RRIBC type may be (-cbWidth, 0), (-(cbWidth + (cbWidth>>1)), 0), (-(cbWidth + 2 * (cbWidth>>1)), 0), etc. Among the predefined block vector candidates, a block vector candidate whose horizontal component is "0" may also be configured by using the above-described method.

When the current block is encoded in the merge mode, information on whether the RRIBC mode of the current block or the horizontal and vertical direction components of the block vector of the current block are fixed to "0" may be derived from the neighboring blocks. When the current block is encoded in the merge mode, the video signal processing device may add a predefined block vector candidate to the block vector candidate list. Information on whether the RRIBC mode of the predefined block vector candidate or the horizontal and vertical direction components of the block vector of the current block are fixed to "0" may be configured differently depending on the values of the horizontal and vertical direction components of the predefined block vector. For example, when the current block is encoded in the merge mode, the vertical component of the predefined block vector candidate is "0" and the horizontal component is not "0", the video signal processing device may configure the RRIBC mode type of the predefined block vector candidate to the horizontal direction. When the current block is encoded in the merge mode, and the vertical component of the predefined block vector candidate is "0" and the horizontal component is not "0", the video signal processing device may add both the block vector candidate with the RRIBC mode configured to the horizontal direction and the block vector candidate with the RRIBC mode configured not to be used to the block vector candidate list.

Depending on the encoding mode of the current block, whether to add a predefined block vector candidate to the block vector candidate list may vary. For example, when the current block is encoded in the merge mode, the video signal processing device may not add the predefined block vector candidate to the block vector candidate list. When the current block is encoded in the merge mode, the video signal processing device may add all RRIBC block vectors of the horizontal direction type, RRIBC block vectors of the vertical direction type, and block vectors to which RRIBC is not applied to the block vector candidate list. That is, the block vector candidate list may include block vector candidates of all RRIBC types. When the current block is encoded in the merge mode, the encoder may generate a bitstream including information on the RRIBC mode type. The decoder may configure a block vector candidate list for the current block based on the RRIBC mode type determined by parsing information on the RRIBC mode type.

When the video signal processing device configures a block vector candidate list, a zero (0,0) block vector may be added. When the zero block vector is selected, the video signal processing device may generate a prediction block for the current block by using an intra prediction method other than an IBC encoding method. In this case, intra prediction modes such as planar, DC, horizontal, and vertical may be used for intra prediction, and the encoder may generate a bitstream including information on which intra prediction mode is used. When the current block is a zero block vector, the decoder may parse information on which intra prediction mode is used to determine the intra prediction mode.

When the current block is encoded in the RRIBC mode, OBMC may not be applied. In addition, when the current block is encoded in the RRIBC mode, the video signal processing device may perform the OBMC process by using only block vectors of neighboring blocks that are identical to the type of RRIBC mode of the current block.

FIG. 55 is a diagram illustrating a method for configuring a cluster-based block vector candidate list according to an embodiment of the disclosure.

Hereinafter, a method for a video signal processing device to configure a cluster-based block vector candidate list is described. The video signal processing device may configure a block vector candidate list for the current block, and then calculate TM costs for all block vector candidates. The video signal processing device may also rearrange the block vector candidates based on the calculated TM cost values. The video signal processing device may calculate a radius value for grouping the block vector candidates based on the width and height of the current block. The video signal processing device may classify all block vector candidates in the block vector candidate list into a predefined number of groups based on the calculated radius values. The video signal processing device may select a block vector candidate with a minimum TM cost value in each classified group as a representative block vector candidate. The predefined number may be a positive integer, and may be 2, 3, etc. Specifically, the video signal processing device may configure the first block vector candidate of the block vector candidate list as the reference block vector candidate. In addition, the video signal processing device may compare the distance of each of the other block vector candidates in the block vector list to the reference block vector candidate and the value obtained by multiplying the radius by an arbitrary weight. The arbitrary weight may be an integer, and may be 1, 2, 3, etc. If the comparison result shows that the distance between the other block vector candidates in the block vector list and the reference block vector candidate is smaller than the value obtained by multiplying the radius by an arbitrary weight, the other block vector candidates may be configured to the same group. The video signal processing device may configure a new block vector candidate list by using representative block vector candidates selected from among several groups finally produced, and the representative block vector candidates with the lowest TM cost value may be added to the block vector candidate list. The video signal processing device may perform a pruning process when configuring the block vector candidate list. The video signal processing device may leave only the block vector candidate with the minimum TM cost in each group and delete the remaining block vector candidates from the block vector candidate list.

When the current block is encoded in the IBC mode, the encoder may generate a bitstream including information on a block vector without differential encoding of the block vector for the current block with the block vector candidate. The encoder may include information on whether the block vector for the current block is differentially encoded in the bitstream. When the current block is encoded in the IBC mode, the decoder may parse information on whether the block vector is differentially encoded and obtain the block vector for the current block based on the parsing result. That is, when the block vector of the current block is not differentially encoded, the video signal processing device may use the obtained block vector as it is for the current block. In this case, the video signal processing device may not configure a block vector candidate list for the current block. In addition, since the block vector only has negative values, the encoder may not signal (may not include in the bitstream) information on the sign value for the horizontal and vertical direction components. The decoder may not parse information on the sign value for the horizontal and vertical direction components and may configure the sign value for the horizontal and vertical direction components to negative. When the block vector of the current block is differentially encoded, the obtained block vector is a differential value for the block vector, so the video signal processing device may configure a block vector candidate list for the current block, find the optimal block vector candidate, and add the optimal block vector candidate and the obtained block vector differential value to obtain the block vector for the current block.

The absolute value of the block vector may be greater than at least one of the horizontal size and the vertical size of the current block. In addition, the block vector may only have negative values. That is, when the absolute value of the differential value for the block vector is encoded, the video signal processing device may encode the differential absolute value of the block vector as a fixed-size value. The fixed-size value may be the horizontal or vertical size of the current block. That is, when the absolute value of the horizontal component of the block vector is greater than the horizontal size of the current block, the encoder may generate a bitstream including information on the value obtained by subtracting the horizontal size of the current block from the absolute value of the block vector. In addition, the encoder may include information in the bitstream that fixed-size differential encoding has been applied to the horizontal component. In addition, information related to the sign may not be included in the bitstream. After parsing the information on the horizontal component of the block vector of the current block and whether differential encoding is applied to the horizontal component, the decoder may use the information on the horizontal component of the block vector of the current block and the horizontal size of the current block to configure the absolute value of the horizontal component of the block vector of the current block. The decoder may calculate the horizontal component of the block vector for the current block by converting the absolute value of the horizontal component of the block vector of the current block to a negative number without parsing the information related to the sign. The vertical component of the block vector for the current block may also be calculated in the same way.

When the current block is encoded in the IBC mode, the video signal processing device may encode the current block by using the CIIP, GPM, LIC mode, and IBC mode in combination. The IBC-CIIP mode may be a mode that encodes the current block by blending the intra-predicted block and the IBC-predicted block. When the current block is encoded in the IBC mode, the encoder may generate a bitstream including information on whether to apply the CIIP mode for encoding the current block. The decoder may determine whether to parse information on whether to apply the CIIP mode by using at least one of whether the RRIBC mode is applied to the current block, whether the LIC mode is applied to the current block, and whether the GPM mode is applied to the current block. Specifically, when the current block is encoded in the IBC mode, the RRIBC mode is not applied, the LIC mode is not applied, and the current block is not a block partitioned by the GPM mode, the decoder may parse the information on whether to apply the CIIP mode to determine whether the current block is encoded in the IBC-CIIP mode. In this case, a list of intra prediction modes may be used to derive the intra prediction mode of the intra-predicted block. The encoder may generate a bitstream including information on the intra prediction mode of the intra-predicted block. When the current block is in the IBC-CIIP mode, the decoder may parse the information on the intra prediction mode and use the same for intra prediction of the current block. In addition, weights for blending may be required. In this case, the weights may vary depending on whether the IBC mode is IBC merge mode or IBC AMVP mode. In this case, when the IBC mode is IBC merge mode, the weight for IBC may be 13, and the weight for intra prediction may be 3. When the IBC mode is IBC AMVP mode, the weight for IBC and the weight for intra prediction may be 1 (they may be the same).

The IBC-GPM mode may be a mode in which GPM-style partition is applied to a block encoded in the IBC mode. In this case, one of the two sub-blocks partitioned by the GPM method may be encoded in the intra mode, and the remaining sub-blocks may be encoded in the IBC mode. The form in which the current block is partitioned by the GPM method may be determined by one of the two GPM sets. The first GPM set may include the most frequently used partition forms. The second GPM set may include the remaining partition forms not included in the first GPM set. The encoder may generate a bitstream including information indicating whether the current block is encoded in the IBC-GPM mode, information indicating which of the two GPM sets is used, and information indicating a sub-block encoded in the intra prediction mode. In addition, the encoder may include information indicating an intra prediction mode of a sub-block encoded in the intra prediction mode and information indicating which merge candidate is selected in the bitstream. When the current block is encoded in the merge mode and the IBC mode, the decoder may parse information indicating whether the current block is encoded in the IBC-GPM mode. When the parsing result shows that the current block is encoded in the IBC-GPM mode, the decoder may decode the current block by parsing information indicating which set among the two GPM sets is used, information indicating the sub-block encoded in the intra prediction mode, information indicating the intra prediction mode of the sub-block encoded in the intra prediction mode, and information indicating which merge candidate is selected. In addition, a fusion method using two reference lines may not be applied to a sub-block encoded in the intra mode in a block encoded in the IBC-GPM mode.

The LIC method may be applied to a block encoded in the IBC mode to perform luminance compensation. When the motion information of the current block encoded in the IBC mode by the AMVP mode is encoded, the encoder may obtain a bitstream including information indicating whether LIC is applied to the block encoded in the IBC mode. When the motion information of the current block encoded in the IBC mode by the AMVP mode is encoded, the decoder may decode the current block by parsing the information indicating whether LIC is applied to the block encoded in the IBC mode. In addition, when the motion information of the current block encoded in the IBC mode by the merge mode is derived, the video signal processing device may derive whether LIC is applied to the IBC block from block vector candidates of the neighboring blocks of the current block. In the case of screen content, since there are many areas where the changes in pixel values are smooth, the influence of luminance compensation may be minimal. Therefore, when the current block is encoded in the IBC mode, the video signal processing device may determine whether to apply LIC based on the amount of change in the neighboring pixel values of the current block or the difference between the neighboring pixel values and an arbitrary allowable pixel value. Here, the arbitrary allowable pixel value may be a positive integer and may be 128, 768, etc. For example, when the current block is encoded in the IBC mode and the absolute value of the difference between the neighboring pixel values is within an arbitrary range, LIC may not be applied to the current block. Here, the arbitrary range may be a positive integer and may be 5, 10, etc. When the current block is encoded in the IBC mode and the neighboring pixel values are less than 128, LIC may not be applied to the current block.

When the current block is encoded in the RRIBC, IBC-CIIP, or IBC-GPM mode, information related to the IBC-LIC may not be included in the bitstream. When the current block is encoded in the RRIBC, IBC-CIIP, or IBC-GPM mode, information related to IBC-LIC may not be configured to be unused. That is, when the current block is encoded in the RRIBC, IBC-CIIP, or IBC-GPM mode, the decoder may not parse information related to the IBC-LIC and configure the IBC-LIC mode to be unused.

When the current block is encoded in the RRIBC, IBC-LIC, or IBC-GPM mode, information related to the IBC-CIIP may not be included in the bitstream. When the current block is encoded in the RRIBC, IBC-LIC, or IBC-GPM mode, information related to IBC-CIIP may not be configured to be unused. That is, when the current block is encoded in the RRIBC, IBC-LIC, or IBC-GPM mode, the decoder may not parse information related to the IBC-CIIP and configure the IBC-CIIP mode to be unused.

When the current block is encoded in the RRIBC, IBC-LIC, or IBC-CIIP mode, information related to the IBC-GPM may not be included in the bitstream. When the current block is encoded in the RRIBC, IBC-LIC, or IBC-CIIP mode, information related to IBC-GPM may not be configured to be unused. That is, when the current block is encoded in the RRIBC, IBC-LIC, or IBC-CIIP mode, the decoder may not parse information related to the IBC-GPM and configure the IBC-GPM mode to be unused.

When the current block is encoded in IBC mode and the skip mode is applied, information related to the IBC-CIIP, IBC-GPM, and IBC-LIC may not be included in the bitstream. That is, when the current block is encoded in IBC mode and the skip mode is applied, the decoder may not parse information related to the IBC-CIIP, IBC-GPM, and IBC-LIC and configure the IBC-CIIP, IBC-GPM, and IBC-LIC modes to be unused. Here, the skip mode may be a mode in which no error block exists. When the current block is in the skip mode, the encoder may not include information related to the error block in the bitstream. When the current block is in the skip mode, the decoder may not parse information related to the error block and may configure the error block to "0".

The MBVD mode is a mode that encodes the differential value for a block vector in a similar way to the MMVD mode, which is a mode that encodes the differential value for a motion vector in the merge mode. The MBVD method may be a method of determining a block vector by using one candidate selected from several block vector differential value candidates. The decoder may generate a bitstream including information (e.g., an index indicating one candidate selected from among the block vector differential value candidates, etc.) on the differential value of a block vector obtained through the MBVD method. The encoder may parse the information on the differential value of a block vector signaled in the bitstream and use the same to restore the current block. Compared to including the existing block vector differential value in the bitstream, the bit amount may be saved by including only some information on the differential value of a block vector in the bitstream.

When the current block operates in the RRIBC mode, the index information for the differential value for the block vector obtained using the MBVD method may be included in the bitstream and signaled. The decoder may parse the MBVD information (e.g., the index information for the differential value for the block vector) from the bitstream to determine the block vector differential value, and calculate the block vector for the current block by adding the block vector differential value to the predicted block vector. Meanwhile, when the current block operates in the RRIBC mode, the MBVD method may not be used. In this case, the information related to the MBVD may not be included in the bitstream. That is, the encoder may generate a bitstream that does not include the information related to the MBVD. When the current block operates in the RRIBC mode, the decoder may not parse the information related to the MBVD from the bitstream, and after parsing the block vector differential value, calculate the block vector for the current block by adding parsed block vector differential value to the predicted block vector.

When the MBVD is applied to the current block, the video signal processing device may add the RRIBC block vector candidate to the block vector candidate list. Conversely, when the MBVD is applied to the current block, the video signal processing device may not add the RRIBC block vector candidate to the block vector candidate list.

In screen content, one of the horizontal and vertical components of the block vector often becomes "0". Therefore, the video signal processing device may use the ZeroComp mode that configures one of the horizontal and vertical components of the block vector to "0". The encoder may generate and signal a bitstream that includes information that the zeroComp mode is applied to the current block and information on whether the horizontal direction of the block vector is "0" or the vertical direction is "0". The decoder may parse the information that the zeroComp mode is applied to the current block included in the bitstream and information on whether the horizontal direction of the block vector is "0" or the vertical direction is "0", and use the parsed information when parsing the block vector differential value for the current block or when calculating the block vector for the current block. For example, when the zeroComp mode is applied to the current block and the horizontal direction of the block vector is "0", the decoder may parse only the block vector differential value for the vertical direction without parsing the block vector differential value for the horizontal direction. In addition, when calculating the block vector for the current block, the decoder may configure the horizontal direction component of the block vector to "0" and calculate only the vertical direction component by adding the predicted value and the differential value of the block vector.

When the current block uses the AMVP mode to encode motion information, the encoder may additionally include and signal information on whether to apply LIC to the current block in the bitstream. When the current block is in the AMVP mode, the decoder may additionally parse information on whether to apply the LIC included in the bitstream to determine whether to apply the LIC to the current block. In this case, the decoder may determine whether to parse the information on whether the LIC is applied by using at least one of the information on whether the current block included in the bitstream is encoded in the GPM mode, whether the current block uses bidirectional motion, whether the current block is encoded in the merge mode, whether the current block is encoded in the IBC mode, the horizontal and vertical sizes of the current block, and whether the current block is encoded in the inter prediction mode. For example, if any one of the current block is encoded in the GPM mode, the current block is encoded in the merge mode, the current block uses bidirectional motion, the current block is encoded in the IBC mode, the product of the width and height of the current block is less than 32, or the current block is encoded in the intra prediction mode is satisfied, the decoder may not parse the LIC application information and may be configured not to apply LIC to the current block.

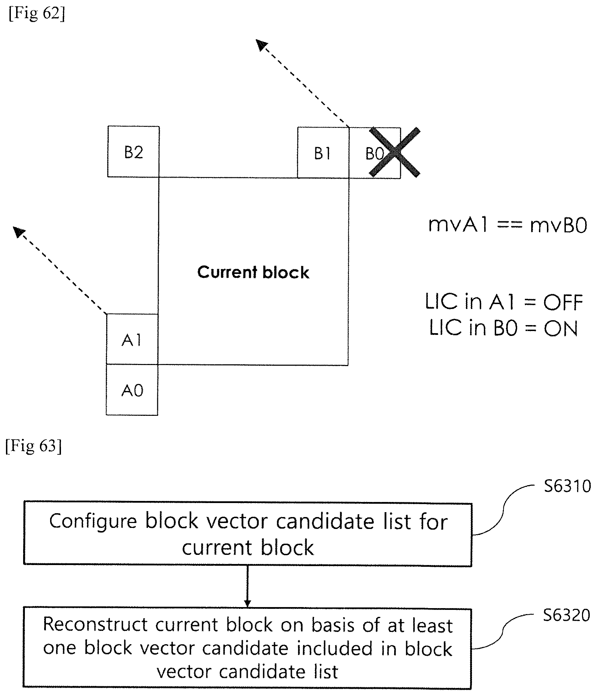

FIG. 62 is a diagram illustrating a method for deriving a motion candidate from a neighboring block of a current block when the current block is encoded in a merge mode according to an embodiment of the disclosure.

When the current block is encoded in the merge mode, the video signal processing device may determine whether LIC is applied to the current block based on the motion candidate derived from the neighboring block of the current block. Referring to FIG. 62, the video signal processing device may add motion candidates of spatial neighboring blocks in the order of FIG. B1, A1, B0, A0 to the motion candidate list. If the number of candidates in the motion candidate list is less than 4, the video signal processing device may add the motion candidate of the neighboring block of B2 to the motion candidate list. When adding a motion candidate to the motion candidate list, the video signal processing device may perform a pruning process (overlap check), and if the motion candidate to be newly added is already included in the motion candidate list, the motion candidate to be newly added may not be added to the motion candidate list. In this case, the video signal processing device may determine whether the newly added motion candidate is included in the motion candidate list through the identity or similarity of the motion vector. For example, when a motion vector identical to the motion vector of the motion candidate to be added exists in the motion candidate list, the video signal processing device may determine that the motion candidate is duplicated and may not add the motion candidate to the motion candidate list. Alternatively, when the difference value between the motion vector of the motion candidate to be added and the motion vector of an arbitrary motion candidate in the motion candidate list is smaller than an arbitrary value, the video signal processing device may determine that the motion candidate is duplicated and may not add the motion candidate to the motion candidate list. Here, the arbitrary value may be determined based on at least one of the encoding mode of the current block, the motion resolution of the current block, and the horizontal and vertical sizes of the current block. For example, the arbitrary value may be an integer value of 4.

When the video signal processing device adds motion candidates of spatial neighboring blocks in the order of B1, A1, B0, A0 of FIG. 62 to the motion candidate list, the motion candidate of the B0 block includes the motion candidate of the A1 neighboring block in the motion candidate list, and since the motion vector of the A1 block and the motion vector of the B0 block are the same, the motion candidate of the B0 block may not be included in the motion candidate list. That is, the motion candidate of the B0 block may not be included in the motion candidate list.

When LIC is applied to only the B0 block among the neighboring blocks of FIG. 62, the current block does not have a motion candidate to which LIC has been applied in the motion candidate list, so the current block cannot apply the LIC. In order to improve this problem, even if the motion vector of the motion candidate of the neighboring block exists in the motion candidate list during the pruning process, if the application of LIC is different, the video signal processing device may add the motion candidate to the motion candidate list. That is, the video signal processing device may add the motion candidate of the B0 block to the motion candidate list since the LIC is applied only to the B0 block among the neighboring blocks of the current block.

In other words, the video signal processing device may determine whether motion information of a neighboring block may be used as a motion candidate for the current block or whether to add the motion information to a motion candidate list based on at least one of the following pieces of information.

- Information on whether the motion vector of the motion candidate of the neighboring block is the same as the motion vector of an arbitrary motion candidate of the motion candidate list, information on whether the difference value between the motion vector of the motion candidate of the neighboring block and the motion vector of an arbitrary motion candidate of the motion candidate list is smaller than an arbitrary value, information on whether the motion candidate of the neighboring block applies LIC and whether an arbitrary motion candidate of the motion candidate list applies the LIC, information on whether the motion candidate of the neighboring block applies BCW and whether an arbitrary motion candidate of the motion candidate list applies the BCW, information on whether the motion candidate of the neighboring block applies HPel and whether an arbitrary motion candidate of the motion candidate list applies the HPel, information on whether the motion candidate of the neighboring block applies MHP and whether an arbitrary motion candidate of the motion candidate list applies the MHP, information on whether the MHP motion information of the motion candidate of the neighboring block and the MHP motion information of an arbitrary motion candidate in the motion candidate list are the same or similar, information on whether the RRIBC type of the motion candidate of the neighboring block and the RRIBC type of an arbitrary motion candidate in the motion candidate list are the same

**[Table 1]**

| | Pred. direction | MvL0 | MvL1 | LIC | BCW | hPel | MHP | rribc |
|---|---|---|---|---|---|---|---|---|
| 1 | Uni | mvA | n/a | 0 | 0 | 0 | 0 | 0 |
| 2 | Uni | mvA | n/a | 1 | 0 | 0 | 0 | 0 |
| 3 | Bi | mvB | mvC | 0 | 1 | 0 | 0 | 0 |
| 4 | Bi | mvB | mvC | 0 | 0 | 1 | 0 | 0 |
| ... | | | | | | | | |
| N | | | | | | | | |

Table 1 shows the motion candidates in the motion candidate list configured through the above-described method. 1, 2, 3, ...N in the first column of Table 1 are indices of the motion candidates, and the motion candidates corresponding to each index are conveniently described as first motion candidate, second motion candidate, third motion candidate, ... and Nₜₕ motion candidate.

Referring to Table 1, the first motion candidate in the motion candidate list is a unidirectional candidate to which the LIC is not applied. The second motion candidate is a unidirectional candidate that has the same motion vector as that of the first motion candidate, but to which the LIC is applied. The third motion candidate is a bidirectional candidate to which the BCW is not applied. The fourth motion candidate is a bidirectional candidate that has the same motion vector as that of the third motion candidate, to which the HPel is applied. Here, the HPel applies half-pixel (1/2 pixel) unit motion compensation when generating a prediction block for the current block.

The above-described method may be applied to at least one of cases when the video signal processing device encodes the current block in a general merge mode, when TM is applied to the current block, when DMVR is applied to the current block, when GPM is applied to the current block, and when MMVD is applied to the current block.

In addition, when the merge mode is applied to the current block, the LIC may always be applied. However, when the video signal processing device performs correction for the motion candidate through the TM method, the MVP may be corrected by performing the TM in a state to which the LIC is not applied. When the current block is encoded in the merge mode, the decoder may configure the LIC to be applied to the current block without parsing the information related to the LIC.

When the LIC is applied to all merge blocks, the complexity may increase. Therefore, the video signal processing device may determine whether to apply the LIC based on the TM cost through the already restored pixel values surrounding the current block in units of CU blocks. In other words, the video signal processing device may implicitly determine whether LIC is applied to the current block by using at least one of the base template configured through the neighboring blocks of the current block, the reference template configured through the neighboring blocks of the reference block indicated by the motion vector of the current block, the LIC coefficient value between the base template and the reference template, and the difference value between the base template and the reference template. In this case, the difference value between the base template and the reference template may be calculated as one of the differences between the averages of the base template and the reference template, MR-SAD, and SAD. For example, when the current block is encoded in the merge mode, the video signal processing device may configure a base template through neighboring blocks of the current block, and then configure a reference template through neighboring blocks of the reference block indicated by the motion vector of the current block. In addition, the video signal processing device may calculate a LIC coefficient between the reference template and the base template, and apply LIC to the current block when the LIC coefficient is greater than a predetermined value. When the LIC coefficient is less than or equal to the predetermined value, the video signal processing device may not apply the LIC to the current block.

After the motion candidate list for the current block is configured, the video signal processing device may add a new motion candidate to the motion candidate list by using at least one of the LIC, BCW, HPe1, MHP, and RRIBC. In addition, the new motion candidate may be configured using the motion candidate having the minimum cost based on the TM cost. In addition, the new motion candidate may be added to the Nₜₕ motion candidate list, where N may be 1, 2, 3, etc. For example, if the current block is encoded in the merge mode and the motion candidate list is configured, the video signal processing device may determine whether to apply the LIC (or BCW, HPel, MHP, RRIBC) to the motion candidate having the minimum cost based on the TM cost. If the LIC is not applied to the motion candidate having the minimum cost, the new motion candidate may be configured to apply the LIC to the motion candidate having the minimum cost based on the TM cost and added to the first of the motion candidate list. In this case, the second movement candidate in the movement candidate list may be a movement candidate with the minimum cost based on the existing TM cost and a candidate to which the LIC is not applied. In other words, the motion candidate list may include two identical motion candidates, one of the two motion candidates may be configured not to apply the LIC, and the remaining one motion candidate may be configured to apply the LIC, and the motion candidate configured to apply the LIC may be located at the first of the motion candidate list. Accordingly, the video signal processing device may control whether to apply the LIC by using an index corresponding to the motion candidates in the motion candidate list. In this case, two identical motion candidates may be motion candidates with the minimum cost. In addition, the two identical motion candidates are not limited to the motion candidates with the minimum cost, and may be one of the motion candidates in the motion candidate list.

When the current block is encoded in a general merge mode, the above-described method may be applied to at least one of the cases when the TM is applied to the current block, when the DMVR is applied to the current block, when the GPM is applied to the current block, and when the MMVD is applied to the current block.

Extending the above method, when the video signal processing device configures the motion candidate list, the motion candidate list may be expanded by using at least one of whether to apply the TM, whether to apply the DMVR, and whether to apply the BDOF. For example, the video signal processing device may configure a new motion candidate to be applied to the motion candidate with the minimum cost based on the TM Cost and add the new motion candidate to the first of the motion candidate list.

In the disclosure, the meaning of being able to be used as a block vector candidate may be used identically to the meaning of being able to add the corresponding block vector to the block vector candidate list.

FIG. 63 is a flowchart illustrating a method for configuring a block vector candidate list for a current block according to an embodiment of the disclosure.

Referring to FIG. 63 below, a method for configuring a block vector candidate list for the current block described through FIGS. 1 to 62 is described.

Referring to FIG. 63, a decoding device (decoder) may configure a block vector candidate list for a current block (S6310).

The decoding device may restore the current block based on at least one block vector candidate included in the block vector candidate list (S6320).

The block vector candidate included in the block vector candidate list may be a block vector candidate of which the vertical or horizontal direction component is 0.

The decoding device may configure the vertical direction component of the block vector candidate based on the result of comparing the maximum value of the coding unit tree size for the current block with a first value when the horizontal direction component of the block vector candidate included in the block vector list is 0.

The vertical component of the block vector candidate may be configured to a second value when the maximum value of the coding unit tree size for the current block is equal to the first value. The vertical component of the block vector candidate may be configured to a third value when the maximum value of the coding unit tree size for the current block is not equal to the first value. In this case, the second value and the third value may be different values.

The second value may be -(256 * (L-1) + (PosY & 255)). In this case, the PosY may be the vertical direction component value of the block vector candidate, and the L may be 2.

The third value may be -(128 * (K-1) + (PosY & 127)). In this case, the PosY may be the vertical direction component value of the block vector candidate, and the K may be 3.

The encoding mode applied to the current block may be reconstruction-reordered IBC (RRIBC) mode.

The number of block vector candidates included in the block vector candidate list may be 2.

The first value may be the size of a pre-specified maximum coding unit tree.

The first value may be 256.

The methods described in the disclosure may be performed through a processor of a decoder or an encoder. In addition, the encoder may generate a bitstream that is decoded by a video signal processing method. In addition, the bitstream generated by the encoder may be stored in a computer-readable non-transitory storage medium (recording medium).

Although the disclosure is mainly described from a decoder perspective, the same operation may also be performed in an encoder. Although the term parsing in the disclosure has been described focusing on the process of obtaining information from a bitstream, it may be interpreted as configuring the corresponding information in the bitstream from the encoder side. Therefore, the term parsing is not limited to the decoder operation, but may be interpreted as the operation of configuring a bitstream in the encoder. In addition, such a bitstream may be stored and configured in a computer-readable recording medium.

The embodiments of the disclosure described above may be implemented through various means. For example, the embodiments of the disclosure may be implemented by hardware, firmware, software, or a combination thereof.

In the case of hardware implementation, the method according to embodiments of the disclosure may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

In the case of implementation by firmware or software, the method according to the embodiments of the disclosure may be implemented in the form of a module, procedure, or function that performs the functions or operations described above. The software code may be stored in a memory and may be driven by a processor. The memory may be located inside or outside the processor, and may exchange data with the processor by various means already known.

Some embodiments may also be implemented in the form of a recording medium including computer-executable instructions, such as a program module executed by a computer. The computer-readable medium may be any available medium that may be accessed by a computer and includes both volatile and nonvolatile media, separable and non-separable media. In addition, the computer-readable medium may also include both computer storage media and communication media. The computer storage medium includes both volatile and nonvolatile, removable and non-removable media implemented in any method or technology for storage of information, such as computer-readable instructions, data structures, program modules, or other data. The communication medium typically includes computer-readable instructions, data structures, or other data in a modulated data signal, such as program modules, or other transport mechanisms, and includes any information delivery media.

The above description of the disclosure is for illustrative purposes, and those skilled in the art will understand that it may be easily modified into other specific forms without changing the technical idea or essential features of the disclosure. Therefore, the embodiments described above should be interpreted as illustrative in all respects and not limiting. For example, each component described as a single type may be implemented in a distributed manner, and likewise, components described as distributed may be implemented in a combined form.

The scope of the disclosure is indicated by the claims described below rather than the detailed description above, and all changes or modifications derived from the meaning and scope of the claims and their equivalent concepts should be interpreted as being included in the scope of the disclosure.

## Claims

1. A video signal decoding device comprising a processor,
wherein the processor is configured to:
configure a block vector candidate list for a current block, and
reconstruct the current block based on at least one block vector candidate included in the block vector candidate list, and
wherein the block vector candidate included in the block vector candidate list is a block vector candidate of which the vertical or horizontal direction component is 0.

2. The decoding device of claim 1,
wherein the processor is configured to configure the vertical direction component of the block vector candidate based on the result of comparing the maximum value of the coding unit tree size for the current block with a first value in case that the horizontal direction component of the block vector candidate included in the block vector list is 0.

3. The decoding device of claim 2,
wherein the vertical component of the block vector candidate is configured to a second value in case that the maximum value of the coding unit tree size for the current block is equal to the first value,
wherein the vertical component of the block vector candidate is configured to a third value in case that the maximum value of the coding unit tree size for the current block is not equal to the first value, and
wherein the second value and the third value are different values.

4. The decoding device of claim 3,
wherein the second value is -(256 * (L-1) + (PosY & 255)), and
wherein the PosY is the vertical direction component value of the block vector candidate, and the L is 2.

5. The decoding device of claim 3,
wherein the third value is -(128 * (K-1) + (PosY & 127)), and
wherein the PosY is the vertical direction component value of the block vector candidate, and the K is 3.

6. The decoding device of claim 1,
wherein the encoding mode applied to the current block is reconstruction-reordered IBC (RRIBC) mode.

7. The decoding device of claim 1,
wherein the number of block vector candidates included in the block vector candidate list is 2.

8. The decoding device of claim 3,
wherein the first value is the size of a pre-specified maximum coding unit tree.

9. The decoding device of claim 3,
wherein the first value is 256.

10. A video signal encoding device comprising a processor,
wherein the processor is configured to obtain a bitstream decoded by a decoding method,
wherein the decoding method comprises:
configuring a block vector candidate list for a current block; and
reconstructing the current block based on at least one block vector candidate included in the block vector candidate list, and
wherein the block vector candidate included in the block vector candidate list is a block vector candidate of which the vertical or horizontal direction component is 0.

11. The encoding device of claim 10,
wherein the decoding method further comprises configuring the vertical direction component of the block vector candidate based on the result of comparing the maximum value of the coding unit tree size for the current block with a first value in case that the horizontal direction component of the block vector candidate included in the block vector list is 0.

12. The encoding device of claim 11,
wherein the vertical component of the block vector candidate is configured to a second value in case that the maximum value of the coding unit tree size for the current block is equal to the first value,
wherein the vertical component of the block vector candidate is configured to a third value in case that the maximum value of the coding unit tree size for the current block is not equal to the first value, and
wherein the second value and the third value are different values.

13. The encoding device of claim 12,
wherein the second value is -(256 * (L-1) + (PosY & 255)), and
wherein the PosY is the vertical direction component value of the block vector candidate, and the L is 2.

14. The encoding device of claim 12,
wherein the third value is -(128 * (K-1) + (PosY & 127)), and
wherein the PosY is the vertical direction component value of the block vector candidate, and the K is 3.

15. The encoding device of claim 10,
wherein the encoding mode applied to the current block is reconstruction-reordered IBC (RRIBC) mode.

16. The encoding device of claim 10,
wherein the number of block vector candidates included in the block vector candidate list is 2.

17. The encoding device of claim 12,
wherein the first value is the size of a pre-specified maximum coding unit tree.

18. The encoding device of claim 12,
wherein the first value is 256.

19. A computer-readable non-transitory storage medium storing a bitstream,
wherein the bitstream is decoded by a decoding method,
wherein the decoding method comprises:
configuring a block vector candidate list for a current block; and
reconstructing the current block based on at least one block vector candidate included in the block vector candidate list, and
wherein the block vector candidate included in the block vector candidate list is a block vector candidate of which the vertical or horizontal direction component is 0.

20. The computer-readable non-transitory storage medium of claim 19,
wherein the decoding method further comprises configuring the vertical direction component of the block vector candidate based on the result of comparing the maximum value of the coding unit tree size for the current block with a first value in case that the horizontal direction component of the block vector candidate included in the block vector list is 0.
